# EUROPEAN PATENT APPLICATION

(11) **EP 4 776 717 A1**
(43) Date of publication of application: **15.07.2026**
(21) Application number: 23951142.1
(22) Date of filing: 06.09.2023
(51) Int. Cl.: H04W 72/044

(54) **COMMUNICATION METHOD AND APPARATUS, AND DEVICE, STORAGE MEDIUM, CHIP, PRODUCT AND PROGRAM**

(71) Applicant: GUANGDONG OPPO MOBILE TELECOMMUNICATIONS CORP., LTD., Dongguan, Guangdong 523860 (CN)
(72) Inventor: SHI, Zhihua, Dongguan, Guangdong 523860 (CN); LIU, Zhe, Dongguan, Guangdong 523860 (CN)
(74) Representative: Taor, Simon Edward William
(86) International application number: PCT/CN2023/117261
(87) International publication number: WO 2025/050315

(57) **Abstract**

Provided are communication methods and apparatuses, and devices, a storage medium, a chip, a product and a program. The method includes: a terminal device receiving first configuration information which is transmitted through RRC signaling and indicates one or more resource sets; and the terminal device receiving first indication information which is included in an MAC CE or DCI, and indicates one or more sub-sets of a first resource set, each of the one or more sub-sets of the first resource set including one or more resources in the first resource set, and the first resource set being one resource set among the one or more resource sets.

## Description

### TECHNICAL FIELD

Embodiments of the present disclosure relate to the technical field of communication, and in particular to communication methods, apparatuses, devices, storage medium, chip, product, and program.

### BACKGROUND

In the related art, network devices indicate resources to terminal devices, so that the terminal devices may perform measurement based on the resources indicated by the network device, and feed back a measurement result to the network devices. However, the resources indicated by network devices to terminal devices in the related art are not flexible.

### SUMMARY

Embodiments of the present disclosure provide communication methods, apparatuses, devices, a storage medium, a chip, a product, and a program.

In a first aspect, an embodiment of the present disclosure provides a communication method, and the communication method includes following operations.

A terminal device receives first configuration information. The first configuration information is transmitted by radio resource control (RRC) signaling, and the first configuration information indicates one or more resource sets.

The terminal device receives first indication information. The first indication information is included in a medium access control control element (MAC CE) or downlink control information (DCI), the first indication information indicates one or more subsets of a first resource set, each of the one or more subsets of the first resource set including one or more resources in the first resource set. The first resource set belongs to one of the one or more resource sets.

In a second aspect, an embodiment of the present disclosure provides a communication method, and the communication method includes following operations.

A network device transmits first configuration information. The first configuration information is transmitted by RRC signaling, and the first configuration information indicates one or more resource sets.

The network device transmits first indication information. The first indication information is included in an MAC CE or DCI, and the first indication information indicates one or more subsets of a first resource set, each of the one or more subsets of the first resource set including one or more resources in the first resource set. The first resource set belongs to one of the one or more resource sets.

According to a third aspect, an embodiment of the present disclosure provides a terminal device which includes a communication unit.

The communication unit is configured to receive first configuration information. The first configuration information is transmitted by RRC signaling, and the first configuration information indicates one or more resource sets.

The communication unit is further configured to receive first indication information. The first indication information is included in an MAC CE or DCI, and the first indication information indicates one or more subsets of a first resource set, each of the one or more subsets of the first resource set including one or more resources in the first resource set. The first resource set belongs to one of the one or more resource sets.

In a fourth aspect, an embodiment of the present disclosure provides a network device which includes a communication unit.

The communication unit is configured to transmit first configuration information. The first configuration information is transmitted by RRC signaling, and the first configuration information indicates one or more resource sets.

The communication unit is further configured to transmit first indication information. The first indication information is included in an MAC CE or DCI, and the first indication information indicates one or more subsets of a first resource set, each of the one or more subsets of the first resource set including one or more resources in the first resource set. The first resource set belongs to one of the one or more resource sets.

According to a fifth aspect, an embodiment of the present disclosure provides a terminal device including: a processor and a memory.

The memory is configured to store a computer program.

The processor is configured to invoke and run the computer program stored in the memory to enable the terminal device to perform the method of the first aspect.

In a sixth aspect, an embodiment of the present disclosure provides a network device including: a processor and a memory.

The memory is configured to store a computer program.

The processor is configured to invoke and run the computer program stored in the memory to enable the network device to perform the method of the second aspect.

In a seventh aspect, an embodiment of the present disclosure provides a computer storage medium having stored one or more programs that can be executed by one or more processors to implement the method of the first aspect or the second aspect.

In an eighth aspect, an embodiment of the present disclosure provides a chip including a processor for calling and running a computer program from a memory to implement the method of the first aspect or the second aspect.

In a ninth aspect, an embodiment of the present disclosure provides a computer program product including a computer storage medium which has stored a computer program including instructions executable by one or more processors that, when executed by the one or more processors, implement the method of the first or second aspect.

In a tenth aspect, an embodiment of the present disclosure provides a computer program that causes a computer to perform the method of the first aspect or the second aspect.

In the embodiments of the present disclosure, a terminal device receives first configuration information. The first configuration information is transmitted by RRC signaling, and the first configuration information indicates one or more resource sets. The terminal device receives first indication information. The first indication information is included in an MAC CE or DCI, and the first indication information indicates one or more subsets of a first resource set, each of the one or more subsets of the first resource set including one or more resources in the first resource set. The first resource set belongs to one of the one or more resource sets. In this way, the terminal device can receive one or more sub-sets of the first resource set indicated by the network device, so that the terminal device can perform measurements based on the one or more sub-sets of the first resource set, and thus the resources indicated by the network device to the terminal device are flexible.

### BRIEF DESCRIPTION OF THE DRAWINGS

The accompanying drawings described herein are intended to provide a further understanding of the present disclosure and constitute a part of the present disclosure. The schematic embodiments of the present disclosure and the description thereof are intended to explain the present disclosure and do not constitute an undue limitation of the present disclosure. In the drawings:
FIG. 1 is a schematic diagram of an application scenario of an embodiment of the present disclosure.
FIG. 2 is a schematic diagram of a configuration method for a TCI state of a PDSCH according to an embodiment of the present disclosure.
FIG. 3 is a schematic flow diagram of a communication method according to an embodiment of the present disclosure.
FIG. 4 is a schematic flow diagram of another communication method provided by an embodiment of the present disclosure;
FIG. 5 is a schematic flow diagram of another communication method provided by an embodiment of the present disclosure;
FIG. 6 is a schematic flow diagram of another communication method according to an embodiment of the present disclosure.
FIG. 7 is a schematic flow diagram of a communication method according to another embodiment of the present disclosure.
FIG. 8 is a schematic diagram of the structure and composition of a terminal device according to the embodiment of the present disclosure.
FIG. 9 is a schematic diagram of the structure and composition of a network device according to an embodiment of the present disclosure.
FIG. 10 is a schematic structural diagram of a communication device according to an embodiment of the present disclosure.
FIG. 11 is a schematic structural diagram of a chip according to an embodiment of the present disclosure.

### DETAILED DESCRIPTION

The technical solution in the embodiments of the present disclosure will be described hereinafter with reference to the drawings in the embodiments of the present disclosure, and it is obvious that the described embodiments are part of the embodiments of the present disclosure, but not all the embodiments. Based on the embodiments in the present disclosure, all other embodiments obtained by those skilled in the art without creative work fall within the scope of protection of the present disclosure.

The solution described in the embodiments of the present disclosure may be arbitrarily combined as long as there is no conflict. In the description of the present disclosure, "a plurality of / multiple" means two or more than two unless otherwise explicitly and specifically defined.

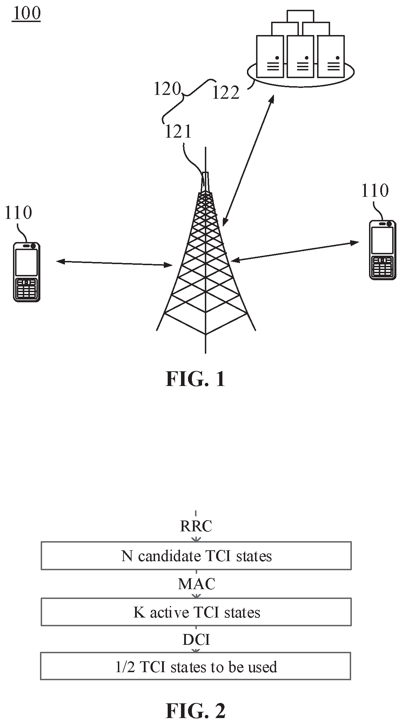

FIG. 1 is a schematic diagram of an application scenario according to an embodiment of the present disclosure. As shown in FIG. 1, the communication system 100 may include a terminal device 110 and a network device 120. The network device 120 may communicate with the terminal device 110 through an air interface. Multi-service transmission is supported between the terminal device 110 and the network device 120.

It should be understood that the embodiments of the present disclosure are merely illustrated with reference to the communication system 100, but the embodiments of the present disclosure are not limited thereto. That is, the technical solution of the embodiments of the present disclosure can be applied to various communication systems, such as a Global System of Mobile communication (GSM) system, a Code Division Multiple Access (CDMA) system, a Wideband Code Division Multiple Access (WCDMA) system, a General Packet Radio Service (GPRS), a Long Term Evolution (LTE) system, an Advanced long term evolution (LTE-A) system, a New Radio (NR) system, an evolved NR system, an LTE-based access to unlicensed spectrum (LTE-U) system, an NR-based access to unlicensed spectrum (NR-U) system, a Universal Mobile Telecommunication System (UMTS), Wireless Local Area Networks (WLAN), Wireless Fidelity (WiFi), LTE Time Division Duplex (TDD), a Universal Mobile Telecommunication System (UMTS), an Internet of Things (IoT) system, a Narrow Band Internet of Things (NB-IoT) system, an enhanced Machine-Type Communications (eMTC) system, or a future communication system (e.g., 6G, 7G communication systems), etc.

The network device 120 in the embodiments of the present disclosure may include an access network device 121 and/or a core network device 122. The access network device may provide communication coverage for a particular geographic area and may communicate with a terminal device 110 (e.g., a UE) located within that coverage area.

The terminal device in any embodiment of the present disclosure may be a device having a wireless communication function, which may be deployed on land, including indoor or outdoor, handheld or vehicle-mounted, may also be deployed on the water (such as ships, etc.), and may also be deployed in the air (e.g. on aircraft, balloons and satellites, etc.). The terminal device in any embodiment of the present disclosure may be referred to as a User Equipment (UE), a Mobile Station (MS), a Mobile Terminal (MT), a user unit, a user station, a mobile station, a remote station, a remote terminal, a mobile device, a user terminal, a terminal, a wireless communication device, a user agent, or a user device. The terminal device in any embodiment of the present disclosure may include one or a combination of at least two of the followings: an Internet of Things (IoT) device, a satellite terminal, a Wireless Local Loop (WLL) station, a Personal Digital Assistant (PDA), a handheld device with a wireless communication function, a computing device or other processing device connected to a wireless modem, a server, a mobile phone, a tablet computer (Pad), a computer with a wireless transceiver function, a handheld computer, a desktop computer, a Personal Digital Assistant, a learning machine, a point reader, a translation pen, a portable media player, a smart speaker, a navigation device, a wearable device such as a smart watch, a smart glasses and a smart necklace, a pedometer, a digital television (TV), a Virtual Reality (VR) terminal device, an Augmented Reality (AR) terminal device, a wireless terminal in industrial control, a wireless terminal in self driving, a wireless terminal in remote medical surgery, a wireless terminal in smart grid, a wireless terminal in transportation safety, a wireless terminal in smart city, a wireless terminal in smart home, a vehicle, a vehicle-mounted device, a vehicle-mounted module, a wireless modem, a handheld device, a Customer Premise Equipment (CPE) in a vehicle networking system, a smart home appliance, and the like.

In any embodiment of the present disclosure, the UE, the terminal device, and the terminal are to be understood as the same concept, and may all refer to terminal devices, for example. It should be noted that, in any embodiment of the present disclosure, the network device and the network are to be understood as the same concept, and may both refer to network devices, for example. For example, network configuration may be understood as network device configuration, network indication may be understood as network device indication, network transmission and/or reception may be understood as network device transmission and/or reception, network determination may be understood as network device determination, and the like, which are not enumerated one by one here.

Optionally, the terminal device may be any terminal device, including but not limited to a terminal device that adopts a wired or wireless connection with a network device or other terminal devices.

Optionally, the terminal device may be used for Device to Device (D2D) communication.

In any embodiment of that present disclosure, the access network device may include one or a combination of at least two of the followings: an evolutional base station (eNB or eNodeB) in a Long Term Evolution (LTE) system, a Next Generation Radio Access Network (NG RAN) device, a base station (gNB) in an NR system, a small station, a micro station, a wireless controller in Cloud Radio Access Network (CRAN), a wireless fidelity (Wi-Fi) access point, a transmission reception point (TRP), a relay station, an access point, a vehicle device, a wearable device, a hub, a switch, a bridge, a router, a network device in future evolved Public Land Mobile Network (PLMN), etc.

In any embodiment of that present disclosure, the core network device may be a 5th Generation (5G) core network (5GC) device, and the core network device may include one or a combination of at least two of the followings: a Sensing Function (SF), an Access and Mobility Management Function (AMF), an Authentication Server Function (AUSF), a User Plane Function (UPF), a Session Management Function (SMF), a Location Management Function (LMF), and a Policy Control Function (PCF). In other embodiments, the core network device may also be an Evolved Packet Core (EPC) device of LTE network, for example, a Session Management Function+Core Packet Gateway (SMF + PGW-C) device. It should be understood that the SMF+PGW-C can simultaneously implement functions that can be implemented by the SMF and PGW-C. In the process of network evolution, the core network device may be called by other names, or may form a new network entity by dividing the functions of the core network, which is not limited by the embodiments of the present disclosure.

Communication may also be achieved by establishing a connection between various functional units in the communication system through a next generation (NG) network interface.

For example, the terminal device establishes an air interface connection with an access network device through an NR interface for transmitting user-plane data and control-plane signaling. The terminal device may establish a control-plane signaling connection with an AMF through NG interface 1 (N1 for short); the access network device, such as a next generation radio access base station (gNB), may establish a user-plane data connection with a UPF through NG interface 3 (N3 for short); the access network device may establish a control-plane signaling connection with the AMF through NG interface 2 (N2 for short); the UPF may establish a control-plane signaling connection with an SMF through NG interface 4 (referred to as N4 for short); the UPF may interact user-plane data with a data network through NG interface 6 (N6 for short); the AMF may establish a control-plane signaling connection with the SMF through NG interface 11 (N11 for short); and the SMF may establish a control-plane signaling connection with a PCF through NG interface 7 (referred to as N7 for short).

FIG. 1 exemplarily illustrates one base station, one core network device, and two terminal devices. Optionally, the wireless communication system 100 may include a plurality of base station devices, and another number of terminal devices may be included within the coverage range of each base station, which is not limited in the embodiments of the present disclosure.

It should be noted that FIG. 1 only illustrates a system applicable to the present disclosure in the form of an example, and of course, the methods shown in the embodiments of the present disclosure can also be applied to other systems. Further, the terms "system" and "network" are often used interchangeably. The term "and/or" is only an association relationship describing associated objects, and means that there may be three relationships, for example, A and/or B, which may represent that A alone exists, A and B simultaneously exist, and B alone exists. In addition, the character "/" generally indicates that the related objects before and after it are in an "or" relationship. It should also be understood that the "indicate" mentioned in the embodiments of the present disclosure may be a direct indication, an indirect indication, or an associated relationship. For example, A indicates B, which may mean that A directly indicates B, for example, B can be acquired by A; may also mean that A indicates B indirectly, for example A indicates C, and B can be acquired through C; and may also represent there is an association relationship between A and B. It should also be understood that "correspond" mentioned in the embodiments of the present disclosure may indicate that there is a direct correspondence or indirect correspondence between the two, may indicate that there is a correlation relationship between the two, or may indicate a relationship between indicating and being indicated, configuring and being configured, or the like. It should also be understood that the term "predefined", "agreed", "predetermined" or "predefined rule" mentioned in the embodiments of the present disclosure may be implemented by storing corresponding codes, tables, or other methods that can be used to indicate relevant information in advance in devices (including, for example, terminal devices and network devices), and the present disclosure does not limit specific implementations thereof. For example, "predefined" may refer to defined in a protocol. It should also be understood that in the embodiments of the present disclosure, the "protocol" may refer to a standard protocol in the field of communication, and may include, for example, an LTE protocol, an NR protocol, and related protocols applied to future communication systems, to which no limit is set in the present disclosure.

The design objectives of the NR/5G system include large bandwidth communication in high bands (e.g., bands above 6 GHz). When the operating frequency becomes higher, the path loss in the transmission process will increase, thus affecting the coverage ability of the high-frequency system. In order to effectively ensure the coverage of the high-band NR system, an effective technical solution is to use multiple beam or hybrid beam technology based on massive antenna arrays or Massive Multiple-Input Multiple-Output (Massive MIMO) to improve the coverage capability.

In a typical 2/3/4G system, a cell (sector) uses a wide beam to cover the entire cell. Therefore, at each time point, the UE within the cell coverage has the opportunity to obtain the transmission resources allocated by the system.

The Multi-beam system of NR/5G covers the whole cell through different beams, that is, each beam covers a small range, and achieves the effect of multiple beams covering the whole cell by sweeping in time. At present, different beams are identified by different signals carried on the beams. Optionally, different SS blocks (or also referred to as Synchronization Signal/Physical Broadcast Channel Block (SS/PBCH block)) are transmitted on different beams, and a UE may distinguish different beams based on different SS blocks and/or SS block resources. Optionally, different Channel State Information Reference Signal (CSI-RS) signals are transmitted on different beams, and a UE may identify different beams based on CSI-RS signals/CSI-RS resources.

In any embodiment of the present disclosure, the SS/PBCH block may be referred to as a Synchronization Signal Block (SSB).

A signal in any one or some embodiments of the present disclosure corresponds to a certain physical beam/beams.

In a multi-beam system, a physical downlink control channel (PDCCH) and a physical downlink shared channel (PDSCH) may be transmitted through different downlink transmission beams.

Optionally, for systems below the 6G band, there is generally no analog beam on a UE side, so an omni-directional antenna (or an antenna close to omni-directional) is used to receive signals transmitted by different downlink transmission beams of a base station.

Optionally, in a millimeter wave system, there may be an analog beam on a UE side, and it is necessary to use a corresponding downlink reception beam to receive the signal transmitted by the corresponding downlink reception beam. In this case, a corresponding beam indication is required to assist the UE in determining transmission beam related information from a network side or corresponding reception beam related information on the UE side.

In the NR protocol, a beam indication does not directly indicate the beam itself, but indicates through quasi-co-location (QCL) (e.g., 'QCL-TypeD' type) between signals. It is also based on a QCL assumption to determine on a UE side to receive a corresponding channel/signal. The QCL assumption is indicated through a Transmission Configuration Indication (TCI) state (TCI-state), i.e., the network configures and/or indicates the corresponding TCI state through relevant signaling (Radio Resource Control (RRC), and/or Medium Access Control Element (MAC CE), and/or Downlink Control Information (DCI)).

Future communication systems (e.g., 6G wireless communication systems, new generation wifi) and the like may also employ multi-beam technology.

In order to perform good beam management (for example, the network selects a better downlink transmission beam (DL Tx beam) to transmit signals to a UE), the communication system needs to know the corresponding communication quality of the beam, which involves how to measure and report the beam (or the reference signal). In an actual system, the network may not directly instruct the UE to measure a certain beam, but may use the beam to transmit a Reference signal (RS) to cause the UE to measure the RS, and the measurement result corresponding to the RS may reflect the transmission quality corresponding to the beam. Therefore, from the perspective of interaction between the network and the terminal, the UE may only know more RSs for measurement, but does not know whether the RSs are associated with beams, and if associated with beams, the UE does not know which beam the RSs are associated with.

In some embodiments, measurement of a RS may be not only to assist in beam management, but also to measure current channel information to assist in MIMO transmission.

In the 5G system, the basic flow of measurement and reporting is as follows: the network transmits configuration information to a UE, and the configuration information indicates one or more RSs and also indicates some configurations related to measurement; the UE measures a corresponding reference signal according to the received configuration information to obtain a measurement result that needs to be reported (the measurement result may not need to be reported); if it is necessary to report the measurement result, the UE reports the corresponding measurement result through an uplink channel.

In some embodiments, the transmission of an RS may take different forms, such as Aperiodic (AP), semi-persistent (SP) and Periodic (P) transmission. In some embodiments, reporting of a measurement result supports a variety of mechanisms, including aperiodic (AP), semi-persistent (SP), and periodic (P) reporting.

The TCI state is described below:
When a terminal device may perform signal reception, in order to improve the reception performance, a reception algorithm may be improved by utilizing the characteristics of the transmission environment corresponding to the data transmission. For example, the statistical characteristics of the channel may be utilized to optimize the design and parameters of a channel estimator. In the NR system, these characteristics corresponding to data transmission are represented by QCL state (QCL-Info).

If the downlink transmission comes from different TRPs/panels/beams, the characteristics of the transmission environment corresponding to the data transmission may also change. Therefore, in the NR system, when the network transmits a downlink control channel or a data channel, the corresponding QCL state information may be indicated to the terminal device through the TCI state.

A TCI state may include the following configurations:
a TCI state ID, for identifying a TCI state;
QCL information 1; and
QCL information 2 (optional).

One QCL information further includes the following information:
a QCL type configuration, which may be one of QCL type A, QCL type B, QCL type C, and QCL type D; and
a QCL reference signal configuration, which includes a cell ID in which a reference signal is located, a Band Width Part (BWP) ID, and an identifier of the reference signal (which may be a CSI-RS resource ID or an SSB index).

If both QCL information 1 and QCL information 2 are configured, then the QCL type of one or more QCL information is one of typeA, typeB and typeC, and the QCL type of the other QCL information (if configured) is QCL type D.

Different QCL type configurations are defined as follows:
'QCL-TypeA': {Doppler shift, Doppler spread, average delay, delay spread};
'QCL-TypeB': {Doppler shift, Doppler spread};
'QCL-TypeC': {Doppler shift, average delay}; and
'QCL-TypeD': {Spatial Rx parameter}.

In an NR system, the network side may indicate a TCI state for a downlink signal or a downlink channel.

If the network side configures a QCL reference signal of a target downlink channel or a target downlink signal as a reference SSB or a reference CSI-RS resource through a TCI state, and a QCL type is configured as typeA, typeB or typeC, then a terminal device may assume that the large-scale parameters of the target downlink signal and the reference SSB or the reference CSI-RS resource are the same, and the large-scale parameters are determined through the QCL type configuration.

Similarly, if the network side configures a QCL reference signal of a target downlink channel or a downlink signal as a reference SSB or a reference CSI-RS resource through a TCI state, and a QCL type is configured as typeD, the terminal device may receive the target downlink signal using the same reception beam (i.e., the Spatial Rx parameter) as the reception beam of the reference SSB or the reference CSI-RS resource. Typically, the target downlink channel (or downlink signal) and its reference SSB or reference CSI-RS resource are transmitted on the network side by the same TRP or the same panel or the same beam. If the TRPs or transmission panels or transmission beams of the two downlink signals or downlink channels are different, different TCI states are usually configured.

For the downlink control channel, the TCI state of the corresponding CORESET may be indicated through RRC signaling or RRC signaling+Medium Access Control (MAC) signaling.

For the downlink data channel, the set of available TCI states is indicated through RRC signaling, and some of the TCI states are activated by MAC layer signaling, and finally one or two TCI states among the active TCI states are indicated through the TCI state indication field in DCI for the PDSCH scheduled by the DCI. The case of 2 TCI states is mainly for a scenario in which multiple TRPs are similar.

FIG. 2 is a schematic diagram of a configuration method for a TCI state of a PDSCH according to an embodiment of the present disclosure. As shown in FIG. 2, N candidate TCI states may be determined based on RRC signaling. For example, the RRC signaling may indicate N candidate TCI states. K active TCI states may be determined from the N candidate TCI states based on MAC signaling. One or two TCI states to be used may be determined from the K active TCI states based on DCI signaling.

A Unified TCI state is described below.

The indication mechanism of TCI state is introduced in R15, which is only applicable to downlink channels and signals, and has many limitations in application in NR systems. In order to provide a more unified uplink and downlink beam management mechanism for NR systems, based on the design of Rel.15/16 TCI state, 3GPP Rel.17 proposes the concept of unified TCI state, which adds important new functions. Examples are as follows:
Two modes of unified TCI state are designed:
Mode 1: there is one type of TCI state, which may be applied to uplink and downlink channels and signals; this type of TCI state may be called as a joint TCI state; and
Mode 2: there are two types of TCI states, wherein the DL TCI state is only applicable to downlink channels and signals, and the UL TCI state is only applicable to uplink channels and signals.

Downlink channels (partial PDCCH, PDSCH) and signals (aperiodic CSI-RS) use the same downlink transmit indication beam, adopting a DL TCI state or a joint TCI state.

Uplink channels (PUCCH, PUSCH) and signals (SRS) use the same uplink transmit beam, adopting a UL TCI state or a joint TCI state.

The unified TCI state may be dynamically updated and indicated using MAC CE and/or DCI.

The unified TCI state is applicable to carrier aggregation scenarios, and the beam indication on a single CC may be applicable to multiple different CCs.

An uplink beam indication may be given together with an uplink power control parameter via a UL TCI state or a joint TCI state.

The unified TCI state supports the inter-cell beam management functionality.

The CORESET on each CC may be roughly classified into four types in the discussion of 3GPP:
CORESET A: it is only associated with the terminal device-specific search space, and thus can be regarded as the terminal device-specific downlink control channel resource, and it shall follow the indicated unified TCI state(s);
CORESET B: it is only associated with the cell-common search space, and whether it can follow the unified TCI state(s) indicated by the Network (NW) depends on the RRC configuration of the NW;
CORESET C: it is only associated with the terminal device-specific search space and the cell-common search space, and whether it can follow the unified TCI state(s) indicated by the NW depends on the RRC configuration of the NW; and
CORESET 0: it is necessarily associated with the cell-common search space, or may be associated with the terminal device-specific search space simultaneously, and whether it can follow the unified TCI state(s) indicated by the NW depends on the RRC configuration of the NW.

The TCI state in the embodiments of the present disclosure includes any of the aforementioned TCI states if the TCI state is not explicitly specified, for example, the TCI state may be a joint TCI state, a separate TCI state, a DL TCI state, a UL TCI state, or may also be a combination thereof (i.e. including multiple different types of TCI states, such as one or more of the DL TCI state, UL TCI state, joint TCI state, and separate TCI state), or may be the TCI state in R15/R16.

In the related art, in the measurement/reporting mechanism, the network configures a corresponding RS (reference signal) set to be measured through RRC signaling. For periodic reporting or semi-persistent reporting, a UE performs measurement for the RS set configured by the RRC; and for aperiodic reporting, a UE measures one or some of the one or more RS sets configured by the RRC according to the active state (trigger state) indicated by DCI. As can be seen from the above, the RS sets measured by the UE are all configured through RRC. If a set of RS that the system expects the UE to measure is not currently included in the set of RS already configured through RRC, the network needs to configure the set of RS through RRC signaling.

In practical systems, in some cases, the network expects the UE to dynamically measure certain RSs. For example, in a multi-beam system (assuming that there are 16 analog beams), the network infers based on certain information or methods that the channel quality (or link quality) of beams numbered 0-3 is most likely the best for a specific UE, and the channel quality of other beams is not good for the UE, then the network may only instruct the UE to measure the beams numbered 0-3. Then, as the UE moves, at the next moment, the network infers that the channel quality (or link quality) of the beams numbered 2-5 is most likely the best for a certain UE, and the channel quality of other beams is not good for the UE, then the network may only instruct the UE to measure the beams numbered 2-5. In this scenario, it is necessary to flexibly instruct the UE to measure different signals.

If the mechanisms of the related art are employed, there may be the following processing methods.

In some embodiments, various RS sets composed of different RSs are all configured in advance through RRC, and then aperiodic reporting is triggered through DCI, thereby realizing measurement and reporting of different RS sets. This method has many disadvantages, such as: 1. the overhead of RRC signaling is large, and the number of RS sets that the UE needs to process is large, which increases the complexity of the UE; and 2. more bits are needed in DCI to indicate different RS sets, which leads to an increase in DCI size and affects the coverage of the control channel.

In some embodiments, the currently needed RS set is configured through RRC. This method also has many disadvantages, such as: 1. frequent RRC signaling transmission leads to a large overhead of total RRC signaling; 2. the large delay caused by RRC signaling configuration results in the network being unable to enable the UE to quickly measure a certain RS , which affects the overall system performance.

In the above cases, the network may have a number of different ways to speculate which beams have better channel quality for a certain UE, for example:

In some embodiments, the network makes a prediction based on the information reported by a UE and/or information obtained through other means (for example, measurement results obtained by the network via measuring signals transmitted by the UE or uplink transmissions) using an MAChine Learning (ML) method, artificial intelligence (AI) method, or a statistical method. Deep learning is commonly used in the AI method.

In some embodiments, a UE uses machine learning (ML) methods, or Artificial Intelligence (AI) methods, or statistical methods to predict beams that may be the best for itself based on its own measurements, and then reports the prediction results to the network.

This way of utilizing AI/ML techniques to assist in beam management may be collectively referred to as AI-based beam management. Whether or not AI/ML technology is used or which AI/ML technology is used may be invisible from the perspective of the network and the terminal, that is, one party (e.g., a UE or network) may not know which AI/ML technology is adopted by the other party (e.g., the network or UE). In addition to using AI/ML technology, the network or UE may also use non-AI/ML technology (non-AI/ML) to realize similar functions or achieve similar effects.

The present disclosure introduces more flexible measurement and/or reporting mechanisms. According to the above requirements, a specific implementation scheme is provided.

In order to facilitate understanding of the technical solution of the embodiments of the present disclosure, the technical solution of the present disclosure will be described in detail below with reference to specific examples. The solution in any one or more of the above embodiments may be arbitrarily combined with the technical solution of the embodiments of the present disclosure as optional solutions, and all of them belong to the scope of protection of the embodiments of the present disclosure. Embodiments of the present disclosure include at least some of the following contents.

An embodiment of the present disclosure provides a communication method which includes: a terminal device receives first configuration information, the first configuration information indicating one or more resource sets.

Optionally, the communication method may further include: the terminal device receives first indication information, the first indication information indicating one or more subsets of a first resource set, each of the one or more subsets of the first resource set including one or more resources in the first resource set, and the first resource set belonging to one of the one or more resource sets.

Optionally, the first indication information may be included in an MAC CE or DCI.

Optionally, when the first indication information indicates a subset of the first resource set, the subset of the first resource set is a first subset.

Optionally, the communication method may further include: the terminal device receives second indication information, the second indication information indicating the first subset of the first resource set, and the first subset belonging to one or more subsets of the first resource set.

Optionally, the second indication information may be included in DCI.

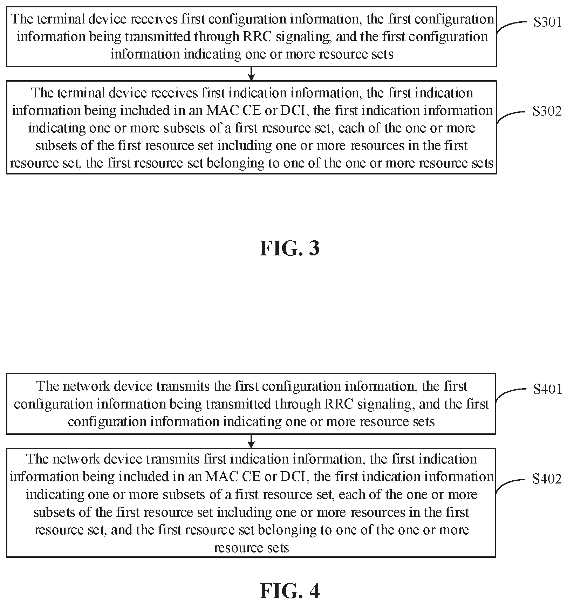

FIG. 3 is a schematic flow diagram of a communication method according to an embodiment of the present disclosure. As shown in FIG. 3, the method is applied to a terminal device, and the method includes:
S301: The terminal device receives first configuration information, the first configuration information being transmitted through RRC signaling, and the first configuration information indicating one or more resource sets; and
S302: The terminal device receives first indication information, the first indication information being included in an MAC CE or DCI, the first indication information indicating one or more subsets of a first resource set, each of the one or more subsets of the first resource set including one or more resources in the first resource set, the first resource set belonging to one of the one or more resource sets.

For example, for an NR system, one resource set may be configured via RRC signaling using a non-zero-power-CSI-RS-ResourceSet (NZP-CSI-RS-ResourceSet), and the resources may be indicated via RRC signaling using a non-zero-power-CSI-RS-Resource (NZP-CSI-RS-Resource).

Note that, in the conventional method, a terminal device may perform measurement and/or reporting based on a corresponding resource set according to configuration information and/or indication information (for example, RRC or RRC + DCI) of a network device. In this solution, on such a basis, the terminal device may further perform measurement and/or reporting based on one or more corresponding sub-sets in the corresponding resource set according to the configuration information and/or indication information of the network device.

Optionally, the first indication information may indicate activation of one or more subsets of the first resource set. Optionally, the first indication information may indicate deactivation of one or more subsets of the first resource set.

Optionally, the activated one or more subsets of the first resource set may be used for measurement and/or reporting by the terminal device. For example, if the resources in the first resource set include resources 0 to 4, and the resources in the activated one or more subsets of the first resource set include resources 0, resources 1, and resources 2, then the terminal device may perform measurement and/or reporting at resources 0, resources 1, and resources 2. For another example, if the activated one or more subsets of the first resource set include the first subset, then the terminal device may perform measurement and/or reporting at the first subset. For another example, if the activated one or more subsets of the first resource set include the first subset, a fourth subset, and a fifth subset, then the terminal device may perform measurement and/or reporting at the first subset, the fourth subset, and the fifth subset.

Optionally, resources and/or subsets other than the deactivated one or more subsets of the first resource set may be used for measurement and/or reporting by the terminal device. For example, if the resources in the first resource set include resources 0 to 4, and the resources of the deactivated one or more subsets of the first resource set include resources 2, 3, and 4, then the terminal device may perform measurement and/or reporting at resource 0 and resource 1. For another example, if the first resource set includes a first subset, a fourth subset, and a fifth subset, and the deactivated one or more subsets of the first resource set includes the fourth subset and the fifth subset, then the terminal device may perform measurement and/or reporting at the first subset.

In the embodiment of the present disclosure, the terminal device receives first configuration information which is transmitted by RRC signaling and indicates one or more resource sets; the terminal device receives first indication information which is included in an MAC CE or DCI and indicates one or more subsets of a first resource set, each of the one or more subsets of the first resource set including one or more resources in the first resource set, and the first resource set belonging to one of the one or more resource sets. In this way, the terminal device can receive one or more sub-sets of the first resource set indicated by the network device, so that the terminal device can perform measurements based on the one or more sub-sets of the first resource set, and thus the resources indicated by the network device to the terminal device are flexible.

FIG. 4 is a schematic flow diagram of another communication method provided by an embodiment of the present disclosure. As shown in FIG. 4, the method is applied to a network device, and the method includes:
S401: The network device transmits the first configuration information, the first configuration information being transmitted through RRC signaling, and the first configuration information indicating one or more resource sets; and
S402: The network device transmits first indication information, the first indication information being included in an MAC CE or DCI, the first indication information indicating one or more subsets of a first resource set, each of the one or more subsets of the first resource set including one or more resources in the first resource set, and the first resource set belonging to one of the one or more resource sets.

Optionally, in any embodiment of the present disclosure, one or more resource sets may belong to one or more of the followings: a first set, a second set, and a third set. For example, one or more resource sets belong to the first set. For example, one or more resource sets belong to the second set. For example, one or more resource sets belong to the third set. For example, one or more resource sets belong to the first set and the second set. For example, one or more resource sets belong to the first set and the third set. For example, one or more resource sets belong to the second set and the third set. For example, one or more resource sets belong to the first set, the second set, and the third set.

Optionally, the first configuration information indicates the first set. Optionally, the first configuration information indicates the second set. Optionally, the first configuration information indicates the third set. Optionally, the first configuration information indicates the first set and the second set. Optionally, the first configuration information indicates the first set and the third set. Optionally, the first configuration information indicates the second set and the third set. Optionally, the first configuration information indicates the first set, the second set, and the third set.

Optionally, one or more resource sets in the first set may be used for signal measurement. Optionally, one or more resource sets in the second set may be used for interference measurement. Optionally, one or more resource sets in the third set may be used for interference measurement.

Optionally, the resource set in the first set and/or the resource set in the second set may be referred to as a Signal Resource Set or a Reference signal resource set. Optionally, the resource set in the first set and/or the resource set in the second set are/is different from the resource set in the third set.

Optionally, the first resource set in the present disclosure belongs to one of the one or more resource sets in the first set, or the first resource set belongs to one of the one or more resource sets in the second set, or the first resource set belongs to one of the one or more resource sets in the third set. Optionally, the second resource set in the present disclosure belongs to one of the one or more resource sets in the first set, or the second resource set belongs to one of the one or more resource sets in the second set, or the second resource set belongs to one of the one or more resource sets in the third set. Optionally, the third resource set in the present disclosure belongs to one resource set among the one or more resource sets in the first set, or the third resource set belongs to one resource set among the one or more resource sets in the second set, or the third resource set belongs to one of the one or more resource sets in the third set.

For example, the first resource set belongs to one of one or more resource sets in the first set, and/or the second resource set belongs to one of the one or more resource sets in the second set, and/or the third resource set belongs to one of the one or more resource sets in the third set. For another example, the first resource set belongs to one of one or more resource sets in the first set, and/or the second resource set belongs to one of the one or more resource sets in the first set, and/or the third resource set belongs to one of the one or more resource sets in the first set. For another example, the first resource set belongs to one of one or more resource sets in the first set, and/or the second resource set belongs to one of the one or more resource sets in the first set, and/or the third resource set belongs to one of the one or more resource sets in the second set. Note that the present disclosure does not limit the set to which one or more of the first resource set, the second resource set, and the third resource set belong, and one or more of the first resource set, the second resource set, and the third resource set may be one of the one or more resource sets in any of the sets listed above.

In some embodiments, the first indication information may include one or more of the followings: first information, second information, and third information.

In some embodiments, on the terminal device side, the method may further include: the terminal device receives one or more of the followings: first information, second information, and third information.

In some embodiments, on the network device side, the method may further include: the network device transmits one or more of the followings: first information, second information, third information.

Optionally, the first information indicates a first subset of the first resource set, the first subset including one or more resources in the first resource set. Optionally, the second information indicates a second subset of the second resource set, the second subset including one or more resources in the second resource set. Optionally, the third information indicates a third subset of the third resource set, the third subset including one or more resources in the third resource set.

Optionally, the network device may transmit the first information, and the terminal device may receive the first information. Optionally, the network device may transmit the second information and the terminal device may receive the second information. Optionally, the network device may transmit the third information, and the terminal device may receive the third information. Optionally, the network device may transmit the first information and the second information, and the terminal device may receive the first information and the second information. Optionally, the network device may transmit the first information and the third information, and the terminal device may receive the first information and the third information. Optionally, the network device may transmit the second information and the third information, and the terminal device may receive the second information and the third information. Optionally, the network device may transmit the first information, the second information, and the third information, and the terminal device may receive the first information, the second information, and the third information.

Optionally, the first information and the second information are the same indication information (in any embodiment of the present disclosure, the same indication information may also be referred to as the same information). Optionally, the first information and the third information are the same indication information. Optionally, the second information and the third information are the same indication information. Optionally, the first information, the second information, and the third information are the same indication information. Optionally, the first information and the second information are different indication information (in any embodiment of the present disclosure, different indication information may also be referred to as different information). Optionally, the first information and the third information are different indication information. Optionally, the second information and the third information are different indication information. Optionally, the first information, the second information, and the third information are different indication information.

Optionally, in any embodiment of the present disclosure, the first subset may include one or more first subsets, or the first subset may be one or more first subsets, or the first subset may be understood as one or more first subsets. Optionally, in any embodiment of the present disclosure, the second subset may include one or more second subsets, or the second subset may be one or more second subsets, or the second subset may be understood as one or more second subsets. Optionally, in any embodiment of the present disclosure, the third subset may include one or more third subsets, or the third subset may be one or more third subsets, or the third subset may be understood as one or more third subsets. Optionally, in any embodiment of the present disclosure, resources in multiple first subsets corresponding to the same first resource set may be different or partially overlapping. Optionally, in any embodiment of the present disclosure, resources in multiple second subsets corresponding to the same second resource set may be different or partially overlapping. Optionally, in any embodiment of the present disclosure, resources in multiple third subsets corresponding to the same third resource set may be different or partially overlapping.

Optionally, the first subset, the second subset and the third subset in the embodiments of the present disclosure are only for convenience of description, and in some embodiments, the first subset, the second subset and the third subset may be not explicitly defined. For example, the first information indicates a first subset of the first resource set and the first subset includes one or more resources in the first resource set, which may be replaced by: the first information indicates one or more resources in the first resource set. For convenience of description, one or more resources in the first resource set are described as the first subset. For example, the second information indicates a second subset of the second resource set and the second subset includes one or more resources in the second resource set, which may be replaced by: the second information indicates one or more resources in the second resource set. For convenience of description, one or more resources in the second resource set are described as the second subset. For example, the third information indicates a third subset of the third resource set and the third subset includes one or more resources in the third resource set, which may be replaced by: the third information indicates one or more resources in the third resource set. For convenience of description, one or more resources in the third resource set are described as the third subset.

Optionally, in any of the embodiments of the present disclosure, the subset may be replaced with one of: a resource set, a subset, a target set, a specific set, and an indication set. For example, the first subset may be replaced with one or more of: a first resource set, a first subset, a first target set, a first specific set, and a first indication set. For example, the second subset may be replaced with one or more of: a second resource set, a second subset, a second target set, a second specific set, and a second indication set. For example, the third subset may be replaced with one or more of: a third resource set, a third subset, a third target set, a third specific set, and a third indication set.

Optionally, the resources in the first resource set may include signal resources or reference signal resources (e.g., CSI-RS resources, and/or SSBs). Optionally, the resources in the second resource set may include signal resources or reference signal resources (e.g., CSI-RS resources).

In some embodiments, the first information may be transmitted through a first MAC CE; and/or, the second information may be transmitted through a second MAC CE; and/or the third information may be transmitted through a third MAC CE.

Optionally, the first MAC CE and the second MAC CE are the same MAC CE. Optionally, the first MAC CE and the third MAC CE are the same MAC CE. Optionally, the second MAC CE and the third MAC CE are the same MAC CE. Optionally, the first MAC CE, the second MAC CE, and the third MAC CE are the same MAC CE. Optionally, the first MAC CE and the second MAC CE are different MAC CEs. Optionally, the first MAC CE and the third MAC CE are different MAC CEs. Optionally, the second MAC CE and the third MAC CE are different MAC CEs. Optionally, the first MAC CE, the second MAC CE, and the third MAC CE are different MAC CEs.

Optionally, in this manner, compared with the scheme of configuring subsets through RRC, the manner of using an MAC CE to directly indicate and activate some resources can effectively reduce the signaling overhead and reduce the processing delay.

In some embodiments, the first information may be transmitted via first DCI; and/or the second information is transmitted via second DCI; and/or the third information is transmitted via third DCI.

Optionally, the first DCI and the second DCI are the same DCI. Optionally, the first DCI and the third DCI are the same DCI. Optionally, the second DCI and the third DCI are the same DCI. Optionally, the first DCI, the second DCI, and the third DCI are the same DCI.

Optionally, in this manner, the processing using DCI signaling results in lower delay, enabling the UE to measure different subsets more quickly.

Optionally, in any of the embodiments of the present disclosure, the description of the indicated one or more resources may be applied to the first scheme and the second scheme, or may be applied to the first scheme and not to the second scheme, or may be applied to the second scheme and not to the first scheme.

Optionally, in any embodiment of the present disclosure, the first scheme includes: transmitting the first information through a first MAC CE; and/or transmitting the second information through a second MAC CE; and/or transmitting the third information through a third MAC CE.

Optionally, in any embodiment of the present disclosure, the second scheme includes: transmitting the first information through first DCI; and/or transmitting the second information through second DCI; and/or transmitting the third information through third DCI.

In some embodiments, the first indication information further indicates a first serving cell, and/or the first indication information applies to the first serving cell.

Optionally, the first indication information indicates a first serving cell, and the first indication information is applied to the first serving cell.

In some embodiments, the first indication information further indicates a first bandwidth part (BWP), and/or the first indication information applies to the first BWP.

In some embodiments, the first indication information further indicates a first reporting configuration; the first reporting configuration indicates a first set or the first resource set; and the first resource set belongs to one of one or more resource sets in the first set.

In some embodiments, the first indication information further indicates a first aperiodic activation state; the first aperiodic activation state indicates a first set or the first resource set; and the first resource set belongs to one of one or more resource sets in the first set.

In some embodiments, the one or more subsets include a first subset, and the first indication information is included in an MAC CE or DCI.

In some embodiments, the one or more resources included in a subset (e.g., one or more of a first subset, a second subset, a third subset) may be indicated through a bitmap; and/or the one or more resources included in a subset (e.g., one or more of a first subset, a second subset, a third subset) may be indicated by a number; and/or the one or more resources included in a subset (e.g. one or more of a first subset, a second subset, a third subset) may be indicated by a resource identifier (ID).

For example, the one or more resources included in the first subset are indicated by a bitmap; and/or the one or more resources included in the first subset are indicated by a number; and/or the one or more resources included in the first subset are indicated by a resource ID.

Optionally, one/each bit corresponds to T resources. Optionally, T is an integer greater than or equal to 1. Optionally, the quantity of resources corresponding to different bits may be the same or different. Optionally, the value of T is configured by the network. Optionally, the value of T is specified by a protocol. Optionally, the number of bits corresponding to DCI may be reduced by setting one/each bit to correspond to T resources.

Optionally, since one or more resources are indicated by a bitmap, signaling overhead may be reduced when the quantity of resources in a subset is relatively large, or when the quantity of resources in the first resource set and/or the second resource set and/or the third resource set is relatively large.

Optionally, the number is the index of a resource within the first resource set and/or the second resource set and/or the third resource set. For example, 0 may correspond to the first resource in the first resource set, and 1 may correspond to the second signal in the first resource set.

Optionally, since one or more resources are indicated through a number(s), signaling overhead may be reduced when the quantity of resources in a subset is relatively small, or when the quantity of resources in the first resource set is relatively small.

Optionally, the resource identifier is an identifier in resource configuration information. For example, if a resource is a CSI-RS resource (the CSI-RS resource here is used to actually transmit CSI-RS signals, and thus is also called a NZP-CSI-RS-Resource, where NZP refers to Non-Zero-Power), then the resource identifier in the NR system is nzp-CSI-RS-ResourceId.

Optionally, since one or more resources are indicated by a resource ID, the use the identifier of the CSI-RS resource itself simplifies the processing of the UE, but the disadvantage is that the overhead of RRC signaling may be increased.

In some embodiments, on the terminal device side, the method may further include: the terminal device receives one or more of the followings: first information, second information, and third information.

In some embodiments, on the network device side, the method may further include: the network device transmits one or more of the followings: first information, second information, and third information.

Optionally, the first information may further indicate a subset corresponding to the plurality of first resource sets, or a subset of the plurality of first resource sets. Optionally, resources in different first resource sets among the plurality of first resource sets do not overlap or partially overlap. Optionally, the second information may further indicate a subset corresponding to the plurality of second resource sets, or a subset in the plurality of second resource sets. Optionally, resources in different second resource sets among the plurality of second resource sets do not overlap or partially overlap. Optionally, the third information may further indicate a subset corresponding to the plurality of third resource sets, or a subset in the plurality of third resource sets. Optionally, resources in different third resource sets among the plurality of third resource sets do not overlap or partially overlap.

In some embodiments, one or more of the first information, the second information and the third information may further indicate a first serving cell, and/or one or more of the first information, the second information and the third information may be applied to the first serving cell.

Optionally, the first information indicates a first serving cell, and the first information is applied to the first serving cell. Optionally, the second information indicates a first serving cell, and the second information is applied to the first serving cell. Optionally, the third information indicates a first serving cell, and the third information is applied to the first serving cell. Optionally, the first information and the second information indicate a first serving cell and are applied to the first serving cell. Optionally, the first information and the third information indicate a first serving cell and are applied to the first serving cell. Optionally, the second information and the third information indicate a first serving cell and are applied to the first serving cell. Optionally, the first information, the second information, and the third information indicate a first serving cell and are applied to the first serving cell. Thus, one or more of the first information, the second information and the third information indicates the Serving Cell for which the MAC CE applies.

Optionally, in any embodiment of the present disclosure, the first serving cell may be a serving cell for which the MAC CE applies or a serving cell corresponding to a current network device, the second serving cell may be a serving cell corresponding to another network device, and the third serving cell may be a serving cell corresponding to still another network device or a serving cell corresponding to yet another network device. Optionally, the second network device and the third network device may be the same network device or different network devices. Optionally, the current network device and another network device may be the same network device or different network devices. Optionally, the current network device and the yet another network device may be the same network device or different network devices.

Optionally, in any of the embodiments of the present disclosure, the serving cell may be replaced with a carrier. For example, the first serving cell may be replaced with a first carrier. For example, the second serving cell may be replaced with a second carrier. For example, the third serving cell may be replaced with a third carrier.

Optionally, in any embodiment of the present disclosure, one or more of the first serving cell, the second serving cell and the third serving cell may be indicated by a Serving Cell ID. For example, the first serving cell is indicated by a serving cell ID. For example, the second serving cell is indicated by a serving cell ID. For example, the third serving cell is indicated by a serving cell ID.

In some embodiments, one or more of the first information, the second information and the third information may further indicate a first BWP, and/or one or more of the first information, the second information and the third information may be applied to the first BWP.

Optionally, the first information indicates a first serving cell, and the first information is applied to the first BWP. Optionally, the second information indicates a first BWP, and the second information is applied to the first BWP. Optionally, the third information indicates a first BWP, and the third information is applied to the first BWP. Optionally, the first information and the second information indicate a first BWP and are applied to the first BWP. Optionally, the first information and the third information indicate a first BWP and are applied to the first BWP. Optionally, the second information and the third information indicate a first BWP and are applied to the first BWP. Optionally, the first information, the second information and the third information indicate a first BWP and are applied to the first BWP.

Optionally, in any of the embodiments of the present disclosure, the first BWP and/or the second BWP may be indicated through a BWP ID. For example, the first BWP is indicated via a BWP ID. For example, the second BWP is indicated via a BWP ID.

In some embodiments, when the first indication information further indicates a second serving cell, resources within the first subset are associated with the second serving cell.

In some embodiments, when the first information further indicates a second serving cell, resources within the first subset are associated with the second serving cell; and/or,
when the second information further indicates a second serving cell, resources within the second subset are associated with the second serving cell; and/or,
when the third information further indicates a second serving cell, resources within the third subset are associated with the second serving cell.

Optionally, in this manner, the signals and/or resources measured by other cells can be flexibly indicated.

Optionally, the resource in the first subset is associated with the second serving cell, which may include that the resource (or signal resource) in the first subset is in the second serving cell (or belongs to the second serving cell). Optionally, the resource in the second subset is associated with the second serving cell, which may include that the resource (or signal resource) in the second subset is in the second serving cell (or belongs to the second serving cell). Optionally, the resource in the third subset is associated with the second serving cell, which may include that the resource in the third subset is in the second serving cell (or belongs to the second serving cell).

Optionally, in any of the embodiments of the present disclosure, the second serving cell may indicated via a Serving Cell ID.

Optionally, when the first indication information further indicates a second subset and/or a third subset, resources within the second subset and/or the third subset are associated with the second serving cell;
the second subset includes one or more resources in the second resource set; and
the third subset includes one or more resources in the third resource set.

Optionally, when the first information further indicates the second subset and/or the third subset, resources within the second subset and/or the third subset are associated with the second serving cell; and/or,
when the second information further indicates the first subset and/or the third subset, resources within the first subset and/or the third subset are associated with the second serving cell; and/or,
when the third information further indicates the first subset and/or the second subset, resources within the first subset and/or the second subset are associated with the second serving cell.

Optionally, when the first information further indicates a second subset, the resources (or signal resources) within the second subset are in (or belong to) the second serving cell. Optionally, when the first information further indicates a third subset, the resources within the third subset are in (or belong to) the second serving cell. Optionally, when the second information further indicates a first subset, resources (or signal resources) within the first subset are in (or belong to) the second serving cell. Optionally, when the second information further indicates a third subset, resources within the third subset are in (or belong to) the second serving cell. Optionally, when the third information further indicates a first subset, the resources (or signal resources) within the first subset are in (or belong to) the second serving cell. Optionally, when the third information further indicates a second subset, resources (or signal resources) within the second subset are in (or belong to) the second serving cell.

In some embodiments, when the first indication information does not indicate a second serving cell, resources within the first subset are associated with a first serving cell.

In some embodiments, when the first information does not indicate a second serving cell, resources within the first subset are associated with a first serving cell; and/or,
when the second information does not indicate a second serving cell, resources within the second subset are associated with a first serving cell; and/or,
when the third information does not indicate a second serving cell, a resource within the third subset is associated with a first serving cell.

Optionally, in this manner, the signaling overhead can be reduced. Compared with the above scheme, the cost is that the measured signals of other cells/carriers cannot be indicated.

Optionally, in any embodiment of the present disclosure, the resource (or signal resource) in the first subset is associated with the first serving cell, which may include or be replaced by: the resource (or signal resource) in the first subset is in the first serving cell (or belongs to the first serving cell). Optionally, in any embodiment of the present disclosure, the resource (or signal resource) in the second subset is associated with the first serving cell, which may include or be replaced by: the resource (or signal resource) in the second subset is in the first serving cell (or belongs to the first serving cell). Optionally, in any embodiment of the present disclosure, the resource in the third subset is associated with the first serving cell, which may include or be replaced by: the resource (or signal resource) in the third subset is in the first serving cell (or belongs to the first serving cell).

Optionally, when the first indication information further indicates a second subset and/or a third subset, resources within the second subset and/or the third subset are associated with the first serving cell;
the second subset includes one or more resources in the second resource set;
the third subset includes one or more resources in the third resource set.

Optionally, when the first information further indicates the second subset and/or the third subset, resources within the second subset and/or the third subset are associated with the first serving cell; and/or,
when the second information further indicates the first subset and/or the third subset, resources within the first subset and/or the third subset are associated with the first serving cell; and/or,
when the third information further indicates the first subset and/or the second subset, resources within the first subset and/or the second subset are associated with the first serving cell.

Optionally, when the first information further indicates a second subset, the resources (or signal resources) within the second subset are in (or belong to) the first serving cell. Optionally, when the first information further indicates a third subset, the resources within the third subset are in (or belong to) the first serving cell. Optionally, when the second information further indicates a first subset, resources (or signal resources) within the first subset are in (or belong to) the first serving cell. Optionally, when the second information further indicates a third subset, the resources within the third subset are in (or belong to) the first serving cell. Optionally, when the third information further indicates a first subset, resources (or signal resources) within the first subset are in (or belong to) the first serving cell. Optionally, when the third information further indicates a second subset, resources (or signal resources) within the second subset are in (or belong to) the first serving cell.

In some embodiments, when the first indication information further indicates a second BWP, resources within the first subset are in the second BWP.

In some embodiments, when the first information further indicates a second BWP, resources within the first subset are in the second BWP; and/or,
when the second information further indicates a second BWP, resources within the second subset are in the second BWP; and/or,
when the third information further indicates a second BWP, resources within the third subset are in the second BWP.

Optionally, in this manner, it is possible to flexibly indicate signals and/or resources for which other BWPs are measured.

Optionally, the second BWP may be indicated by a BWP ID.

Optionally, when the first indication information further indicates a second subset and/or a third subset, resources within the second subset and/or the third subset are in the second BWP;
the second subset includes one or more resources in the second resource set; and
the third subset includes one or more resources in the third resource set.

Optionally, when the first information further indicates the second subset and/or the third subset, resources within the second subset and/or the third subset are in the second BWP; and/or,
when the second information further indicates the first subset and/or the third subset, resources within the first subset and/or the third subset are in the second BWP; and/or,
when the third information further indicates the first subset and/or the second subset, resources within the first subset and/or the second subset are in the second BWP.

Optionally, when the first information further indicates a second subset, the resources (or signal resources) within the second subset are in the second BWP. When the first information further indicates a third subset, resources within the third subset are in the second BWP. Optionally, when the second information further indicates a first subset, resources (or signal resources) within the first subset are in the second BWP. When the second information further indicates a third subset, the resources within the third subset are in the second BWP. Optionally, when the third information further indicates a first subset, resources (or signal resources) within the first subset are in the second BWP. When the third information further indicates a second subset, the resources (or signal resources) within the second subset are in the second BWP.

In some embodiments, when the first indication information does not indicate a second BWP, resources within the first subset are in the first BWP.

In some embodiments, when the first information does not indicate a second BWP, resources (or signal resources) within the first subset are in the first BWP; and/or,
when the second information does not indicate a second BWP, resources (or signal resources) within the second subset are in a first BWP; and/or,
when the third information does not indicate a second BWP, the resources within the third subset are in the first BWP.

Optionally, in this manner, signaling overhead can be reduced at the expense of being incapable of indicating measured signals in other BWPs.

Optionally, when the first indication information further indicates a second subset and/or a third subset, resources within the second subset and/or the third subset are in a first BWP;
the second subset includes one or more resources in the second resource set; and
the third subset includes one or more resources in the third resource set.

Optionally, when the first information further indicates the second subset and/or the third subset, resources within the second subset and/or the third subset are in a first BWP; and/or,
when the second information further indicates the first subset and/or the third subset, resources within the first subset and/or the third subset are in a first BWP; and/or,
when the third information further indicates the first subset and/or the second subset, resources within the first subset and/or the second subset are in a first BWP.

Optionally, when the first information further indicates a second subset, the resources (or signal resources) within the second subset are in the first BWP. When the first information further indicates a third subset, resources within the third subset are in the first BWP. Optionally, when the second information further indicates a first subset, resources (or signal resources) within the first subset are in the first BWP. When the second information further indicates a third subset, resources within the third subset are in the first BWP. Optionally, when the third information further indicates a first subset, resources within the first subset (or signal resource) are in the first BWP. When the third information further indicates a second subset, the resources (or signal resources) within the second subset are in the first BWP.

In some embodiments, the first information may further indicate a first reporting configuration, the first reporting configuration indicating the first set or the first resource set; and/or,
the second information may further indicate a second reporting configuration, the second reporting configuration indicating the second set or the second resource set; and/or,
the third information may further indicate a third reporting configuration, the third reporting configuration indicating the third set or the third resource set.

Optionally, in any embodiment of the present disclosure, the first reporting configuration and the second reporting configuration are the same reporting configuration. Optionally, the first reporting configuration and the third reporting configuration are the same reporting configuration. Optionally, the second reporting configuration and the third reporting configuration are the same reporting configuration. Optionally, the first reporting configuration, the second reporting configuration, and the third reporting configuration are the same reporting configuration. Optionally, in any embodiment of the present disclosure, the first reporting configuration and the second reporting configuration are different reporting configurations. Optionally, the first reporting configuration and the third reporting configuration are different reporting configurations. Optionally, the second reporting configuration and the third reporting configuration are different reporting configurations. Optionally, the first reporting configuration, the second reporting configuration, and the third reporting configuration are different reporting configurations.

Optionally, in this manner, information such as serving cell and/or BWP of the first resource set and/or the second resource set and/or the third resource set may be less indicated, thereby reducing signaling overhead.

Optionally, in some embodiments, the scheme of indicating the reporting configuration cannot coexist with the third scheme of the present disclosure. Optionally, in some embodiments, the scheme of indicating the reporting configuration may coexist with the third scheme of the present disclosure. Optionally, indicating the reporting configuration may include one or more of followings: indicating a first reporting configuration, indicating a second reporting configuration, and indicating a third reporting configuration.

Optionally, in any embodiment of the present disclosure, the third scheme may include one or more of the followings: indicating a second serving cell, refraining from indicating a second serving cell, indicating a second BWP, and refraining from indicating a second BWP.

In some embodiments, the first information may further indicate a first aperiodic activation state, the first aperiodic activation state indicating the first set or the first resource set; and/or,
the second information may further indicate a second aperiodic activation state, the second aperiodic activation state indicating the second set or the second set of resources; and/or,
the third information may further indicate a third aperiodic activation state, the third aperiodic activation state indicating the third set or the third resource set.

Optionally, the first aperiodic activation state and the second aperiodic activation state are the same aperiodic activation state. Optionally, the first aperiodic activation state and the third aperiodic activation state are the same aperiodic activation state. Optionally, the second aperiodic activation state and the third aperiodic activation state are the same aperiodic activation state. Optionally, the first aperiodic activation state, the second aperiodic activation state, and the third aperiodic activation state are the same aperiodic activation state. Optionally, the first aperiodic activation state and the second aperiodic activation state are different aperiodic activation states. Optionally, the first aperiodic activation state and the third aperiodic activation state are different aperiodic activation states. Optionally, the second aperiodic activation state and the third aperiodic activation state are different aperiodic activation states. Optionally, the first aperiodic activation state, the second aperiodic activation state, and the third aperiodic activation state are different aperiodic activation states.

Optionally, in this manner, information such as serving cell and/or BWP of the first resource set and/or the second resource set and/or the third resource set may be less indicated, thereby reducing signaling overhead.

Optionally, in some embodiments, the scheme of indicating an aperiodic activation state cannot coexist with the third scheme of the present disclosure. Optionally, in some embodiments, the scheme of indicating an aperiodic activation state may coexist with the third scheme of the present disclosure.

Optionally, in any embodiment of the present disclosure, the third scheme includes one or more of the following: indicating a second serving cell, refraining from indicating a second serving cell, indicating a second BWP, and refraining from indicating a second BWP.

Optionally, in some embodiments, the scheme of indicating an aperiodic activation state may coexist with a scheme of indicating a reporting configuration. Optionally, the scheme of indicating an aperiodic activation state cannot coexist with the scheme of indicating a reporting configuration, for example, in an embodiment, there may be the scheme of indicating an aperiodic activation state but not the scheme of indicating a reporting configuration, or there may be the scheme of indicating a reporting configuration but not the scheme of indicating an aperiodic activation state.

Optionally, in any embodiment of the present disclosure, the description of one or more of the first information, the second information and the third information may be applied to the first scheme and the second scheme, or may be applied to the first scheme but not to the second scheme, or may be applied to the second scheme but not to the first scheme.

In some embodiments, the first indication information may be included in an MAC CE.

Optionally, the first indication information may include one or more of the following: fourth information, fifth information, and sixth information.

In some embodiments, on the terminal device side, the method may further include: the terminal device receives one or more of the followings: fourth information, fifth information, and sixth information.

In some embodiments, on the network device side, the method may further include: the network device transmits one or more of the followings: fourth information, fifth information, and sixth information.

Optionally, the fourth information indicates one or more subsets of the first resource set. Optionally, the fifth information indicates one or more subsets of the second resource set. Optionally, the sixth information indicates one or more subsets of the third resource set.

Optionally, the first resource set belongs to one of one or more resource sets in the first set, and resources in each of the one or more subsets of the first resource set belong to resources in the first resource set. Optionally, the fifth information indicates one or more subsets of the second resource set, the second resource set belongs to one of the one or more resource sets in the second set, resources in each of the one or more subsets of the second resource set belong to resources in the second resource set. Optionally, the sixth information indicates one or more subsets of the third resource set, the third resource set belongs to one of one or more resource sets in the third set, resources in each of the one or more subsets of the third resource set belong to resources in the third resource set.

Optionally, the network device may transmit multiple pieces of fourth information when it is necessary to indicate one or more subsets of each of the plurality of first resource sets. Optionally, the multiple pieces of fourth information may be the same indication information or different indication information. Optionally, when it is necessary to indicate one or more subsets of each of the plurality of second resource sets, the network device may transmit multiple pieces of fifth information. Optionally, the multiple pieces of fifth information may be the same indication information or different indication information. Optionally, when it is necessary to indicate one or more subsets of each of the plurality of third resource sets, the network device may transmit multiple pieces of sixth information. Optionally, the multiple pieces of sixth information may be the same indication information or different indication information.

Optionally, the network device may transmit the fourth information, and the terminal device may receive the fourth information. Optionally, the network device may transmit the fifth information and the terminal device may receive the fifth information. Optionally, the network device may transmit the sixth information and the terminal device may receive the sixth information. Optionally, the network device may transmit the fourth information and the fifth information, and the terminal device may receive the fourth information and the fifth information. Optionally, the network device may transmit the fourth information and the sixth information, and the terminal device may receive the fourth information and the sixth information. Optionally, the network device may transmit the fifth information and the sixth information, and the terminal device may receive the fifth information and the sixth information. Optionally, the network device may transmit the fourth information, the fifth information and the sixth information, and the terminal device may receive the fourth information, the fifth information and the sixth information.

Optionally, the fourth information and the fifth information are the same indication information. Optionally, the fourth information and the sixth information are the same indication information. Optionally, the fifth information and the sixth information are the same indication information. Optionally, the fourth information, the fifth information, and the sixth information are the same indication information. Optionally, the fourth information and the fifth information are different indication information. Optionally, the fourth information and the sixth information are different indication information. Optionally, the fifth information and the sixth information are different indication information. Optionally, the fourth information, the fifth information, and the sixth information are different indication information.

Optionally, resources in different subsets among the one or more subsets of the first resource set may be different or partially overlapping. Optionally, resources in different subsets among the one or more subsets of the second resource set may be different or partially overlapping. Optionally, resources in different subsets among the one or more subsets of the third resource set may be different or partially overlapping.

In some embodiments, the fourth information may be transmitted through fourth MAC CE information; and/or the fifth information may be transmitted through fifth MAC CE information; and/or the sixth information is transmitted through sixth MAC CE information.

Optionally, the fourth MAC CE and the fifth MAC CE are the same MAC CE. Optionally, the fourth MAC CE and the sixth MAC CE are the same MAC CE. Optionally, the fifth MAC CE and the sixth MAC CE are the same MAC CE. Optionally, the fourth MAC CE, the fifth MAC CE, and the sixth MAC CE are the same MAC CE. Optionally, the fourth MAC CE and the fifth MAC CE are different MAC CEs. Optionally, the fourth MAC CE and the sixth MAC CE are different MAC CEs. Optionally, the fifth MAC CE and the sixth MAC CE are different MAC CEs. Optionally, the fourth MAC CE, the fifth MAC CE, and the sixth MAC CE are different MAC CEs.

Optionally, in this manner, compared with the scheme of configuring subsets through RRC, using the MAC CE to directly indicate one or more subsets can effectively reduce signaling overhead and reduce processing delay.

In some embodiments, the one or more subsets included in the first resource set may be indicated through a subset identifier(s); and/or,
the one or more subsets included in the first resource set may be indicated through a bitmap; and/or,
the one or more subsets included in the first resource set may be indicated through a number(s); and/or,
the one or more subsets included in the first resource set may be indicated through an identifier(s) in resource configuration information.

In some embodiments, the one or more subsets in a resource set (e.g., one or more of the first resource set, the second resource set, and the third resource set) may be indicated through a subset identifier(s); and/or,
the one or more subsets in a resource set (e.g. one or more of the first resource set, the second resource set, and the third resource set) may be indicated through a bitmap; and/or,
the one or more subsets in a resource set (e.g. one or more of the first resource set, the second resource set, and the third resource set) may be indicated through a number(s); and/or,
the one or more subsets included in a resource set (e.g. one or more of the first resource set, the second resource set, the third resource set) may be indicated through an identifier(s) in the resource configuration information.

Optionally, one or more of the fourth information, the fifth information and the sixth information may indicate a corresponding subset identifier for a subset among the one or more subsets, which can facilitate subsequent DCI signaling to indicate the corresponding subset.

Optionally, each of the one or more sub-sets may indicate, through a bitmap, which resources in the first resource set belong to the sub-set, so that when the quantity of resources in the sub-set is large or the quantity of resources in the first resource set is large, signaling overhead can be reduced.

Optionally, each of the one or more subsets may indicate, through one or more numbers, which resources in the first resource set belong to this subset, wherein the numbers are the indexes of resources within the first resource set, for example, 0 may correspond to the first resource within the first resource set, and 1 may correspond to the second signal within the first resource set. In this way, when the quantity of resources in the sub-set is small, or when the quantity of resources in the first resource set is small, the signaling overhead can be reduced.

Optionally, each of the one or more subsets may indicate, through one or more identifiers, which resources of the first resource set belong to the subset, wherein the identifiers are identifiers in resource configuration information. For example, when the resource is a CSI-RS resource (the CSI-RS resource here is used to actually send CSI-RS signals, and thus may be called NZP-CSI-RS-Resource, where NZP refers to non-zero-power), then the identifier in the NR system is nzp-CSI-RS-ResourceId. In this way, directly using the identifier of the CSI-RS resource itself can simplify the processing of the UE, but the disadvantage is that the overhead of RRC signaling may be increased.

In some embodiments, on the terminal device side, the method may further include: the terminal device receives one or more of the followings: fourth information, fifth information, and sixth information.

In some embodiments, on the network device side, the method may further include: the network device transmits one or more of the followings: fourth information, fifth information, and sixth information.

Optionally, the fourth information may further indicate one or more subsets corresponding to each of the plurality of first resource sets, or one or more subsets of each of the plurality of first resource sets. Optionally, resources in different first resource sets among the plurality of first resource sets do not overlap or partially overlap. Optionally, resources in different subsets among one or more subsets in each first resource set do not overlap or partially overlap. Optionally, the fifth information may further indicate one or more subsets corresponding to each of the plurality of second resource sets, or one or more subsets of each of the plurality of second resource sets. Optionally, resources in different second resource sets among the plurality of second resource sets do not overlap or partially overlap. Optionally, resources in different subsets of one or more subsets in each second resource set do not overlap or partially overlap. Optionally, the sixth information may further indicate one or more subsets corresponding to each third resource set of the plurality of third resource sets, or one or more subsets of each third resource set of the plurality of third resource sets. Optionally, resources in different third resource sets among the plurality of third resource sets do not overlap or partially overlap. Optionally, resources in different subsets among one or more subsets of each third resource set do not overlap or partially overlap.

In some embodiments, one or more of the fourth information, the fifth information and the sixth information may further indicate a first serving cell, and/or one or more of the fourth information, the fifth information and the sixth information may be applied to the first serving cell.

Optionally, the fourth information indicates a first serving cell and the fourth information is applied to the first serving cell. Optionally, the fifth information indicates a first serving cell, and the fifth information is applied to the first serving cell. Optionally, the sixth information indicates a first serving cell, and the sixth information is applied to the first serving cell. Optionally, the fourth information and the fifth information indicate a first serving cell and are applied to the first serving cell. Optionally, the fourth information and the sixth information indicate a first serving cell and are applied to the first serving cell. Optionally, the fifth information and the sixth information indicate a first serving cell and are applied to the first serving cell. Optionally, the fourth information, the fifth information, and the sixth information indicate a first serving cell and are applied to the first serving cell. Thus, one or more of the fourth information, the fifth information and the sixth information indicates the Serving Cell for which the MAC CE applies.

In some embodiments, one or more of the fourth information, the fifth information and the sixth information may further indicate a first BWP, and/or one or more of the fourth information, the fifth information and the sixth information may be applied to the first BWP.

Optionally, the fourth information indicates a first serving cell, and the fourth information is applied to the first BWP. Optionally, the fifth information indicates a first BWP, and the fifth information is applied to the first BWP. Optionally, the sixth information indicates a first BWP, and the sixth information is applied to the first BWP. Optionally, the fourth information and the fifth information indicate a first BWP and are applied to the first BWP. Optionally, the fourth information and the sixth information indicate a first BWP and are applied to the first BWP. Optionally, the fifth information and the sixth information indicate a first BWP and are applied to the first BWP. Optionally, the fourth information, the fifth information and the sixth information indicate a first BWP and are applied to the first BWP.

In some embodiments, when the first indication information further indicates a second serving cell, resources in one or more subsets of the first resource set are associated with the second serving cell.

In some embodiments, when the fourth information further indicates a second serving cell, resources in one or more subsets of the first resource set are associated with the second serving cell; and/or,
when the fifth information further indicates a second serving cell, resources in one or more subsets of the second resource set are associated with the second serving cell; and/or,
when the sixth information further indicates a second serving cell, resources in one or more subsets of the third resource set are associated with the second serving cell.

Optionally, in this manner, the signals and/or resources measured by other cells can be flexibly indicated.

Optionally, resources in one or more subsets of the first resource set are associated with the second serving cell, which may include that resources (or signal resources) in one or more subsets of the first resource set are in the second serving cell (or belong to the second serving cell). Optionally, the resources in one or more subsets of the second resource set are associated with the second serving cell, which may include that the resources (or signal resources) in the one or more subsets of the second resource set are in the second serving cell (or belong to the second serving cell). Optionally, the resources in the one or more subsets of the third resource set are associated with the second serving cell, which may include that the resources in the one or more subsets of the third resource set are in the second serving cell (or belong to the second serving cell).

Optionally, in any of the embodiments of the present disclosure, the second serving cell may be indicated through a Serving Cell ID.

Optionally, when the first indication information further indicates one or more subsets of a second resource set and/or one or more subsets of a third resource set, resources in the one or more subsets of the second resource set and/or resources in the one or more subsets of the third resource set are associated with the second serving cell.

Optionally, when the fourth information further indicates one or more subsets of the second resource set and/or one or more subsets of the third resource set, resources in the one or more subsets of the second resource set and/or resources in the one or more subsets of the third resource set are associated with the second serving cell; and/or,
when the fifth information further indicates one or more subsets of the first resource set and/or one or more subsets of the third resource set, resources in the one or more subsets of the first resource set and/or resources in the one or more subsets of the third resource set are associated with the second serving cell; and/or,
when the sixth information further indicates one or more subsets of the first resource set and/or one or more subsets of the second resource set, resources in the one or more subsets of the first resource set and/or resources in the one or more subsets of the second resource set are associated with the second serving cell.

Optionally, when the fourth information further indicates one or more subsets of the second resource set, resources (or signal resources) within the one or more subsets of the second resource set are in (or belong to) the second serving cell. Optionally, when the fourth information further indicates one or more subsets of the third resource set, resources within the one or more subsets of the third resource set are in (or belong to) the second serving cell. Optionally, when the fifth information further indicates one or more subsets of the first resource set, resources (or signal resources) within the one or more subsets of the first resource set are in (or belong to) the second serving cell. Optionally, when the fifth information further indicates one or more subsets of the third resource set, resources within the one or more subsets of the third resource set are in (or belong to) the second serving cell. Optionally, when the sixth information further indicates one or more subsets of the first resource set, resources (or signal resources) within the one or more subsets of the first resource set are in (or belong to) the second serving cell. Optionally, when the sixth information further indicates one or more subsets of the second resource set, resources (or signal resources) within the one or more subsets of the second resource set are in (or belong to) the second serving cell.

In some embodiments, when the first indication information does not indicate a second serving cell, resources in one or more subsets of the first resource set are associated with the first serving cell.

In some embodiments, when the fourth information does not indicate a second serving cell, resources in one or more subsets of the first resource set associate the first serving cell; and/or,
when the fifth information does not indicate a second serving cell, resources in one or more subsets of the second resource set are associated with the first serving cell; and/or,
when the sixth information does not indicate a second serving cell, resources in one or more subsets of the third resource set are associated with the first serving cell.

Optionally, in this manner, the signaling overhead can be reduced. Compared with the above scheme, the cost is that the measured signal of other cells/carriers cannot be indicated.

Optionally, in any embodiment of the present disclosure, the resources (or signal resources) in one or more subsets of the first resource set are associated with the first serving cell, which may include or be replaced by: the resources (or signal resources) in one or more subsets of the first resource set are in the first serving cell (or belong to the first serving cell). Optionally, in any embodiment of the present disclosure, the resources (or signal resources) in one or more sub-sets of the second resource set are associated with the first serving cell, which may include or be replaced by: the resources (or signal resources) in one or more sub-sets of the second resource set are in the first serving cell (or belong to the first serving cell). Optionally, in any embodiment of the present disclosure, the resources in one or more sub-sets of the third resource set are associated with the first serving cell, which may include or be replaced by: the resources (or signal resources) in the one or more sub-sets of the third resource set are in the first serving cell (or belong to the first serving cell).

Optionally, when the first indication information further indicates one or more subsets of a second resource set and/or one or more subsets of a third resource set, resources in the one or more subsets of the second resource set and/or resources in the one or more subsets of the third resource set are associated with the first serving cell.

Optionally, when the fourth information further indicates one or more subsets of the second resource set and/or one or more subsets of the third resource set, resources in the one or more subsets of the second resource set and/or resources in the one or more subsets of the third resource set are associated with the first serving cell; and/or,
when the fifth information further indicates one or more subsets of the first resource set and/or one or more subsets of the third resource set, resources in the one or more subsets of the first resource set and/or resources in the one or more subsets of the third resource set are associated with the first serving cell; and/or,
when the sixth information further indicates one or more subsets of the first resource set and/or one or more subsets of the second resource set, resources in the one or more subsets of the first resource set and/or resources in the one or more subsets of the second resource set are associated with the first serving cell.

Optionally, when the fourth information further indicates one or more subsets of the second resource set, the resources (or signal resources) in the one or more subsets of the second resource set are in (or belong to) the first serving cell. Optionally, when the fourth information further indicates one or more subsets of the third resource set, resources in the one or more subsets of the third resource set are in (or belong to) the first serving cell. Optionally, when the fifth information further indicates one or more subsets of the first resource set, resources (or signal resources) in the one or more subsets of the first resource set are in (or belong to) the first serving cell. Optionally, when the fifth information further indicates one or more subsets of the third resource set, resources in the one or more subsets of the third resource set are in (or belong to) the first serving cell. Optionally, when the sixth information further indicates one or more subsets of the first resource set, resources (or signal resources) in the one or more subsets of the first resource set are in (or belong to) the first serving cell. Optionally, when the sixth information further indicates one or more subsets of the second resource set, resources (or signal resources) in the one or more subsets of the second resource set are in (or belong to) the first serving cell.

In some embodiments, when the first indication information further indicates a second BWP, resources in one or more subsets of the first resource set are in the second BWP.

In some embodiments, when the fourth information further indicates a second BWP, resources in one or more subsets of the first resource set are in the second BWP; and/or,
when the fifth information further indicates a second BWP, resources in one or more subsets of the second resource set are in the second BWP; and/or,
when the sixth information further indicates a second BWP, resources in one or more subsets of the third resource set are in the second BWP.

Optionally, in this manner, it is possible to flexibly indicate signals and/or resources for which other BWPs are measured.

Optionally, the second BWP may be indicated through a BWP ID.

Optionally, when the first indication information further indicates one or more subsets of a second resource set and/or one or more subsets of a third resource set, resources in the one or more subsets of the second resource set and/or resources in the one or more subsets of the third resource set are in the second BWP.

Optionally, when the fourth information further indicates one or more subsets of the second resource set and/or one or more subsets of the third resource set, resources in the one or more subsets of the second resource set and/or resources in the one or more subsets of the third resource set are in the second BWP; and/or,
when the fifth information further indicates one or more subsets of the first resource set and/or one or more subsets of the third resource set, resources in the one or more subsets of the first resource set and/or resources in the one or more subsets of the third resource set are in the second BWP; and/or,
when the sixth information further indicates one or more subsets of the first resource set and/or one or more subsets of the second resource set, resources in one or more subsets of the first resource set and/or resources in one or more subsets of the second resource set are in the second BWP.

Optionally, when the fourth information further indicates one or more subsets of the second resource set, the resources (or signal resources) in the one or more subsets of the second resource set are in the second BWP. When the fourth information further indicates one or more subsets of the third resource set, resources in the one or more subsets of the third resource set are in the second BWP. Optionally, when the fifth information further indicates one or more subsets of the first resource set, resources (or signal resources) in the one or more subsets of the first resource set are in the second BWP. When the fifth information further indicates one or more subsets of the third resource set, resources in the one or more subsets of the third resource set are in the second BWP. Optionally, when the sixth information further indicates one or more subsets of the first resource set, resources (or signal resources) in the one or more subsets of the first resource set are in the second BWP. When the sixth information further indicates one or more subsets of the second resource set, resources (or signal resources) in the one or more subsets of the second resource set are in the second BWP.

In some embodiments, when the first indication information does not indicate a second BWP, resources in one or more subsets of the first resource set are in the first BWP.

In some embodiments, when the fourth information does not indicate a second BWP, resources in one or more subsets of the first resource set are in the first BWP; and/or,
when the fifth information does not indicate a second BWP, resources in one or more subsets of the second resource set are in the first BWP; and/or,
when the sixth information does not indicate a second BWP, resources in one or more subsets of the third resource set are in the first BWP.

Optionally, in this manner, signaling overhead can be reduced at the expense of being incapable of indicating measured signals of other BWPs.

Optionally, when the first indication information further indicates one or more subsets of a second resource set and/or one or more subsets of a third resource set, resources in one or more subsets of the second resource set and/or resources in one or more subsets of the third resource set are in the first BWP.

Optionally, when the fourth information further indicates one or more subsets of the second resource set and/or one or more subsets of the third resource set, resources in one or more subsets of the second resource set and/or resources in one or more subsets of the third resource set are in the first BWP; and/or,
when the fifth information further indicates one or more subsets of the first resource set and/or one or more subsets of the third resource set, resources in one or more subsets of the first resource set and/or resources in one or more subsets of the third resource set are in the first BWP; and/or,
when the sixth information further indicates one or more subsets of the first resource set and/or one or more subsets of the second resource set, resources in one or more subsets of the first resource set and/or resources in one or more subsets of the second resource set are in the first BWP.

Optionally, when the fourth information further indicates one or more subsets of the second resource set, resources (or signal resources) in the one or more subsets of the second resource set are in the first BWP. When the fourth information further indicates one or more subsets of the third resource set, resources in the one or more subsets of the third resource set are in the first BWP. Optionally, when the fifth information further indicates one or more subsets of the first resource set, resources (or signal resources) in the one or more subsets of the first resource set are in the first BWP. When the fifth information further indicates one or more subsets of the third resource set, resources in the one or more subsets of the third resource set are in the first BWP. Optionally, when the sixth information further indicates one or more subsets of the first resource set, resources (or signal resources) in the one or more subsets of the first resource set are in the first BWP. When the sixth information further indicates one or more subsets of the second resource set, resources (or signal resources) in the one or more subsets of the second resource set are in the first BWP.

In some embodiments, the fourth information may further indicate a first reporting configuration, the first reporting configuration indicating the first set or the first resource set; and/or,
the fifth information may further indicate a second reporting configuration, the second reporting configuration indicating the second set or the second resource set; and/or,
the sixth information may further indicate a third reporting configuration, the third reporting configuration indicating the third set or the third resource set.

Optionally, in this manner, information such as serving cell and/or BWP of the first resource set and/or the second resource set and/or the third resource set can be less indicated, thereby reducing signaling overhead.

In some embodiments, the fourth information may further indicate a first aperiodic activation state, the first aperiodic activation state indicating the first set or the first resource set; and/or,
the fifth information may further indicate a second aperiodic activation state, the second aperiodic activation state indicating the second set or the second set of resources; and/or,
the sixth information may further indicate a third aperiodic activation state, the third aperiodic activation state indicating the third set or the third resource set.

In some embodiments, when the first indication information indicates a subset of the first resource set, the subset of the first resource set is a first subset.

In some embodiments, when the fourth information indicates a subset of the first resource set, the subset of the first resource set is a first subset; and/or,
when the fifth information indicates a subset of the second resource set, the subset of the second resource set is a second subset; and/or,
when the sixth information indicates a subset of the third resource set, the subset of the third resource set is a third subset.

Optionally, in this manner, when there is a subset, no indication is required using DCI, thereby saving DCI signaling overhead.

In some embodiments, on the terminal device side, the method may further include: the terminal device receives second indication information, the second indication information being included in DCI and indicating a first subset of the first resource set, the first subset belonging to one or more subsets of the first resource set.

In some embodiments, on the network device side, the method may further include: the network device transmits second indication information, the second indication information being included in DCI and indicating a first subset of the first resource set, the first subset belonging to one or more subsets of the first resource set.

Optionally, the second indication information may include one or more of the following: seventh information, eighth information, and ninth information.

In some embodiments, on the terminal device side, the method may further include: the terminal device receives one or more of the following: seventh information, eighth information, and ninth information.

In some embodiments, on the network device side, the method may further include: the network device transmits one or more of the following: seventh information, eighth information, and ninth information.

Optionally, the seventh information may indicate a first subset of the first resource set, the first subset belonging to one or more subsets of the first resource set.

Optionally, the eighth information may indicate a second subset of the second resource set, the second subset belonging to one or more subsets of the second resource set.

Optionally, the ninth information may indicate a third subset of the third resource set, the third subset belonging to one or more subsets of the third resource set.

Optionally, the network device may transmit the seventh information and the terminal device may receive the seventh information. Optionally, the network device may transmit the eighth information and the terminal device may receive the eighth information. Optionally, the network device may transmit the ninth information and the terminal device may receive the ninth information. Optionally, the network device may transmit the seventh information and the eighth information, and the terminal device may receive the seventh information and the eighth information. Optionally, the network device may transmit the seventh information and the ninth information, and the terminal device may receive the seventh information and the ninth information. Optionally, the network device may transmit the eighth information and the ninth information, and the terminal device may receive the eighth information and the ninth information. Optionally, the network device may transmit the seventh information, the eighth information, and the ninth information, and the terminal device may receive the seventh information, the eighth information, and the ninth information.

Optionally, the seventh information and the eighth information are the same indication information. Optionally, the seventh information and the ninth information are the same indication information. Optionally, the eighth information and the ninth information are the same indication information. Optionally, the seventh information, the eighth information, and the ninth information are the same indication information. Optionally, the seventh information and the eighth information are different indication information. Optionally, the seventh information and the ninth information are different indication information. Optionally, the eighth information and the ninth information are different indication information. Optionally, the seventh information, the eighth information, and the ninth information are different indication information.

In some embodiments, the seventh information may be transmitted via fourth DCI; and/or the eighth information may be transmitted via fifth DCI; and/or the ninth information may be transmitted via sixth DCI.

Optionally, the seventh MAC CE and the eighth MAC CE are the same MAC CE. Optionally, the seventh MAC CE and the ninth MAC CE are the same MAC CE. Optionally, the eighth MAC CE and the ninth MAC CE are the same MAC CE. Optionally, the seventh MAC CE, the eighth MAC CE, and the ninth MAC CE are the same MAC CE. Optionally, the seventh MAC CE and the eighth MAC CE are different MAC CEs. Optionally, the seventh MAC CE and the ninth MAC CE are different MAC CE. Optionally, the eighth MAC CE and the ninth MAC CE are different MAC CEs. Optionally, the seventh MAC CE, the eighth MAC CE, and the ninth MAC CE are different MAC CEs.

Optionally, in this manner, the DCI signaling processing delay is lower, enabling the terminal device to measure different subsets more quickly.

In some embodiments, the second indication information may indicate the first subset through one or more of: a subset identifier, a bitmap, a number, and an identifier in resource configuration information.

In some embodiments, the seventh information may indicate the first subset through one or more of: a subset identifier, a bitmap, a number, and an identifier in resource configuration information; and/or,
the eighth information may indicate the second subset through one or more of the followings: a subset identifier, a bitmap, a number, and an identifier in resource configuration information; and/or,
the ninth information may indicate the third subset through one or more of the followings: a subset identifier, a bitmap, a number, and an identifier in resource configuration information.

Optionally, in this manner, the seventh information may indicate the first subset through a number or a subset identifier, the eighth information may indicate the second subset via a number or a subset identifier, and the ninth information may indicate the third subset through a number or a subset identifier, so that when the number of subsets is large, the DCI signaling overhead can be reduced.

Optionally, in this manner, the seventh information may indicate the first subset through a bitmap, the eighth information may indicate the second subset through a bitmap, and the ninth information may indicate the third sub-set through a bitmap, so that when the number of sub-sets is small, the DCI signaling overhead can be reduced.

Optionally, in this manner, the seventh information may indicate the first subset through an identifier in the resource configuration information, the eighth information may indicate the second subset through an identifier in the resource configuration information, and the ninth information may indicate the third subset through an identifier in the resource configuration information, so that the processing of the UE can be simplified by directly using the identifier of the CSI-RS resource itself, and the disadvantage is that the overhead of RRC signaling may be increased.

In some embodiments, the second indication information may indicate the first subset through a first field in the DCI.

In some embodiments, the seventh information may indicate the first subset through a first field in the fourth DCI; and/or the eighth information may indicate the second subset through a first field in the fifth DCI; and/or the ninth information may indicate the third subset through a first field in the sixth DCI.

Optionally, the position of the first field in the fourth DCI may be the same as or different from the position of the first field in the fifth DCI. Optionally, the position of the first field in the fifth DCI may be the same as or different from the position of the first field in the sixth DCI. Optionally, the position of the first field in the fourth DCI may be the same as or different from the position of the first field in the sixth DCI.

In some embodiments, a size of the first field may be determined according to a first number, the first number being a maximum number of subsets in multiple resource sets; Optionally, the size of the first field may be configured by the network device.

Optionally, if a plurality of resource sets (belonging to the first set, or the second set, or the third set, or the first set and the second set, or the first set and the third set, or the second set and the third set, or the first set and the second set and the third set) have corresponding subsets, the size of the first field is determined according to the first number of subsets, which is the maximum number of subsets in the plurality of resource sets (for example, if three resource sets respectively have corresponding subsets, and the number of the corresponding subsets is respectively M1, M2, and M3, then the first number is the maximum value of M1, M2, and M3).

Optionally, the size of the first field is determined according to the first number, and the first number is the maximum number of subsets among the plurality of resource sets, so that RRC signaling can be reduced compared to that in the scheme in which the network device configures the size of the first field.

Optionally, system flexibility can be increased by configuring the size of the first field by the network device.

In some embodiments, when the value of the first field in the DCI is greater than the number of subsets in the first resource set, the terminal device does not use the first subset indicated by the first field in the DCI, and/or the terminal device determines the first subset according to a first predetermined rule.

In some embodiments, when the value of the first field in the fourth DCI is greater than the number of subsets in the first resource set, the terminal device does not use the first subset indicated by the first field in the fourth DCI, and/or the terminal device determines the first subset according to a first predetermined rule; and/or,
when the value of the first field in the fifth DCI is larger than the number of sub-sets in the second resource set, the terminal device does not use the second subset indicated by the first field in the fifth DCI, and/or the terminal device determines the second subset according to a first predetermined rule; and/or,
when the value of the first field in the sixth DCI is larger than the number of subsets in the third resource set, the terminal device does not use the third subset indicated by the first field in the sixth DCI, and/or the terminal device determines the third sub-set according to a first predetermined rule.

Optionally, the first predetermined rule may be configured in advance through RRC, or may be agreed in advance through a protocol.

For example, if the value of the first field in the fourth DCI is larger than the number of subsets corresponding to the first resource set, the indication of the first field is ignored, or a certain subset is determined as the first subset according to a predetermined rule (for example, configured in advance through RRC, or specified in advance through a protocol).

In some embodiments, resources in the first subset may be determined according to a first indication and a second indication; the first indication is used to indicate a starting resource in the first resource set, and the second indication is used to indicate an ending resource in the first resource set, and a resource between the starting resource in the first resource set and the ending resource in the first resource set belongs to the resources in the first subset.

In some embodiments, resources in the second subset may be determined according to a third and fourth indication; the third indication is used for indicating a starting resource in the second resource set, and the fourth indication is used for indicating an ending resource in the second resource set, and a resource between the starting resource in the second resource set and the ending resource in the second resource set belongs to the resources in the second subset.

In some embodiments, resources in the third subset may be determined according to fifth and sixth indications; the fifth indication is used to indicate a starting resource in the third resource set, and the sixth indication is used to indicate an ending resource in the third resource set, and a resource between the starting resource in the third resource set and the ending resource in the third resource set belongs to the resources in the third subset.

Optionally, the first indication and the second indication may be indicated via the first information. Optionally, the first indication and the second indication are the same signaling indication, e.g. the first indication and the second indication are jointly encoded into a message/signaling. Optionally, the first indication and the second indication are different signaling indications. Optionally, the third indication and the fourth indication may be indicated via the second information. Optionally, the third indication and the fourth indication are the same signaling indication, e.g. the third indication and the fourth indication are jointly encoded into a message/signaling. Optionally, the third indication and the fourth indication are different signaling indications. Optionally, the fifth indication and the sixth indication may be indicated via the third information. Optionally, the fifth indication and the sixth indication are the same signaling indication, e.g., the fifth indication and the sixth indication are jointly encoded into a message/signaling. Optionally, the fifth and sixth indications are different signaling indications.

Optionally, the starting resource of the first resource set belongs to or does not belong to the first subset. Optionally, the ending resource in the first resource set belongs to the first subset or does not belong to the first subset. Optionally, the starting resource in the second resource set belongs to the second subset or does not belong to the second subset. Optionally, the ending resource in the second resource set belongs to the second subset or does not belong to the second subset. Optionally, the starting resource in the third resource set belongs to the third subset or does not belong to the third subset. Optionally, the ending resource in the third resource set belongs to the third subset or does not belong to the third subset.

Optionally, in any embodiment of the present disclosure, the description of one or more of the resources in the first subset, the resources in the second subset, and the resources in the third subset may be applied to the first scheme and the second scheme, or may be applied to the first scheme but not to the second scheme, or may be applied to the second scheme but not to the first scheme.

In some embodiments, when the second indication information includes a first value, the terminal device may perform measurement and/or reporting based on the first resource set.

In some embodiments, when the seventh information includes a first value, the terminal device may perform measurement and/or reporting based on the first resource set; and/or,
when the eighth information includes a first value, the terminal device may perform measurement and/or reporting based on the second resource set; and/or,
when the ninth information includes a first value, the terminal device may perform measurement and/or reporting based on the third resource set.

Optionally, the first value may be a predetermined reserved value, a value configured by the network device, or a value predetermined by the protocol.

Optionally, in this manner, it is equivalent to a fallback mode, i.e., resource sets are directly used instead of the use of subsets.

In some embodiments, in a case where the first configuration information indicates a first set, the terminal device may perform measurement and/or reporting based on a first subset, and the first resource set belongs to one of one or more resource sets in the first set.

In some embodiments, when the first configuration information indicates the second set, the terminal device may perform measurement and/or reporting based on the second subset.

In some embodiments, when the first configuration information indicates the third set, the terminal device may perform measurement and/or reporting based on the third subset.

In this way, the terminal device may perform measurement and/or reporting based on the second subset, and/or perform measurement and/or reporting based on the third subset, so that the system can be assisted in better selection of beams through interference measurement.

Optionally, the first subset is determined according to seventh information, or the first subset is determined according to a second predetermined rule; and/or,
the second subset is determined according to eighth information, or the second subset is determined according to a second predetermined rule, or the second subset is determined according to a network-device configured corresponding relationship between the second subset and the first subset; and/or,
the third subset is determined according to ninth information, or the third subset is determined according to the second predetermined rule, or the third subset is determined according to the network-device configured corresponding relationship between the third subset and the first subset.

In some embodiments, in a case where the measurement and/or reporting of the terminal device correspond(s) to a first resource set, the terminal device may perform measurement and/or reporting based on the first resource set or the first subset of the first resource set.

In some embodiments, when the measurement and/or reporting of the terminal device correspond(s) to the second resource set, the terminal device may perform measurement and/or reporting based on the second resource set or the second subset of the second resource set.

In some embodiments, when the measurement and/or reporting of the terminal device correspond(s) to the third resource set, the terminal device may perform measurement and/or reporting based on the third resource set or the third subset of the third resource set.

Optionally, in any embodiment of the present disclosure, the measurement and/or reporting of the terminal device may also be referred to as a certain measurement and/or reporting of the terminal device.

Optionally, the first subset is determined according to the second indication information, or the first subset is determined according to the second predetermined rule.

Optionally, the first subset is determined according to the seventh information, or the first subset is determined according to the second predetermined rule; and/or,
the second subset is determined according to the eighth information, or the second subset is determined according to the second predetermined rule, or the second subset is determined according to the network-device configured correspondence relationship between the second subset and the first subset; and/or,
the third subset is determined according to the ninth information, or the third subset is determined according to the second predetermined rule, or the third subset is determined according to the network-device configured correspondence relationship between the third subset and the first subset.

In some embodiments, when the first configuration information indicates the first set and the network device indicates the first subset, the terminal device may perform measurement and/or reporting based on the first subset indicated by the network device, the first resource set belonging to one of one or more resource sets in the first set.

In some embodiments, when the first configuration information indicates the second set and the network device indicates the second subset, the terminal device may perform measurement and/or reporting based on the second subset indicated by the network device.

In some embodiments, when the first configuration information indicates the third set and the network device indicates the third subset, the terminal device may perform measurement and/or reporting based on the third subset indicated by the network device.

Optionally, the measurement and/or reporting may be performed based on the second subset indicated by the network device, and/or the measurement and/or reporting may be performed based on the third subset indicated by the network device, so that the system can be assisted in better selection of beams by interference measurement.

Optionally, in any embodiment of the present disclosure, the network device indicating the first subset may include one of the followings: the first information indicates the first subset of the first resource set; the fourth information indicates one or more subsets of the first resource set, and when the fourth information indicates a subset of the first resource set, the subset of the first resource set is the first subset; the fourth information indicates one or more subsets of the first resource set, and the seventh information indicates the first subset of the first resource set. Optionally, the first information may be transmitted through a first MAC CE, or transmitted through first DCI.

Optionally, in any embodiment of the present disclosure, the network device indicating the second subset may include one of the followings: the second information indicates the second subset of the second resource set; the fifth information indicates one or more subsets of the second resource set, and when the fifth information indicates a subset of the second resource set, and the subset of the second resource set is the second subset; the fifth information indicates one or more subsets of the second resource set, and the eighth information indicates the second subset of the second resource set. Optionally, the second information may be transmitted through a second MAC CE or second DCI.

Optionally, in any embodiment of the present disclosure, the network device indicating the third subset may include one of the followings: the third information indicates the third subset of the third resource set; the sixth information indicates one or more subsets of the third resource set, and when the sixth information indicates a subset of the third resource set, the subset of the third resource set is the third subset; the sixth information indicates one or more subsets of the third resource set, and the ninth information indicates the third subset of the third resource set. Optionally, the third information may be transmitted through a third MAC CE or third DCI.

In some embodiments, when the first configuration information indicates the first set and the network device does not indicate the first subset, the terminal device may perform measurement and/or reporting based on the first subset determined by the second predetermined rule, or perform measurement and/or reporting based on the first resource set; the first resource set belongs to one of one or more resource sets in the first set.

In some embodiments, when the first configuration information indicates the second set and the network device does not indicate the second subset, the terminal device may perform measurement and/or reporting based on the second subset determined by the second predetermined rule, or perform measurement and/or reporting based on the second subset determined based on a network-device configured correspondence relationship between the subset of the first resource set and the subset of the second resource set, or perform measurement and/or reporting based on the second resource set.

In some embodiments, when the first configuration information indicates the third set and the network device does not indicate the third subset, the terminal device may perform measurement and/or reporting based on the third subset determined by the second predetermined rule, or perform measurement and/or reporting based on the third subset determined based on the network-device configured correspondence relationship between the subset of the first resource set and the subset of the third resource set, or perform measurement and/or reporting based on the third resource set.

Optionally, the second pre-rule may be a rule specified by the protocol or a rule indicated in advance by the network device to the terminal device.

Optionally, in this manner, signaling overhead can be reduced.

In some embodiments, when the measurement and/or reporting of the terminal device correspond(s) to the first resource set, and the terminal device does not receive one or more of the first indication information and the second indication information, the terminal device may perform measurement and/or reporting based on the first resource set.

In some embodiments, when the measurement and/or reporting of the terminal device correspond(s) to the first resource set, and the terminal device does not receive one or more of the first information, the fourth information and the seventh information, the terminal device may perform measurement and/or reporting based on the first resource set; and/or,
when the measurement and/or reporting of the terminal device correspond(s) to the second resource set, and the terminal device does not receive one or more of the second information, the fifth information and the eighth information, the terminal device may perform measurement and/or reporting based on the second resource set; and/or,
when the measurement and/or reporting of the terminal device correspond(s) to the third resource set, and the terminal device does not receive one or more of the third information, the sixth information and the ninth information, the terminal device may perform measurement and/or reporting based on the third resource set.

Optionally, in such an embodiment, the measurement and/or reporting may be performed based on the first resource set rather than the subsets thereof, and/or the measurement and/or reporting may be performed based on the second resource set rather than the subsets thereof, and/or the measurement and/or reporting may be performed based on the third resource set rather than the subsets thereof.

Optionally, when the measurement and/or reporting of the terminal device correspond(s) to the first resource set, and the terminal device does not receive the first information, the terminal device may perform measurement and/or reporting based on the first resource set; and/or,
when the measurement and/or reporting of the terminal device correspond(s) to the second resource set, and the terminal device does not receive the second information, the terminal device may perform measurement and/or reporting based on the second resource set; and/or,
when the measurement and/or reporting of the terminal device correspond(s) to the third resource set, and the terminal device does not receive the third information, the terminal device may perform measurement and/or reporting based on the third resource set.

Optionally, when the measurement and/or reporting of the terminal device correspond(s) to the first resource set and the second resource set, and the terminal device does not receive the first information and/or the second information, the terminal device may perform measurement and/or reporting based on the first resource set and the second resource set.

Optionally, when the measurement and/or reporting of the terminal device correspond(s) to the second resource set and the third resource set, and the terminal device does not receive the second information and/or the third information, the terminal device may perform measurement and/or reporting based on the second resource set and the third resource set.

Optionally, when the measurement and/or reporting of the terminal device correspond(s) to the first resource set and the third resource set, and the terminal device does not receive the first information and/or the third information, the terminal device may perform measurement and/or reporting based on the first resource set and the third resource set.

Optionally, when the measurement and/or reporting of the terminal device correspond(s) to the first resource set, the second resource set, and the third resource set, and the terminal device does not receive one or more of the first information, the second information, and the third information, the terminal device may perform measurement and/or reporting based on the first resource set, the second resource set, and the third resource set.

Optionally, when the measurement and/or reporting of the terminal device correspond(s) to the first resource set, and the terminal device does not receive one or more of the fourth information and the seventh information, the terminal device may perform measurement and/or reporting based on the first resource set; and/or,
when the measurement and/or reporting of the terminal device correspond(s) to the second resource set, and the terminal device does not receive one or more of the fifth information and the eighth information, the terminal device may perform measurement and/or reporting based on the second resource set; and/or,
when the measurement and/or reporting of the terminal device correspond(s) to the third resource set, and the terminal device does not receive one or more of the sixth information and the ninth information, the terminal device may perform measurement and/or reporting based on the third resource set.

Optionally, when the measurement and/or reporting of the terminal device correspond(s) to the first resource set and the second resource set, and the terminal device does not receive one or more of the fourth information and the seventh information, and/or does not receive one or more of the fifth information and the eighth information, the terminal device may perform measurement and/or reporting based on the first resource set and the second resource set.

Optionally, when the measurement and/or reporting of the terminal device correspond(s) to the second resource set and the third resource set, and the terminal device does not receive one or more of the fifth information and the eighth information, and/or does not receive one or more of the sixth information and the ninth information, the terminal device may perform measurement and/or reporting based on the second resource set and the third resource set.

Optionally, when the measurement and/or reporting of the terminal device correspond(s) to the first resource set and the third resource set, and the terminal device does not receive one or more of the fourth information and the seventh information, and/or does not receive one or more of the sixth information and the ninth information, the terminal device may perform measurement and/or reporting based on the first resource set and the third resource set.

Optionally, when the measurement and/or reporting of the terminal device correspond(s) to the first resource set, the second resource set, and the third resource set, and the terminal device does not receive one or more of the fourth information and the seventh information, and/or does not receive one or more of the fifth information and the eighth information, and/or does not receive one or more of the sixth information and the ninth information, the terminal device may perform measurement and/or reporting based on the first resource set, the second resource set, and the third resource set.

Optionally, by defining the default behavior when the UE does not receive the relevant indication information in this manner, additional signaling design can be reduced.

In some embodiments, reporting by the terminal device may include one or more of the following: aperiodic reporting by the terminal device, periodic reporting by the terminal device, and semi-persistent reporting by the terminal device.

Optionally, the reporting in any embodiment of the present disclosure is applicable to aperiodic (AP) reporting, so that the flexibility of aperiodic reporting is the highest, and the flexibility of the system can be further improved by adding a flexible indication based on a subset on this basis. If periodic and semi-persistent reporting are not adopted at the same time, the implementation complexity of network and terminal can be reduced.

Optionally, the reporting in any embodiment of the present disclosure is applicable to periodic (P) reporting, the flexibility of periodic reporting is relatively insufficient, and adding flexible indications based on subsets can improve the flexibility of the system, in which case, aperiodic and semi-persistent reporting are not adopted, so that the implementation complexity of network and terminal is reduced.

Optionally, the reporting in any embodiment of the present disclosure is applicable to semi-persistent (SP) reporting, the flexibility of semi-persistent reporting is relatively insufficient compared with aperiodic reporting, and adding a flexible indication based on a subset can improve the flexibility of the system, in which case aperiodic and periodic reporting are not adopted, so that the implementation complexity of network and terminal is reduced.

Optionally, the reporting in any of the embodiments of the present disclosure is applicable to aperiodic (AP) reporting, periodic (P) reporting and semi-persistent (SP) reporting, and the flexibility of the system can be improved by introducing the subset-based flexibility indication to all reporting methods.

Optionally, the reporting in any embodiment of the present disclosure is applicable to periodic (P) reporting and semi-persistent (SP) reporting, the flexibility of periodic reporting and semi-persistent reporting is relatively insufficient compared with non-periodic reporting, and adding flexible indications based on subsets can improve the flexibility of the system, in which case if aperiodic reporting is not adopted, the implementation complexity of the network and terminal can be reduced.

Optionally, in any embodiment of the present disclosure, the terminal device may report the corresponding reporting result, which may be the first result.

In some embodiments, the first result reported by the terminal device and/or the first result received by the network device may include one or more of the following:
a measurement result: which includes one or more of: measured parameter information, a measured signal identifier, and a measured signal resource identifier;
a prediction result: which includes one or more of: a predicted signal, a predicted signal resource, a predicted signal identifier, a predicted signal resource identifier, predicted parameter information corresponding to the predicted signal, and predicted parameter information corresponding to the predicted signal resource; and
third indication information: which is used to indicate that the first result includes the measurement result and/or the prediction result;
wherein the parameter information includes a value(s) of one or more of the followings: L1-RSRP, L1-SINR, RSRP, SINR.

Optionally, in the first result, parameter information and predicted parameter information has been measured via the one signal or signal resource. Optionally, when one signal or signal resource corresponds to measured parameter information and predicted parameter information, the first result includes the measured parameter information and/or the predicted parameter information of the one signal or signal resource.

Optionally, the first result includes the measurement result and/or the prediction result, and is determined according to fourth indication information transmitted by the network device to the terminal device, or according to whether the network device transmits fourth indication information to the terminal device.

Optionally, the first result may have some of the following options.

Option 1: The first result includes a measurement result, e.g. a measured L1-RSRP, and/or a corresponding signal identifier or signal resource identifier (e.g., the identifier indicates a CSI-RS resource, and in another example, the identifier indicates an SSB). In addition to L1-RSRP, it can also be L1-SINR, in this way, the terminal device may perform measurement based on one or more subsets and report the measurement result to the network device; the network device may determine subsequent beam management operations according to appropriate algorithms or rules (such as deep learning algorithms, AI algorithms, machine learning algorithms, statistical algorithms, etc., the specific algorithms are not limited), for example, enabling the terminal device to perform beam measurements, or configuring some beams for the terminal device, or instructing the terminal device to use one or some beams for transmission, thereby improving the overall performance of the network device.

Option 2: The first result includes a prediction result of the terminal device, for example, a signal (or signal resource) predicted by the terminal device. Optionally, the predicted signal/signal resource may be reported through an identifier (referred to as a predicted identifier for convenience) (for example, a predicted identifier indicates a predicted CSI-RS resource, and in another example, the identifier indicates a predicted SSB), and optionally, the first result may further include an RSRP value (or L1-RSRP value) predicted by the terminal device, wherein the predicted RSRP value corresponds to the predicted signal or signal resource. In addition to L1-RSRP, it can also be L1-SINR. In this way, the terminal device may perform measurement based on one or more subsets, and then may use appropriate algorithms or rules (such as deep learning algorithms, AI algorithms, machine learning algorithms, statistical algorithms, etc., which is not limited) to determine which beams are most beneficial to the terminal device. Reporting these predicted beams to the network device can help the network device make better beam management and improve the performance of the network device.

Option 3: it is a combination of options 2 and 1. That is, the first result includes both the measured L1-RSRP and the predicted L1-RSRP. As an example, the first result may include additional information (i.e., the third indication information described above) for indicating whether a certain L1-RSRP is a measurement result or a prediction result. As another example, whether a certain L1-RSRP is a measurement result or a prediction result is indicated according to a third predetermined rule (which may be specified in a protocol or configured by the network device or the like), such as the position in the reporting information. In addition to L1-RSRP, it may also be L1-SINR. In this way, in some cases, the L1-RSRP measured by the terminal device itself may be more accurate than the predicted one. Reporting the measured L1-RSRP to the network device can assist the network device to make better beam management and improve the performance of the network device.

Optionally, in the first result, one signal or signal resource may have a corresponding measured L1-RSRP and a predicted L1-RSRP at the same time. In other embodiments, the L1-RSRP may be replaced with L1-SINR. In this way, reporting more information to the network device can help the network device to make better beam management and improve the performance of the network device.

Optionally, if a signal or signal resource has a corresponding measured L1-RSRP and a predicted L1-RSRP, the reporting of the first result includes the measured L1-RSRP corresponding to the signal or signal resource. In other embodiments, L1-RSRP may be replaced with L1-SINR. In this way, in some cases, the L1-RSRP measured by the terminal device may be more accurate than the predicted one, and reporting the measured L1-RSRP to the network device can help the network device to make better beam management and improve the performance of the network device.

Optionally, if a signal or signal resource has a corresponding measured L1-RSRP and a predicted L1-RSRP, the reporting of the first result includes the predicted L1-RSRP corresponding to the signal or signal resource. In other embodiments, L1-RSRP may be replaced with L1-SINR. In this way, the terminal device reports the predicted L1-RSRP corresponding to the signal resource, which facilitates the network device to better compare the quality of different beams (reference resources) because all of them are predicted, thereby facilitating the network device to make better beam management and improve the performance of the network device.

Optionally, if a signal or a signal resource has a corresponding measured L1-RSRP and a predicted L1-RSRP, it is determined according to the fourth indication information whether the reported first result includes the measured L1-RSRP corresponding to the signal or the signal resource or the predicted L1-RSRP corresponding to the signal or the signal resource. The fourth indication information is transmitted by the network device to the terminal device. In other embodiments, L1-RSRP may be replaced with L1-SINR. In this way, the network device may identify based on signaling whether the terminal device reports the predicted L1-RSRP or the measured L1-RSRP, thereby providing the network device with greater freedom.

Optionally, the determination made according to the fourth indication information may be determination made according to the value of the fourth indication information.

Optionally, the determination made according to the fourth indication information may be determination made based on whether the network device transmits or configures the fourth indication information.

In some embodiments, on the terminal device side, the method may further include: the terminal device reports a first terminal capability, the first terminal capability indicating a capability of the terminal device related to a subset in a resource set.

In some embodiments, on the network device side, the method may further include: the network device receives a first terminal capability, the first terminal capability indicating a capability of the terminal device related to a subset in a resource set.

In some embodiments, the first terminal capability indicates one or more of the following: configuring subsets in one resource set through RRC; indicating one or more subsets through an MAC CE; indicating one or more subsets through DCI; supporting subset-based measurement; and supporting subset-based reporting.

Optionally, the terminal device may report to the network device a first terminal capability indicating all or part of the above subset-related capability of the terminal device (e.g., RRC may configure a subset for one resource set, and/or an MAC CE may indicate one or more subsets, and/or DCI signaling may indicate one or more subsets, and/or the terminal may support subset-based measurement, and/or the terminal may support subset-based reporting).

In some embodiments, the first terminal capability may be transmitted through RRC or an MAC CE.

In some embodiments, the first terminal capability may be reported for a band; or,
the first terminal capability may be reported for each carrier on the band; or,
the first terminal capability may be reported for a band combination; or,
the first terminal capability may be reported for each band in the band combination; or,
the first terminal capability may be reported for each carrier on each band in the band combination; or,
the first terminal capability may be reported for a band range; or,
the first terminal capability may be reported for the UE.

Optionally, the first terminal capability may be reported for a band (i.e., capabilities corresponding to different bands may be independently reported per band). In this way, independent reporting per band enables the terminal to realize greater freedom, for example, the terminal may support this function on one or some bands, and not support this function on other bands, so that more terminals can support this new function.

Optionally, the first terminal capability may be independently reported per band combination. In this way, independent reporting per band combination enables the terminal to realize a greater freedom, for example, the terminal may not support this function in a certain band combination, but support this function in another band combination, so that more terminals can support this new function.

Optionally, the first terminal capability may be reported independently per band per band combination (i.e., reporting is performed independently per band per band combination), so that independent reporting per band combination enables the terminal to realize greater freedom, for example, the terminal may not support this function under a certain CA, but support this function in some bands under another CA combination, so that more terminals can support this new function.

Optionally, the first terminal capability may be independently reported per carrier per band per band combination (i.e., reporting may be performed independently per CC per band per band combination, or FSPC), so that the reporting is performed independently not only per band combination but also per cc per band, which enables the terminal to realize greater freedom and enables more terminals to support this new function.

Optionally, the first terminal capability may be reported per Frequency range (that is, the reporting may be performed per FR, that is, reporting is performed independently for FR1 and FR2), so that independent reporting per FR enables the terminal to realize greater freedom, for example, the terminal does not support this function at low frequency (FR1), but supports this function at FR2 (high frequency), so that more terminals can support this new function.

Optionally, the first terminal capability may be reported for the UE (i.e. per UE, that is, if the UE reports this capability, this capability can be supported in each band), thus reducing the signaling overhead of the terminal capability reporting.

In some embodiments, the first configuration information may be transmitted through RRC signaling.

In some embodiments, the first configuration information is associated with a first serving cell.

Optionally, the first configuration information is associated with a first serving cell, which includes: the first configuration information belongs to the first serving cell, that is, the first configuration information is configuration information in the first serving cell.

In some embodiments, the first configuration information indicates to report one or more of the following parameter information: Layer 1 reference signal received power (L1-RSRP), Layer 1 signal-to-interference-plus-noise ratio (L1-SINR), reference signal received power (RSRP), and signal-to-interference-plus-noise ratio (SINR).

Optionally, the first configuration information may carry a field "reportQuantity", and the value thereof may be cri-RSRP, or ssb-Index-RSRP, or cri-SINR, or ssb-Index-SINR.

In some embodiments, the one or more resource sets indicated by the first configuration information belong to a first set and/or a second set.

In some embodiments, resources in one or more resource sets in the first set are associated with a second serving cell, and/or resources in one or more resource sets in the second set are associated with a third serving cell.

Optionally, the resources in one or more resource sets in the first set are associated with the second serving cell, which includes: the resources in the one or more resource sets in the first set belong to the second serving cell, that is, the resources in the one or more resource sets in the first set are resources in the second serving cell.

Optionally, the resources in the one or more resource sets in the second set are associated with the third serving cell, which includes: the resources in the one or more resource sets in the second set belong to the third serving cell, that is, the resources in the one or more resource sets in the second set are resources in the third serving cell.

Optionally, the first serving cell and the third serving cell are the same serving cell, or the first serving cell and the third serving cell are different serving cells. Optionally, the second serving cell and the third serving cell are the same serving cell, or the second serving cell and the third serving cell are different serving cells. Optionally, the first serving cell and the third serving cell are the same serving cell, or the first serving cell and the third serving cell are different serving cells.

Optionally, based on the situations that the first serving cell and the third serving cell are the same serving cell, and/or the second serving cell and the third serving cell are the same serving cell, and/or the first serving cell and the third serving cell are the same serving cell, the configuration information and resources are in the same serving cell, so that the processing complexity of the system (including the UE) can be effectively reduced, and the difficulty of product implementation can be reduced.

Optionally, based on the situations that the first serving cell and the third serving cell being different serving cells, and/or the second serving cell and the third serving cell being different serving cells, and/or the first serving cell and the third serving cell being different serving cells, system flexibility can be increased, that is, the UE may measure resources (e.g. signal resources) of other cells, and then report measurement results in another cell, thereby improving the overall system performance.

In some embodiments, the one or more resource sets indicated by the first configuration information belong to a second set and/or a third set.

In some embodiments, resources and/or signals corresponding to resources in one or more resource sets in the second set are used for interference measurement; and/or,
resources in one or more resource sets in the third set are used for interference measurement.

Optionally, in any embodiment of the present disclosure, the resources in the third set do not actually correspond to an actual transmitted signal.

In some embodiments, the one or more resource sets indicated by the first configuration information belong to a first set and/or a second set.

In some embodiments, each resource in each of the one or more resource sets in the first set corresponds to one of: one signal, one signal resource, one reference signal, one reference signal resource; and/or,
each resource in each of the one or more resource sets in the second set corresponds to one of: one signal, one signal resource, one reference signal, one reference signal resource.

In some embodiments, the one or more resource sets indicated by the first configuration information belong to a first set and/or a second set.

In some embodiments, each of one or more resource sets in the first set indicates one or more of the following: one or more channel state information reference signal (CSI-RS) resources, and one or more synchronization signal blocks (SSBs); and/or,
each of the one or more resource sets in the second set indicates one or more of the following: one or more CSI-RS resources, and one or more SSBs.

Optionally, each of the one or more resource sets in the first set is for one or more of the following: channel measurement, and beam measurement.

Optionally, a specific resource set among the one or more resource sets indicates a CSI-RS resource, and the value of the field "repetition" in the RRC signaling corresponding to the specific resource set configuration is "on" or "off".

In some embodiments, the one or more resource sets indicated by the first configuration information belong to a third set.

In some embodiments, each of the one or more resource sets in the third set indicates one or more of: one or more time domain resources, one or more frequency domain resources, and one or more time-frequency resources.

Optionally, the one or more time domain resources, the one or more frequency domain resources, and the one or more time-frequency resources may be configured by a CSI Interference Management (IM) resource (i.e., CSI-IM resource).

In some embodiments, the first configuration information indicates that the corresponding reporting type includes one of periodic reporting, aperiodic reporting, or semi-persistent reporting.

In some embodiments, the terminal device may receive a plurality of pieces of first configuration information transmitted by the network device. Optionally, the plurality of pieces of first configuration information may be transmitted in the same RRC IE.

Optionally, different first configuration information among the plurality of pieces of first configuration information may include the same contents or different contents. For example, one piece of first configuration information indicates the first set and the second set, and the other piece of first configuration information indicates the first set, the second set, and the third set. For another example, one piece of first configuration information indicates the first set and the second set, and the other piece of first configuration information indicates the first set and the third set. For another example, one piece of first configuration information indicates the first set and the second set, and the other piece of first configuration information indicates the first set, the second set, or the third set. The examples are not enumerated one by one in the embodiments of the present disclosure.

It should be noted that in the embodiments of the present disclosure, any one or more optional solutions and/or any one or more solutions of the embodiments may be combined with each other as long as there is no conflict, which are not all enumerated in the embodiments of the present disclosure.

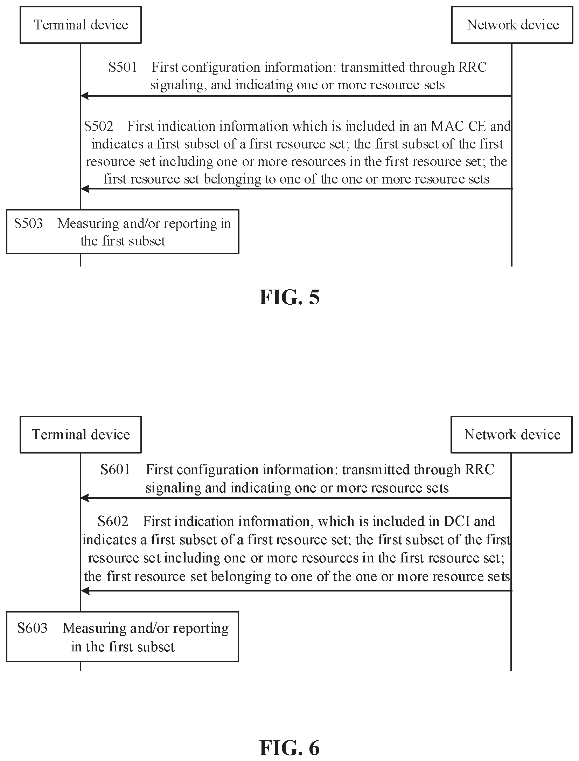

FIG. 5 is a schematic flow diagram of another communication method provided by an embodiment of the present disclosure. As shown in FIG. 5, the method includes:
S501: A network device transmits first configuration information to a terminal device, and the terminal device receives the first configuration information from the network device, the first configuration information being transmitted through RRC signaling and indicating one or more resource sets;
S502: The network device transmits first indication information to the terminal device, and the terminal device receives the first indication information from the network device, the first indication information being included in an MAC CE and indicating a first subset of a first resource set, the first subset of the first resource set including one or more resources in the first resource set, and the first resource set belonging to one of the one or more resource sets; and
S503: the terminal device performs measurement and/or reporting in the first subset.

FIG. 6 is a schematic flow diagram of another communication method provided by an embodiment of the present disclosure, and as shown in FIG. 6, the method includes:
S601: A network device transmits first configuration information to a terminal device, and the terminal device receives the first configuration information from the network device, the first configuration information being transmitted through RRC signaling and indicating one or more resource sets;
S602: The network device transmits first indication information to the terminal device, and the terminal device receives the first indication information from the network device, the first indication information being included in DCI and indicating a first subset of a first resource set, the first subset of the first resource set including one or more resources in the first resource set, the first resource set belonging to one of the one or more resource sets; and
S603: the terminal device performs measurement and/or reporting in the first subset.

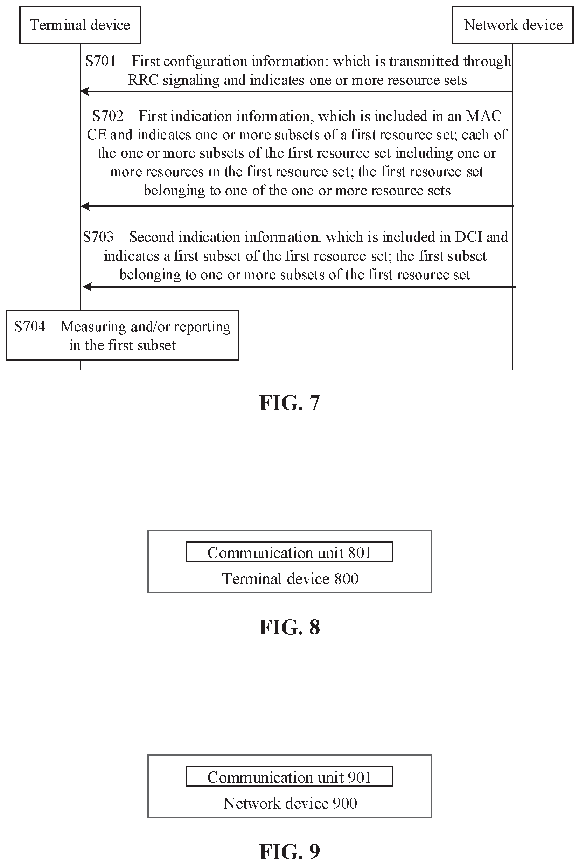

FIG. 7 is a schematic flow diagram of a communication method according to another embodiment of the present disclosure. As shown in FIG. 7, the method includes:
S701: A network device transmits first configuration information to a terminal device, and the terminal device receives the first configuration information from the network device, the first configuration information being transmitted through RRC signaling and indicating one or more resource sets;
S702: The network device transmits first indication information to the terminal device, and the terminal device receives the first indication information from the network device, the first indication information being included in an MAC CE and indicating one or more subsets of a first resource set, each of the one or more subsets of the first resource set including one or more resources in the first resource set, the first resource set belonging to one of the one or more resource sets;
S703: The network device transmits second indication information to the terminal device, and the terminal device receives the second indication information from the network device, the second indication information being included in DCI and indicating a first subset of the first resource set, the first subset belonging to one or more subsets of the first resource set; and
S704: The terminal device performs measurement and/or reporting in the first subset.

Note that, in the embodiments corresponding to FIGS. 5 to 7, the first subset of the first resource set as indicated by the first indication information or one or more subsets of the first resource set as indicated by the first indication information is an activated subset. In other embodiments, the first subset of the first resource set as indicated by the first indication information or one or more subsets of the first resource set as indicated by the first indication information may be a deactivated subset, so that the terminal device does not measure and/or report in the indicated first subset of the first resource set or the indicated one or more subsets of the first resource set.

Note that, in the embodiment corresponding to FIG. 7, the first subset of the first resource set as indicated by the second indication information is an activated subset, and in other embodiments, the first subset of the first resource set as indicated by the first indication information may be a deactivated subset, so that the terminal device does not measure and/or report in the indicated first subset of the first resource set.

It should be noted that in the embodiments corresponding to FIGS. 5 to 7, the network device indicates the first subset, and the terminal device performs measurement and/or reporting in the first subset. In other embodiments, when the network device indicates the second subset, the terminal device performs measurement and/or reporting in the second subset, and/or when the network device indicates the third subset, the terminal device performs measurement and/or reporting in the third subset.

Some embodiments of the present disclosure are described below.

Embodiments regarding the first configuration information:
A first terminal device (UE) receives first configuration information from the network device, the first configuration information indicating a first set, the first set including one or more resource sets, wherein each resource set includes one or more resources, and the resource may correspond to a signal (e.g., SSB), may correspond to a reference signal (e.g., CSI-RS), or may correspond to a reference signal resource (e.g., CSI-RS resource). Therefore, the resource set may also be referred to as a signal resource set (A set of RS resources, or a RS resource set).

Optionally, the first configuration information may be transmitted through RRC signaling, so that the protocol design is simple and reliable.

Optionally, the first configuration information belongs to a first serving cell (or carrier), that is, the first configuration information belongs to configuration information in the first serving cell.

Optionally, the resources in one or more resource sets in the first set belong to a second serving cell, i.e., the resources in one or more resource sets in the first set are resources in the second serving cell.

Optionally, the first serving cell and the second serving cell are the same serving cell, that is, the first configuration information configures resources in the same cell. In this way, the configuration information and the resource are in the same serving cell, and the processing complexity of the system (including the UE) can be effectively reduced, thereby reducing the difficulty of product implementation.

Optionally, the first serving cell and the second serving cell are different serving cells, that is, the first configuration information configures resources in other cells. In this way, system flexibility can be increased, that is, the UE may measure resources (e.g. signal resources) of other cells and then report the measurement results in another cell, thereby improving the overall performance of the system.

For example, when the resource corresponds to a reference signal resource or a reference signal, the first configuration information indicates some or all of the following corresponding information (information corresponding to the reference signal resource or the reference signal):
Type of the signal/reference signal;
Identifier or number of the signal/reference signal;
Resource corresponding to the signal/reference signal (e.g. frequency domain resource, or time domain resource, or time domain-frequency domain resource);
Power information corresponding to the signal/reference signal;
Scrambling information corresponding to the signal/reference signal, e.g. said scrambling information is used to produce a signal/reference signal sequence; and
QCL information or TCI-state information corresponding to the signal/reference signal.

Optionally, in an NR system (when NR is used as an example, the corresponding technical solution is not limited to NR and may be used in other communication systems, which will not be repeated), each of one or more resource sets in the first set may indicate one or more CSI-RS resources, or may indicate one or more SSBs (SS/PBCH blocks), or may indicate both CSI-RS resources and SSBs. Assuming that a resource set is labeled as ResourceSet, a set of resources may be indicated by a SEQUENCE structure (a structure of RRC signaling), for example, SEQUENCE (SIZE (maximum number of resources in a set)) OF resource related information.

Optionally, the resource-related information may have different options, such as:
Option 1: The resource-related information indicates a CSI-RS resource;
Option 2: The resource-related information indicates an SSB (or SS/PBCH block); and
Option 2: The resource-related information indicates an SSB (or SS/PBCH block) or indicates a CSI-RS resource;
Optionally, each resource set in the first set is used for channel measurement, or for beam measurement, or for both channel measurement and beam measurement, so that channel measurement and beam measurement can be completed simultaneously and system overhead can be reduced. In other words, resources or reference signals (or reference signal resources) in one or more resource sets in the first set are used for channel measurement, or for beam measurement, or for both channel measurement and beam measurement. For example, the UE may perform channel measurement and/or beam measurement based on the resource set, and on this basis, the UE may further report the measurement result to the network. For another example, in the NR system, if one of the above-described resource sets indicates a CSSI-RS resource, the resource set configures a field "repetition" in the corresponding RRC signaling, and the value thereof may be "on" or "off".

Optionally, the first configuration information may further indicate to report L1-RSRP, or L1-SINR, or RSRP, or SINR. For example, in the NR system, there may be a field "reportQuantity" in the first configuration information, and the value thereof may be cri-RSRP, ssb-Index-RSRP, cri-SINR, or ssb-Index-SINR.

Optionally, the first configuration information indicates only the first set. For example, when the first configuration information indicates the first set (but does not indicate the second set or the third set mentioned subsequently), the terminal device may perform channel measurement based on one or more resource sets in the first set according to the network configuration information, and may further report the measurement result to the network (for example, the RSRP result or the L1-RSRP result may be reported).

The description of the second set begins below:
Optionally, on the basis of the above, the first configuration information may further indicate a second set, the second set includes one or more resource sets, and the resource in the second set may correspond to a signal (for example, an SSB), may correspond to a reference signal (for example, a CSI-RS), or may correspond to a reference signal resource (for example, a CSI-RS resource).

Optionally, each resource set in the second set is used for interference measurement. In other words, resources or reference signals (or reference signal resources) in one or more resource sets in the second set are used for interference measurement.

Optionally, the resources in one or more resource sets in the second set belong to the third serving cell, i.e. the resources in one or more resource sets in the second set are resources in the third serving cell.

Optionally, the first serving cell and the third serving cell are the same serving cell, that is, the first configuration information configures resources in the same cell. In this case, the first serving cell, the second serving cell and the third serving cell may be the same serving cell. In this way, the configuration information and the resource are in the same serving cell, and the processing complexity of the system (including the UE) can be effectively reduced, thereby reducing the difficulty of product implementation.

Optionally, the first serving cell and the third serving cell are different serving cells, that is, the first configuration information configures resources in other cells for the second set. In this way, system flexibility can be increased, that is, the UE may measure resources (e.g. signal resources) of other cells and then report the measurement result in another cell, thereby improving the overall performance of the system. Optionally, the second serving cell and the third serving cell may be the same serving cell. In this way, the measurement channel/beam and the measurement interference resource belong to the same cell, which can better reflect the communication quality.

For example, when the resource in the second set correspond to a reference signal resource or a reference signal, the first configuration information indicates some or all of the following corresponding information (information corresponding to the reference signal resource or the reference signal):
Type of the signal/reference signal;
Identifier or number of the signal/reference signal;
Resource corresponding to the signal/reference signal (e.g. frequency domain resource, or time domain resource, or time domain-frequency domain resource);
Power information corresponding to the signal/reference signal;
Scrambling information corresponding to the signal/reference signal, e.g. said scrambling information is used to produce a signal/reference signal sequence; and
QCL information or TCI-state information corresponding to the signal/reference signal.

Optionally, in the NR system, each of the one or more resource sets in the second set may indicate one or more CSI-RS resources. Optionally, the resource set may indicate a set of CSI-RS resources through a SEQUENCE structure (a structure of RRC signaling).

Optionally, the first configuration information indicates a first set and a second set. For example, when the first configuration information indicates the first set and the second set at the same time, the terminal device may, according to the network configuration information, perform channel measurement based on one or more resource sets in the first set and perform interference measurement based on the corresponding one or more resource sets in the second set, and then the terminal device determines a report to the network based on the measurement result (for example, the SINR result or the L1-SINR result may be reported). In this way, the UE may directly measure other interfering beams, so that the communication quality information can be obtained more accurately and the overall performance of the system is improved.

The description of the third set begins below:
Optionally, on the basis of the above, the first configuration information may further indicate a third set, the third set includes one or more resource sets, and the resource in the third set may correspond to a frequency domain resource, a time domain resource, or a time domain-frequency domain resource.

For example, the first configuration information for the resource in the third set may indicate information corresponding to some or all of the following:

An identifier or number of the resource;
A resource (e.g., a frequency domain resource, or a time domain resource, or a time domain-frequency domain resource) corresponding to the signal/reference signal, for example, a corresponding subcarrier position, a corresponding symbol position, an occupied PRB resource, a period, and an offset.

Optionally, each resource set in the third set is used for interference measurement. In other words, resources in one or more resource sets in the third set are used for interference measurement.

Optionally, the resource set in the third set and the corresponding resource set in the first set belong to the same serving cell. In this way, the resources for channel/beam measurement and the resources for interference measurement belong to the same cell, which can better reflect the communication quality.

Optionally, the first configuration information indicates a first set and a third set. For example, when the first configuration information indicates the first set and the third set at the same time, the terminal device may, according to the network configuration information, perform channel measurement based on one or more resource sets in the first set and perform interference measurement based on the corresponding one or more resource sets in the third set, and then the terminal device determines a report to the network based on the measurement result (for example, the SINR result or the L1-SINR result may be reported). In this way, the UE can measure the total interference of other cells or other beams, so that the communication quality information can be obtained more accurately and the overall performance of the system can be improved.

Optionally, the first configuration information indicates a first set, a second set, and a third set. For example, when the first configuration information indicates the first set, the second set, and the third set at the same time, the terminal device may, according to the network configuration information, perform channel measurement based on one or more resource sets in the first set, perform interference measurement based on one or more resource sets corresponding to the second set, and perform interference measurement based on one or more resource sets corresponding to the third set, and then the terminal device determines a report to the network based on the measurement results (for example, a SINR result or an L1-SINR result may be reported). In this way, the UE can directly measure the interference of a specific cell or beam, and also measure the total interference of other cells or other beams, so that the communication quality information can be obtained more accurately and the overall performance of the system can be improved.

The description with respect to the third set ends.

Optionally, the first configuration information may indicate that the corresponding reporting type is Periodic, Aperiodic, or Semi-persistent.

Optionally, the terminal device may receive a plurality of pieces of first configuration information from the network device, and the plurality of pieces of first configuration information includes one or more of the following: one or more first sets, one or more second sets, and one or more third sets.

Optionally, the terminal device may receive a plurality of pieces of first configuration information from the network device, and the plurality of pieces of first configuration information includes one of the following, that is, the network device may configure the terminal device with one of the following:
A plurality of first sets;
A plurality of first sets and a plurality of second sets;
A plurality of first sets and one second set;
A plurality of first sets and a plurality of third sets (for example, one piece of first configuration information indicates one first set and one third set at the same time, another piece of first configuration information indicates only one first set, and other cases are similar, which are easily obtained by similar expansion, and no examples are given one by one);
A plurality of first sets and one third set;
A plurality of first sets, a plurality of second sets, and a plurality of third sets;
A plurality of first sets, one second set, and a plurality of third sets;
A plurality of first sets, a plurality of second sets, and one third set;
A plurality of first sets, one second set, and one third set.

Optionally, the plurality of pieces of first configuration information may be transmitted through the same RRC signaling. In this way, it is convenient to share part of the information in the same RRC signaling transmission, thus reducing the overall signaling overhead. Optionally, the plurality of pieces of first configuration information may be transmitted through different RRC signaling. In this way, the signaling design is simple, the network transmission configuration has better flexibility.

Optionally, the plurality of pieces of first configuration information is the same configuration information. In this way, the same configuration information indicates more contents, which facilitates sharing of some information, thus reducing the overall signaling overhead. In some embodiments, the plurality of pieces of first configuration information may be different configuration information. In this way, different pieces of configuration information are indicated individually, and the design of signaling and protocols can be simplified. At the same time, when the network sends the corresponding configuration, it also has better flexibility.

### Embodiment 1 (Direct Activation via MAC CE)

On the basis of any one of the embodiments regarding the first configuration information, the terminal device receives first information from the network device, the first information indicating one or more resources (or signal resources, assuming L2, L2 < = L1) among resources (assuming L1) included in the first resource set, and for convenience of description, the indicated one or more resources may be referred to as a first subset. In an actual system, this subset may be explicitly defined, or this subset may be not defined (in the present disclosure, the term "first subset" is used for convenience of description and refers to the one or more resources, indicated by the first information, of the first resource set). The first resource set belongs to one resource set among the one or more resource sets in the first set, and the first information is transmitted through first MAC CE information. Thus, compared with the scheme of configuring subsets through RRC, using the MAC CE to directly indicate and activate some resources can effectively reduce signaling overhead and processing delay.

Assume that X1 resource sets are indicated in the first set (denoted as G1 for convenience of description). In order to simplify the description, taking X1 = 2 as an example, other values of X1 may be directly extended, which is not enumerated one by one. These two resource sets are denoted as G1_S1 and G1_S2, respectively, where G1_S1 includes resources {A1, A2, A3, A4, A5, A6, A7, A8} ( In order to simplify the description, take 8 resources as an example, other quantities can be directly extended thereto, such as 16, 32), and G1_S2 includes resources {B1, B2, B3,...}. X1 may be 1, and only one resource set G1_S1 needs to be considered in this case.

For example, the first information may indicate one or more resources in the resource set G1_S1, e.g., indicating resource {A1, A2, A3, A4} (for simplicity of description, 4 resources in a subset is indicated as an example, and other quantities may be directly extended thereto, e.g., 2, 5, 6, 8, etc.), and the indicated resource {A1, A2, A3, A4} may be referred to as the first subset. In this case, the resource set G1_S1 belongs to the first resource set.

There may be different schemes to specifically indicate which resources are included the first subset.

As an example, indicating which resources are included the first subset refers to use of a bitmap to indicate which resources in the first resource set belong to the first subset. For example, the first subset of G1_S1 is indicated through an 8-bit bitmap, where four bits with a value of 1 indicates resources A1, A2, A3, A4. Optionally, the 4 bits with a value of 1 may be the first 4 bits (the 4 bits on the left) or the last 4 bits (the 4 bits on the right). In this way, when the quantity of resources in the sub-set is large, or when the quantity of resources in the first resource set is large, the signaling overhead can be reduced as compared with the next scheme.

Optionally, indicating which resources are included in the first subset refers to indicating which resources in the first resource set belong to the first subset by indicating one or more numbers, wherein the numbers are the indexes of resources within the first resource set, for example, 0 may correspond to the first resource within the first resource set, and 1 may correspond to the second signal within the first resource set. For example, for the first subset of the resource set G1_S1, the numbers 0, 1, 2, and 3 may be directly indicated to correspond to the first, second, third and fourth resources in the resource set G1_S1, that is, corresponding to resources A1, A2, A3, and A4, respectively; or the numbers 1, 2, 3, and 4 may be directly indicated to correspond to the first, second, third and fourth resources in the resource set G1_S1, that is, corresponding to resources A1, A2, A3, and A4, respectively. In this way, when the quantity of resources in the sub-set is small, or when the quantity of resources in the first resource set is small, the signaling overhead can be reduced as compared with the previous scheme.

As an example, indicating which resources are included in the first subset refers to indicating which resources in the first resource set belong to the first subset by indicating one or more identifiers, wherein the identifiers are identifiers in resource configuration information. For example, for the first subset of G1_S1, identifiers corresponding to A1, A2, A3, and A4 may be directly indicated, and the corresponding identifiers may be included in the configuration information of the resources A1, A2, A3, and A4. For example, when the resource is a CSI-RS resource (the CSI-RS resource here is used to actually transmit a CSI-RS signal, and thus may be called an NZP-CSI-RS-Resource, and NZP refers to non-zero-power), the identifier in the NR system is nzp-CSI-RS-ResourceId. In this way, directly using the identifier of the CSI-RS resource itself can simplify the processing of the UE, but the disadvantage is that the overhead of RRC signaling may be increased.

Optionally, the first information may indicate one or more resources of a plurality of first resource sets. As an example, the first information may indicate L4 resources among resources included in the resource set G1_S2, and when the resource set G1_S2 includes L3 resources, it is L4 < = L3. In this case, the resource set G1_S2 belongs to the first resource set. As yet another example, the first information may indicate L5 (1 < = L5 < = L1) and L6 (1 < = L6 < = L3) resources among the resources included in the resource set G1_S1 and the resource set G1_S2, respectively, in which case the resource set G1_S1 and the resource set G1_S2 belong to the first resource set.

Regarding configuring subsets for resource sets in the second set and the third set:
The sub-sets in resource sets in the second set and the third set may be configured using similar methods as described above, and the similar contents will not be repeated. For example:
On the basis of any of the foregoing, the terminal device receives second information from the network device, the second information indicating one or more resources (or signal resources) among the resources included in the second resource set. For convenience of description, the indicated one or more resources may be called a second subset. In an actual system, this subset may be explicitly defined or may be not defined (In this case, the term "second subset" is used for convenience of description and refers to the one or more resources, indicated by the second information, of the second resource set). The second resource set belongs to one of the one or more resource sets in the second set, the second information being transmitted through second MAC CE information.

On the basis of any of the foregoing, the terminal device receives third information from the network device, the third information indicating one or more resources (or signal resources) among the resources included in the third resource set. For convenience of description, the indicated one or more resources may be referred to as a third subset. In an actual system, this subset may be explicitly defined or may be not defined (In this case, the term "third subset" is used for convenience of description, and refers to the one or more resources, indicated by the third information, of the third resource set). The third resource set belongs to one of the one or more resource sets in the third set, the third information being transmitted through third MAC CE information.

Optionally, the second information and the first information are different indication information. Further, the second MAC CE and the first MAC CE are different MAC CEs. In this way, different indication information (MAC CE) is adopted, and the signaling design is more flexible.

Optionally, the third information and the first information are different indication information. Further, the third MAC CE and the first MAC CE are different MAC CEs. In this way, different indication information (MAC CE) is adopted, and the signaling design is more flexible.

Optionally, the second information and the first information are the same indication information. Further, the second MAC CE and the first MAC CE are the same MAC CE. In this way, the same indication information (MAC CE) is used, so that there can be more optimizations in the design and the overall signaling overhead can be reduced.

Optionally, the third information and the first information are the same indication information. Further, the third MAC CE and the first MAC CE are the same MAC CE. In this way, the same indication information (MAC CE) is used, so that there can be more optimizations in the design and the overall signaling overhead can be reduced.

Optionally, the second information, the third information and the first information are the same indication information. Further, the second MAC CE, the third MAC CE and the first MAC CE are the same MAC CE. In this way, the same indication information (MAC CE) is used, so that there can be more optimizations in the design and the overall signaling overhead can be reduced.

Different embodiments are described below, taking the first MAC CE as an example. If the second MAC CE and/or the third MAC CE are not the same MAC CE as the first MAC CE, the following related embodiments may be directly extended to the second MAC CE and the third MAC CE. The specific contents are similar and are not repeated.

Optionally, the first MAC CE indicates a first serving cell (or called a carrier), the first information indicates the Serving Cell for which the MAC CE applies. As an example, the first MAC CE may indicate the first serving cell via a Serving Cell ID.

Optionally, the first MAC CE indicates a first BWP, and the first information indicates the first BWP for which the MAC CE applies. As an example, the first MAC CE may indicate the first BWP via a BWP ID.

Optionally, the first MAC CE indicates a second serving cell (or called a carrier) and the resources (or signal resources) in a first subset are located in the second serving cell (or belonging to the second serving cell), so that measured signals and/or resources of other cells can be flexibly indicated. As an example, the first MAC CE may indicate the second serving cell via a Serving Cell ID. As an example, if the first MAC CE further indicates a second subset, then the resources (or signal resources) within the second subset are in the second serving cell. As an example, if the first MAC CE further indicates a third subset, then resources within the third subset are in the second serving cell.

Optionally, the first MAC CE does not indicate a second serving cell (or called a carrier), and resources (or signal resources) within the first subset are in (or belong to) the first serving cell, so that signaling overhead can be reduced. Compared with the above scheme, the cost is that the measured signals of other cells/carriers cannot be indicated. As an example, if the first MAC CE further indicates a second subset, then the resources (or signal resources) within the second subset are in the first serving cell. As an example, if the first MAC CE further indicates a third subset, then resources within the third subset are in the first serving cell.

Optionally, the first MAC CE indicates a second BWP, and resources (or signal resources) within the first subset are in (or belong to) the second BWP, so that signals and/or resources measured at other BWPs can be flexibly indicated. As an example, the first MAC CE may indicate the second BWP via a BWP ID. As an example, if the first MAC CE further indicates a second subset, then the resources (or signal resources) within the second subset are in the second BWP. As an example, if the first MAC CE further indicates a third subset, then resources within the third subset are in the second BWP.

Optionally, the first MAC CE does not indicate a second BWP, and resources (or signal resources) within the first subset are in (or belong to) the first BWP, so that signaling overhead can be reduced. Compared with the above scheme, the cost is that the measured signal of other BWPs cannot be indicated. As an example, if the first MAC CE further indicates a second subset, the resources (or signal resources) within the second subset are in the first BWP. As an example, if the first MAC CE further indicates a third subset, resources within the third subset are in the first BWP.

Optionally, the first information indicates a first reporting configuration. As an example, the first reporting configuration indicates a first set or a first resource set, so that the information such as a serving cell and a BWP of the first resource set may be less indicated, thereby reducing signaling overhead.

Taking a 5G/NR system as an example (which may also be applied to other systems; similar cases elsewhere are not repeated here for brevity), the first reporting configuration may be a channel state information reporting configuration (CSI-ReportConfig). Optionally, the first information indicates a CSI-ReportConfig. Optionally, the first information may indicate an ID of a CSI-ReportConfig, thereby indicating the CSI-ReportConfig. For example, the ID of the CSI-ReportConfig may be a CSI-reportConfigId or a reportConfigId.

When the first information indicates the first reporting configuration, the first information may no longer indicate the second serving cell, or may no longer indicate the second BWP. The serving cell/BWP in which the first subset is located may be determined according to the first reporting configuration.

Optionally, the first information indicates a first aperiodic activation state. As an example, the first aperiodic activation state indicates a first set or a first resource set, so that the information such as serving cells, BWPs, and the like of the first resource set may be less indicated, thereby reducing signaling overhead.

Taking a 5G/NR system as an example, the first aperiodic activation state may be a channel state information aperiodic trigger state. Optionally, the channel state information aperiodic trigger state (CSI-AperiodicTriggerState) may be a CSI-AperiodicTriggerState. Optionally, the first information may indicate a number, thereby indicating the CSI-AperiodicTriggerState. For example, the number 0 corresponds to the first CSI-AperiodicTriggerState in the CSI-AperiodicTriggerStateList, the number 1 corresponds to the second CSI-AperiodicTriggerState in the CSI-AperiodicTriggerStateList, and so on. For another example, the number 1 corresponds to the first CSI-AperiodicTriggerState in the CSI-AperiodicTriggerStateList, the number 2 corresponds to the second CSI-AperiodicTriggerState in the CSI-AperiodicTriggerStateList, and so on.

When the first information indicates the first aperiodic activation state, the first information may no longer indicate the second serving cell or may no longer indicate the second BWP. The serving cell and the BWP in which the first subset is located may be determined according to the first reporting configuration.

Hereinafter, the MAC CE will be described by taking the first MAC CE as an example. The description of the second MAC CE and the third MAC CE is similar to the description of the first MAC CE, and will not be repeated herein.

### Example 1 of MAC CE

As an example, the first MAC CE includes one or more of the following pieces of information (the order is not limited, and the positions of the information in other embodiments may be changed and are not restricted, which is merely for illustrative purposes; some of additionally listed information may be omitted; similar contents apply to other subsequent parts, which will not be repeated here one by one):
Serving-cell indication information, for indicating a first serving cell;
Resource-set indication information, for indicating a first resource set; and
Resource indication information, for indicating one or more resources (i.e., a first subset) in a first resource set.

Optionally, the resource indication information may be indicated via a bitmap; a bit with a value of 1 means that a corresponding resource in the first resource set is indicated or activated. Optionally, the resource indication information may indicate or activate a corresponding resource in the first resource set by indicating a number or an identifier of one or more resource sets.

The first resource set is in the first serving cell. The first MAC CE is applied to the first serving cell.

### Example 2 of MAC CE

As an example, the first MAC CE includes one or more of information below:
Serving-cell indication information, for indicating a first serving cell;
Reporting configuration indication information, for indicating a first reporting configuration;
Resource-set indication information, for indicating a first resource set; and
Resource indication information, for indicating one or more resources (i.e., a first subset) in a first resource set.

Optionally, the resource indication information may be indicated via a bitmap, and when a bit value is 1, it represents that a corresponding resource in the first resource set is indicated or activated. Optionally, the resource indication information may indicate or activate a corresponding resource in the first resource set by indicating a number or an identifier of one or more resource sets.

The first MAC CE is applied to the first serving cell. The serving cell corresponding to the first resource set is indicated by the first reporting configuration.

As an example, the above "resource-set indication information" is not necessarily included in the first MAC CE. In this case, the "resource indication information" is applied to all resource sets indicated by the first reporting configuration.

Take 5G/NR as an example:
If the first reporting configuration indicates a resource set resourcesForChannelMeasurement (resources for channel measurement), the "resource indication information" is applied to the resource set resourcesForChannelMeasurement.
If the first reporting configuration indicates resource sets resourcesForChannelMeasurement and nzp-CSI-RS-ResourcesForInterference (NZP-CSI-RS-Resource for interference), the "resource indication information" is applied to the resource sets resourcesForChannelMeasurement and nzp-CSI-RS-ResourcesForInterference.
If the first reporting configuration indicates resource sets resourcesForChannelMeasurement and csi-IM-ResourcesForInterference (csi-IM-Resources for interference), the "resource indication information" is applied to the resource sets resourcesForChannelMeasurement and csi-IM-ResourcesForlnterference.
If the first reporting configuration indicates resource sets resourcesForChannelMeasurement, csi-IM-ResourcesForInterference and nzp-CSI-RS-ResourcesForInterference, the "resource indication information" is applied to the resource sets resourcesForChannelMeasurement, csi-IM-ResourcesForInterference and nzp-CSI-RS-ResourcesForInterference.
In the above example, if resourcesForChannelMeasurement (or csi-IM-ResourcesForInterference or nzp-CSI-RS-ResourcesForInterference) itself include a plurality of resource sets, the "resource indication information" is applied to the plurality of resource sets, or to a certain resource set thereof (said certain resource set is originally specified according to a protocol or determined according to a network configuration).

An extension of Example 2 of MAC CE is that the MAC CE may indicate a plurality of pieces of reporting configuration indication information, wherein:
Option 1: A plurality of pieces of "reporting configuration indication information" correspond to the same "resource indication information" (Example 2A); and
Option 2: Each of the plurality of "reporting configuration indication information" corresponds to one piece of "resource indication information" (Example 2B).

2 is taken as an example below, which mainly lists differential information. Some information similar to other examples is not listed one by one.

### Example 2A of MAC CE

As one example, the first MAC CE includes one or more of information below:
Serving-cell indication information, for indicating a first serving cell;
Reporting configuration indication information 1, for indicating one report configuration;
Reporting configuration indication information 2, for indicating another reporting configuration; and
Resource indication information, for indicating one or more resources in the first resource set.

Optionally, the resource indication information may be indicated via a bitmap, and when a bit value is 1, it represents that a corresponding resource in the first resource set is indicated or activated. Optionally, the resource indication information may indicate or activate a corresponding resource in the first resource set by indicating a number or an identifier of one or more resource sets.

### Example 2B of MAC CE

As an example, the first MAC CE includes one or more of information below:
Serving-cell indication information, for indicating a first serving cell;
Reporting configuration indication information 1, for indicating one reporting configuration;
Reporting configuration indication information 2, for indicating another reporting configuration;
Resource indication information 1, for indicating one or more resources in a resource set;
Resource indication information 2, for indicating one or more resources in a resource set.

### Example 3 of MAC CE

As an example, the first MAC CE includes one or more of information below:
Serving-cell indication information, for indicating a first serving cell;
Aperiodic-activation-state indication information, for indicating a first aperiodic activation state;
Resource-set indication information, for indicating a first resource set; and
Resource indication information, for indicating one or more resources (i.e., a first subset) in a first resource set.

Optionally, the resource indication information may be indicated via a bitmap, wherein when a bit value is 1, it represents that a corresponding resource in the first resource set is indicated or activated. Optionally, the resource indication information may indicate or activate a corresponding resource in the first resource set by indicating a number or an identifier of one or more resource sets.

The first MAC CE is applied to the first serving cell. The serving cell corresponding to the first resource set is indicated through the first aperiodic activation state.

As an example, the above "resource-set indication information" is not necessarily included in the first MAC CE. In this case, the "resource indication information" is applied to all resource sets indicated by the first aperiodic activation state.

### Take 5G/NR as an example:

If the first aperiodic activation state indicates a resource set resourcesForChannel, the "resource indication information" is applied to the resource set resourcesForChannel.

If the first aperiodic activation state indicates resource sets resourcesForChannel and csi-IM-ResourcesForInterference, "resource indication information" is applied to the resource sets resourcesForChannel and csi-IM-ResourcesForInterference.

If the first aperiodic activation state indicates resource sets resourcesForChannel and csi-IM-ResourcesForInterference, the "resource indication information" is applied to the resource sets resourcesForChannel and csi-IM-ResourcesForInterference.

If the first aperiodic activation state indicates resource sets resourcesForChannel, csi-IM-ResourcesForInterference, and nzp-CSI-RS-ResourcesForInterference, the "resource indication information" is applied to the resource sets resourcesForChannel, csi-IM-ResourcesForInterference, and nzp-CSI-RS-ResourcesForInterference.

In the above examples, if the resourcesForChannel (or csi-IM-ResourcesForInterference, or nzp-CSI-RS-ResourcesForInterference) itself includes a plurality of resource sets, the "resource indication information" is applied to the plurality of resource sets, or to a certain resource set thereof (said certain resource set is originally specified according to a protocol or determined according to a network configuration).

An extension of Example 3 of MAC CE is that the MAC CE may indicate a plurality of pieces of reported aperiodic activation state indication information, wherein:
Option 1: A plurality of "aperiodic activation state indication information" correspond to the same "resource indication information" (Example 3A); and
Option 2: A plurality of "aperiodic activation state indication information" each corresponds to one "resource indication information" (Example 3B).

2 is taken as an example below, which mainly lists differential information. Some information similar to other examples is not listed one by one.

### Example 3A of MAC CE

As an example, the first MAC CE includes one or more of information below:
Serving-cell indication information, for indicating a first serving cell;
Aperiodic-activation-state indication information 1, for indicating an aperiodic activation state;
Aperiodic-activation-state indication information 2, for indicating another aperiodic activation state; and
Resource indication information, for indicating one or more resources in the resource set.

Optionally, the resource indication information may be indicated via a bitmap, wherein when a bit value is 1, it represents that a corresponding resource in the first resource set is indicated or activated. Optionally, the resource indication information may indicate or activate a corresponding resource in the first resource set by indicating a number or an identifier of one or more resource sets.

### Example 3B of MAC CE

As an example, the first MAC CE includes one or more of information below:
Serving-cell indication information, for indicating a first serving cell;
Aperiodic-activation-state indication information 1, for indicating an aperiodic activation state;
Aperiodic-activation-state indication information 2, for indicating another aperiodic activation state;
Resource indication information 1, for indicating one or more resources in a resource set; and
Resource indication information 2, for indicating one or more resources in a resource set.

### Example 4 of MAC CE

As an example, the first MAC CE includes one or more of information below:
Serving-cell indication information, for indicating a first serving cell;
BWP indication information, for indicating a first BWP (or a first DL BWP);
Resource set indication information, for indicating a first resource set; and
Resource indication information, for indicating one or more resources in a first resource set (i.e., a first subset).

There are some different options, such as:
Option 1: The first resource set is in the first serving cell, and the first MAC CE is applied to the first BWP of the first serving cell; and
Option 2: The first resource set is in the first BWP of the first serving cell, and the first MAC CE is applied to the first BWP of the first serving cell.

### Example 5 of MAC CE

As an example, the first MAC CE includes one or more of information below:
Serving-cell indication information, for indicating a first serving cell;
BWP indication information, for indicating a first BWP (or a first DL BWP);
Resource-set indication information 1, for indicating a first resource set;
Resource indication information 1, for indicating one or more resources corresponding to the first resource set;
Resource set indication information 2, for indicating another resource set; and
Resource indication information 2, for indicating one or more resources corresponding to the other resource set.

There are some different options, such as:
Option 1: The first resource set and the other resource set are in the first serving cell, and the first MAC CE is applied to the first BWP of the first serving cell; and
Option 2: The first resource set and the other resource set are in the first BWP of the first serving cell, and the first MAC CE is applied to the first BWP of the first serving cell.

### Example 6 of MAC CE

As an example, the first MAC CE includes one or more of information below:
Serving-cell indication information 1, for indicating a first serving cell;
BWP indication information 1, for indicating a first BWP (or a first DL BWP);
Serving-cell indication information 2, for indicating a second serving cell;
Resource-set indication information, for indicating a first resource set; and
Resource indication information, for indicating one or more resources corresponding to the first resource set.

The first MAC CE is applied to the first BWP of the first serving cell, and the first resource set has some different options, such as:
Option 1: The first resource set is in the second serving cell; and
Option 2: The first resource set is in the first BWP in the second serving cell.

### Example 7 of MAC CE

As an example, the first MAC CE includes one or more of information below:
Serving-cell indication information 1, for indicating a first serving cell;
BWP indication information 1, for indicating a first BWP (or a first DL BWP);
Serving-cell indication information 2, for indicating a second serving cell;
BWP indication information 2, for indicating a second BWP (or a second DL BWP);
Resource-set indication information, for indicating a first resource set; and
Resource indication information, for indicating one or more resources (i.e., the first subset) corresponding to the first resource set.

The first MAC CE is applied to the first BWP of the first serving cell and the second BWP in the second serving cell of the first resource set.

Optionally, in each of the preceding MAC CE examples, the resource indication information may indicate one or more resources by means of:
a bitmap;
one or more numbers, wherein the number is the index of the resource within the first resource set; and
one or more identifiers: for example, if the resource is a CSI-RS resource (the CSI-RS resource here is used to actually transmit a CSI-RS signal, and thus may be referred to as an NZP-CSI-RS-Resource, NZP referring to non-zero-power), then the identifier of the resource in the NR system is nzp-CSI-RS-ResourceId.

On the basis of any of the foregoing, optionally, if the measurement and/or reporting (or a certain measurement and/or reporting; the following are similar and will not be repeated) of the terminal device corresponds to the first resource set (for example, the first resource set is indicated in the configuration corresponding to the current measurement and/or reporting), the terminal device may perform measurement and/or reporting based on the first subset.

Optionally, if the first configuration information configuration indicates the second set and the second subset is also indicated by the network, the terminal device may perform measurement and/or report further based on the second subset (i.e. on the basis of the first subset; the latter is similar), so that the system can be assisted in better selection of beams by measuring interference.

Optionally, if the first configuration information configuration indicates the third set, and the third subset is also indicated by the network, the terminal device may measure and/or report further based on the third subset, so that the system can be assisted in better selection of beams by measuring interference.

Optionally, if the first configuration information configuration indicates the second set, but the network does not indicate the second subset, the terminal device may perform measurement and/or reporting further based on the second subset, the second subset being determined according to a second predetermined rule (e.g., a rule specified by a protocol) or according to a network configured correspondence between a subset of the first resource set and a subset of the second resource set (e.g., the network indicates the correspondence through a RRC parameter), or the second subset being the second resource set, thereby reducing signaling overhead.

Optionally, if the first configuration information indicates the third set, but the network does not indicate the third subset, the terminal device may perform measurement and/or reporting further based on the third subset, the third subset being determined according to a second predetermined rule (e.g., a rule specified by a protocol) or according to a network configured correspondence between a subset of the first resource set and a subset of the third resource set (e.g., the network indicates the correspondence through a RRC parameter), or the third subset being the third resource set, thereby reducing signaling overhead.

Optionally, if the measurement and/or reporting of the terminal device correspond(s) to the first resource set (e.g., the first resource set is indicated in the configuration corresponding to the current measurement and/or reporting) and the terminal device does not receive the first information, the terminal device may perform measurement and/or reporting based on the first resource set (i.e., based on the first resource set itself, not its subsets), thus defining the default behavior when the UE does not receive the first information, and reducing additional signaling designs.

Optionally, if the measurement and/or reporting of the terminal device correspond(s) to the first resource set and the second resource set and the terminal device does not receive the first information, the terminal device may perform measurement and/or reporting based on the first resource set and the second resource set.

Optionally, if the measurement and/or reporting of the terminal device correspond(s) to the first resource set and the third resource set and the terminal device does not receive the first information, the terminal device may perform measurement and/or reporting based on the first resource set and the third resource set.

Optionally, if the measurement and/or reporting of the terminal device correspond(s) to the first resource set, the second resource set and the third resource set, and the terminal device does not receive the first information, the terminal device may perform measurement and/or reporting based on the first resource set, the second resource set and the third resource set.

Hereinafter, UE reporting will be described. It should be noted that although the content reported by the UE is described herein in the present embodiment, the content reported by the UE below can be applied to other embodiments, and the description thereof will not be repeated in other embodiments.

### Regarding UE reporting:

Optionally, the above scheme is applicable to aperiodic (AP) reporting, so that the flexibility of aperiodic reporting is the highest, and the flexibility of system can be further improved by adding subset-based flexible indications on this basis. If periodic and semi-persistent reporting are not adopted, the implementation complexity of network and terminal can be reduced.

Optionally, the above scheme is applicable to periodic (P) reporting, so that the flexibility of periodic reporting is relatively insufficient, and the flexibility of system can be improved by introducing subset-based flexibility indications. Aperiodic and semi-persistent reporting are not adopted, thereby reducing the implementation complexity of network and terminal.

Optionally, the above scheme is applicable to semi-persistent (SP) reporting, so that the flexibility of semi-persistent reporting is relatively insufficient compared with that of aperiodic reporting, and the introduction of adding a subset-based flexible indication can improve the flexibility of system. Aperiodic and periodic reporting are not adopted, which can reduce the implementation complexity of network and terminal.

Optionally, the above scheme is applicable to the case of aperiodic (AP) reporting, periodic (P) reporting and semi-persistent (SP) reporting, so that the flexibility of system can be improved by introducing a subset-based flexibility indication to all reporting methods.

Optionally, the above scheme is applicable to the case of periodic (P) reporting and semi-persistent (SP) reporting, so that the flexibility of periodic reporting and semi-persistent reporting is relatively insufficient compared with that of aperiodic reporting, and the flexibility of system can be improved by introducing a subset-based flexibility indication. If aperiodic reporting is not adopted, the implementation complexity of the network and terminal can be reduced.

Optionally, the terminal device may report a first result to the network device, and optionally, the first result may have the following options:
Option 1: The first result includes a measurement result, for example, including a measured L1-RSRP, and/or a corresponding signal identifier or signal resource identifier (e.g., one of the identifiers indicates a CSI-RS resource, and in another example, the identifier indicates an SSB). For example, K L1-RSRP measurements may be included in the first result. For another example, K pairs may be included in the first result, wherein each pair has a signal indication information/identifier (e.g., an SSB indication information/identifier, or a CSI-RS resource indication information/identifier) and corresponding measured L1-RSRP. For example, the first result includes 4 pairs (which may also be 1 pair, 2 pairs, 3 pairs, 5 pairs, 6 pairs, 8 pairs, etc, and no further examples will be given here; other values are also applicable, such as 7, 9, 10, 16, etc; the same rule applies to other examples): {CSI-RS resource indicator1, L1-RSRP1}, {CSI-RS resource indicator2, L1-RSRP2}, {CSI-RS resource indicator3, L1-RSRP3}, {CSI-RS resource indicator4, L1-RSRP4}.

In an example, the first result includes four measurement results: L1-RSRP1, L1-RSRP2, L1-RSRP3}, L1-RSRP4. The positions of the four measurement results in the first result are determined according to a predetermined rule (for example, the CSI-RS resource indicators corresponding to smaller values are placed first, or those corresponding to larger values are placed first).

In this way, the terminal may perform measurement based on one or more subsets and report the measurement results to the network, and the network may determine the operation for subsequent beam management according to an appropriate algorithm or rule (e.g., a deep learning algorithm, an AI algorithm, a machine learning algorithm, a statistical algorithm, etc., and the specific algorithm is not restricted here), for example, indicating the UE to perform beam measurement, or configuring some beams for the UE, or indicating one or some beams to the UE for transmission, thereby improving the overall performance of the network.

Option 2: The first result includes a prediction result of the terminal device, for example, a signal (or signal resource) predicted by the terminal device. Optionally, the predicted signal/signal resource may be reported through an identifier (referred to as a predicted identifier for convenience) (for example, one of the predicted identifiers indicates a predicted CSI-RS resource, and in another example, the identifier indicates a predicted SSB); and optionally, the first result may further include an RSRP value (or a L1-RSRP value) predicted by the terminal device, wherein the predicted RSRP value corresponds to the predicted signal or signal resource.

For example, K predicted signals or signal resources may be included in the first result (e.g., indicated by SSB indication information/identifier, or CSI-RS resource indication information/identifier). For another example, K pairs may be included in the first result, wherein each pair has a signal indication information/identifier (e.g., SSB indication information/identifier, or CSI-RS resource indication information/identifier) and corresponding predicted L1-RSRP. In an example, the first result includes 4 pairs: {CSI-RS resource indicator1, L1-RSRP1}, {CSI-RS resource indicator2, L1-RSRP2}, {CSI-RS resource indicator3, L1-RSRP3}, and {CSI-RS resource indicator4, L1-RSRP4}.

In an example, the first result includes 4 pairs (simultaneously indicating SSB and CSI-RS resource): {CSI-RS resource indicator1, L1-RSRP1}, {SSB index2, L1-RSRP2}, {CSI-RS resource indicator3, L1-RSRP3}, and {CSI-RS resource indicator4, L1-RSRP4}.

In this way, the terminal may perform measurement based on one or more subsets, and then adopt appropriate algorithms or rules (such as deep learning algorithms, AI algorithms, machine learning algorithms, statistical algorithms, etc., and the specific algorithms are not restricted here) to determine which beams are most beneficial to the terminal, and report these predicted beams to the network, which can help the network to make better beam management and improve network performance.

Option 3: It is a combination of options 2 and 1. That is, the first result includes both the measured L1-RSRP and the predicted L1-RSRP.

Optionally, the first result may include additional information for indicating whether certain L1-RSRP is a measurement result or a prediction result.

In an example, the first result includes 4 pairs: {CSI-RS resource indicator1, L1-RSRP1, flag1}, {CSI-RS resource indicator2, L1-RSRP2, flag2}, {CSI-RS resource indicator3, L1-RSRP3, flag3}, and {CSI-RS resource indicator4, L1-RSRP4, flag4}.

In an example, the first result includes 4 pairs (with both indication SSB and CSI-RS resource): {CSI-RS resource indicator1, L1-RSRP1, flag1}, {SSB index2, L1-RSRP2, flag2}, {CSI-RS resource indicator3, L1-RSRP3, flag3}, and {CSI-RS resource indicator4, L1-RSRP4, flag4}.

The above flag1, flag2, flag3, and flag4 take the first value to indicate measured L1-RSRP, and take the second values to indicate predicted L1-RSRP.

Optionally, whether a certain L1-RSRP is a measurement result or a prediction result may be indicated according to a third predetermined rule (which may be specified in a protocol or may be configured by network or the like), such as the position in the reporting information. In this way, in some cases, the L1-RSRP measured by the UE itself is more accurate than the predicted one, and reporting the measured L1-RSRP to the network can help the network to make better beam management and improve network performance.

Optionally, in the first result, a signal or signal resource may have both a corresponding measured L1-RSRP and a predicted L1-RSRP at the same time. As an example, the first result includes both a measured L1-RSRP and a predicted L1-RSRP corresponding to a certain CSI-RS resource, for example, the first result includes {CSI-RS resource indicator1, L1-RSRP 1A, L1-RSRP 1B}. How to distinguish between measured and predicted results may be done in different ways. For example, the measured L1-RSRP is placed in front of the predicted L1-RSRP; in another example, the predicted L1-RSRP is placed in front of the measured L1-RSRP; and in yet another example, each L1-RSPR corresponds to an additional piece of information for indicating whether it is measured or predicted. In this way, reporting more information to the network can help the network to make better beam management and improve network performance.

Optionally, if a signal or signal resource has a corresponding measured L1-RSRP and a predicted L1-RSRP, the reported first result includes the measured L1-RSRP corresponding to the signal or signal resource. For example, if a certain CSI-RS resource has both a corresponding measured L1-RSRP and a corresponding predicted L1-RSRP, only the corresponding measured L1-RSRP of the certain CSI-RS resource is included in the first result. In this way, in some cases, the L1-RSRP measured by the UE itself is more accurate than the predicted one, and reporting the measured L1-RSRP to the network can help the network to make better beam management and improve network performance.

Optionally, if a signal or signal resource has a corresponding measured L1-RSRP and a predicted L1-RSRP, the reported first result includes the predicted L1-RSRP corresponding to the signal or signal resource. As an example, if a certain CSI-RS resource has both a corresponding measured L1-RSRP and a corresponding predicted L1-RSRP, only the predicted L1-RSRP corresponding to the certain CSI-RS resource is included in the first result. In this way, when the UE reports the predicted L1-RSRP corresponding to this signal resource, it is convenient for the network to better compare the quality of different beams (reference resources) because they are all predicted, thereby facilitating the network to perform better beam management and improve network performance.

Optionally, if a signal or a signal resource has a corresponding measured L1-RSRP and a predicted L1-RSRP, it is determined according to the third information that the reported first result includes the measured L1-RSRP corresponding to the signal or the signal resource, or includes the predicted L1-RSRP corresponding to the signal or the signal resource. The third information is transmitted by the network device to the terminal device. In this way, the network uses signaling to indicate whether the UE reports the predicted L1-RSRP or the measured L1-RSRP, thereby providing the network with greater freedom.

As an example, determination made based on the third information may be based on a value of the third information, for example, when the third information takes a first value, the first result includes a measured L1-RSRP corresponding to the signal or signal resource, and when the third information takes a second value, the first result includes a predicted L1-RSRP corresponding to the signal or signal resource.

As an example, determination made based on the third information may be based on whether the network has transmitted or configured the third information. For example, when the network does not transmit or indicates the third information, the first result includes the measured L1-RSRP corresponding to the signal or signal resource, and when the network transmits or indicates the third information, the first result includes the predicted L1-RSRP corresponding to the signal or signal resource. For example, when the network does not transmit or indicates the third information, the first result includes the predicted L1-RSRP corresponding to the signal or signal resource, and when the network transmits or indicates the third information, the first result includes the measured L1-RSRP corresponding to the signal or signal resource. In this way, the signaling overhead can be reduced.

L1-RSRP is employed in the above examples. In other embodiments, L1-RSRP may also be replaced with L1-SINR. The scheme may be directly extended and will not be repeated one by one.

In addition, in the above reporting, the L1-RSRP may also be subjected to quantization (for example, quantization may be performed according to a protocol-specified quantization method or a network-configured quantization method), and the quantized result may be reported.

Optionally, in the above reporting, if a plurality of L1-RSRPs (which may be measured or predicted) are included in the first result, the reporting may also be carried out in a differential manner, so that the reporting overhead can be reduced.

The terminal may select an appropriate algorithm or rule (for example, a deep learning algorithm, an AI algorithm, a machine learning algorithm, a statistical algorithm, etc., and the specific algorithm is not restricted here) to predict the corresponding beam, or to predict the corresponding resource (for example, a CSI-RS resource, an SSB, etc.), or to predict the corresponding L1-RSRP, or to predict the corresponding L1-SINR.

### Embodiment 2 (subsets configured via MAC + indicated via DCI)

An MAC CE configures one or more subsets on the basis of any of the embodiments regarding the first configuration information. Optionally, the terminal device receives fourth information transmitted by the network device, and the fourth information indicates one or more subsets for the first resource set, wherein the first resource set belongs to one of one or more resource sets in the first set, the resource (or signal resource) included in each of the one or more subsets belonging to the resources in the first resource set, and the fourth information is transmitted through fourth MAC CE information. In this way, compared with the scheme of configuring subsets through RRC, the use of an MAC CE to directly indicate one or more subsets can effectively reduce the signaling overhead and the processing delay.

Optionally, for a subset among the one or more subsets, the fourth information indicates a corresponding subset identifier, thus facilitating subsequent DCI signaling to indicate the corresponding subset.

Assuming that X1 resource sets are indicated in the first set (denoted as G1 for convenience of description). In order to simplify the description, X1 = 2 is taken as an example here. Other values of X1 can be directly extended thereto, which will not be repeated here for brevity. These two resource sets are denoted as G1_S1 and G1_S2, respectively, where G1_S1 includes resources {A1, A2, A3, A4, A5, A6, A7, A8} ( In order to simplify the description, take 8 resources as an example, other numbers can be directly extended thereto, such as 16, 32), and G1_S2 includes resources {B1, B2, B3,...}. X1 may be 1, and only the resource set G1-S1 needs to be considered in this case.

For example, the fourth information may indicate two sub-sets for the resource set G1_S1, for example, indicating the first sub-set (subset1) which includes resources {A1, A2, A3, A4} (for the sake of simplicity of description, one sub-set including 4 resources is taken as an example, and other numbers can be directly extended thereto, for example, 2, 5, 6, 8, etc.), while indicating the second sub-set (subset2) which includes resources {A3, A4, A5, A6} or resources {A5, A6, A7, A8}. In this case, the resource set G1_S1 belongs to the first resource set. The fourth information may also indicate only one subset (e.g. subset1).

As another example, the fourth information may also indicate a number or identifier for the first subset (subset1) and a number or identifier for the second subset (subset2).

Optionally, each of the one or more subsets may indicate which resources of the first resource set belong to this subset by means of a bitmap. For example, the first subset (subset1) of G1_S1 is indicated via an 8-bit bitmap, where four bits take a value of 1 to indicate resources A1, A2, A3, A4. Optionally, the 4 bits with a value of 1 may be the first 4 bits (the 4 bits on the left) or the last 4 bits (the 4 bits on the right). In this way, when the quantity of resources in the sub-set is large, or when the quantity of resources in the first resource set is large, the signaling overhead can be reduced as compared with the next scheme.

Optionally, each of the one or more subsets may indicate which resources in the first resource set belong to the subset by indicating one or more numbers, wherein the numbers are indexes of resources in the first resource set, for example, 0 may correspond to the first resource in the first resource set, and 1 may correspond to the second signal in the first resource set, so that when the quantity of resources in the subset is small or the quantity of resources in the first resource set is small, the signaling overhead can be reduced compared with the previous scheme.

Optionally, each of the one or more subsets may indicate which resources in the first resource set belong to this subset by indicating one or more identifiers, wherein the identifier is the identifier in resource configuration information, for example, if a resource is a CSI-RS resource (the CSI-RS resource here is used to actually transmit a CSI-RS signal, and thus may also be called NZP-CSI-RS-Resource, and NZP referring to non-zero-power), then the identifier is nzp-CSI-RS-ResourceId in the NR system.

Optionally, the fourth information may indicate a subset corresponding to the plurality of first resource sets.

Regarding subsets configured for resource sets in the second set, the third set:
For configuring subsets for the resource sets in the second set and the third set, the above-described method may also be applicable, and the similar contents will not be repeated. For example:
Optionally, the fifth information indication may be used to indicate one or more subsets for a second resource set, wherein the second resource set belongs to one of the one or more resource sets in the second set, resources (or signal resources) in each of the one or more subsets belonging to resources in the second signal set.

Optionally, the sixth information indication may be used to indicate one or more subsets for a third resource set, wherein the third resource set belongs to one of the one or more resource sets in the third set, resources in each of the one or more subsets belonging to resources (note: not signal resources) in the third resource set.

Optionally, the fourth information and the fifth information are the same information.

Optionally, the fourth information and the sixth information are the same information.

Optionally, the fourth information, the fifth information, and the sixth information are the same information.

Optionally, the fourth information may indicate a first serving cell (or called a carrier), and the first information applies to the first serving cell(s) (i.e., indicating the Serving cell for which the MAC CE applies). As an example, the first serving cell is indicated via a Serving Cell ID.

Optionally, the fourth information indicates a first BWP, and the fourth information is applied to the first BWP (i.e., indicating the BWP for which the MAC CE applies). As an example, the first BWP is indicated via a BWP ID.

Optionally, the fourth information may indicate a second serving cell (or called a carrier), and the resources (or signal resources) of one or more subsets of the first resource set are in (or belong to) the second serving cell, so that the signals and/or resources measured in other cells can be flexibly indicated. Exemplarily, the second serving cell is indicated via a Serving Cell ID. Optionally, if the fourth information further indicates one or more subsets of the second resource set, then resources (or signal resources) of the one or more subsets of the second resource set are in the second serving cell. Optionally, if the fourth information further indicates one or more subsets of the third resource set, resources of the one or more subsets of the second resource set are in the second serving cell.

Optionally, if a second serving cell is not indicated, the resources (or signal resources) of one or more subsets of the first resource set are in the first serving cell, so that signaling overhead can be reduced. Compared with the above scheme, the cost is that the measured signal of other cells/carriers cannot be indicated. Optionally, if the fourth information further indicates one or more subsets of the second resource set, resources (or signal resources) of the one or more subsets of the second resource set are in the first serving cell. Optionally, if the fourth information further indicates one or more subsets of the third resource set, resources of the one or more subsets of the second resource set are in the first serving cell.

Optionally, the fourth information may indicate a second BWP, and resources (or signal resources) of one or more subsets of the first resource set are in (or belong to) the second BWP, so that signals and/or resources measured in other BWPs can be flexibly indicated. As an example, the second BWP is indicated via a BWP ID. Optionally, if the fourth information further indicates one or more subsets of the second resource set, resources (or signal resources) of one or more subsets of the second resource set are in the second BWP. Optionally, if the fourth information further indicates one or more subsets of the third resource set, resources of the one or more subsets of the third resource set are in the second BWP.

Optionally, if the fourth information does not indicate a second BWP, resources (or signal resources) of one or more subsets of the first resource set are in the first BWP, so that signaling overhead can be reduced. Compared with the above scheme, the cost is that the measured signal of other BWPs cannot be indicated. Optionally, if the fourth information further indicates one or more subsets of the second resource set, resource signals (or signal resources) of one or more subsets of the second resource set are in the first BWP. Optionally, if the fourth information further indicates one or more subsets of the third resource set, resources of the one or more subsets of the third resource set are in the first BWP.

Optionally, the first information may indicate a first reporting configuration. As an example, the first reporting configuration indicates a first set or a first resource set, so that the indications for information such as a serving cell and a BWP of the first resource set can be reduced, thereby reducing signaling overhead.

Taking a 5G/NR system as an example (which may be applied to other systems; similar cases elsewhere are not repeated here for brevity), the first reporting configuration may be a channel state information reporting configuration. Optionally, the first information indicates a CSI-ReportConfig. Optionally, the first information may indicate an ID of a CSI-ReportConfig, thereby indicating the CSI-ReportConfig. For example, the ID of the CSI-ReportConfig may be a CSI-reportConfigId or a reportConfigId.

When the first information indicates the first reporting configuration, the first information may no longer indicate the second serving cell, or may no longer indicate the second BWP. The serving cell/BWP in which the first subset is located may be determined according to the first reporting configuration.

Optionally, the first information may indicate a first aperiodic activation state. As an example, the first aperiodic activation state indicates a first set or a first resource set, so that indications for information such as serving cells, BWPs, and the like of the first resource set can be reduced, thereby reducing signaling overhead.

Taking a 5G/NR system as an example, the first aperiodic activation state may be a channel state information aperiodic trigger state. Optionally, the channel state information aperiodic trigger state may be CSI-AperiodicTriggerState. Optionally, the first information may indicate a number, thereby indicating the channel state information aperiodic trigger state. For example, number 0 corresponds to the first CSI-AperiodicTriggerState in the CSI-AperiodicTriggerStateList, the number 1 corresponds to the second CSI-AperiodicTriggerState in the CSI-AperiodicTriggerStateList, and so on. For another example, the number 1 corresponds to the first CSI-AperiodicTriggerState in the CSI-AperiodicTriggerStateList, the number 2 corresponds to the second CSI-AperiodicTriggerState in the CSI-AperiodicTriggerStateList, and so on.

When the first information indicates the first aperiodic activation state, the first information may no longer indicate the second serving cell or may no longer indicate the second BWP. The serving cell and the BWP in which the first subset is located may be determined according to the first reporting configuration.

Optionally, please refer to the description of UE reporting in the first embodiment to understand the UE reporting in this embodiment, and the description thereof is not repeated here.

### The present embodiment provides an example of MAC CE

The example of MAC CE in this embodiment may be directly extended to the examples 1-7 of MAC CE in the foregoing embodiment 1, and in this embodiment, the "resource indication information" in the examples 1-7 of MAC CE is replaced with the "subset indication information". The subset indication information may indicate one or more subsets, each subset indicating one or more resources through one or more of the followings:
a bitmap;
one or more numbers, wherein the number is an index of the resource within a first resource set; and
one or more identifiers, for example, if the resource is a CSI-RS resource (the CSI-RS resource here is used to actually transmit a CSI-RS signal, and thus may be referred to as an NZP-CSI-RS-Resource, NZP referring to non-zero-power), then the identifier in the NR system is nzp-CSI-RS-ResourceId.

Additionally, optionally, the MAC CE may further indicate a subset identifier or number corresponding to each subset. If the MAC CE does not indicate a subset identifier or number, a corresponding label may be determined according to its order in the MAC CE signaling. For example, 0 corresponds to the first subset, 1 corresponds to the second subset, and so on. For example, 1 corresponds to the first subset, 2 corresponds to the second subset, and so on.

Optionally, if the fourth information indicates only one subset for the first resource set, the one subset is the first subset, so that when there is one subset, no DCI indication is required, and the DCI signaling overhead can be saved.

Optionally, the terminal device may receive seventh information from the network device, the seventh information indicating a first subset corresponding to the first resource set, and the first subset being a subset of one or more subsets corresponding to the first resource set (i.e., one or more subsets indicated by the first MAC CE), wherein the seventh information is indicated via first DCI signaling. In this way, the DCI signaling processing delay is lower, and the UE can measure different subsets more quickly.

Optionally, the seventh information may indicate the first subset by indicating a number or a subset identifier, so that when the quantity of subsets is large, the DCI signaling overhead can be reduced compared with the following scheme.

Optionally, the seventh information may indicate the first subset via a bitmap, so that when the quantity of subsets is small, the DCI signaling overhead can be reduced as compared to the above scheme.

Optionally, the seventh information may be indicated through a first field in the DCI signaling.

Optionally, if a plurality of resource sets (in the first set, or in the first set and the second set, or in the first set and the second set and the third set) have corresponding subsets, the size of the first field is determined according to the first number of subsets, the first number being the maximum number of subsets in the plurality of resource sets (for example, three resource sets have corresponding subsets, the quantity of the subsets of each resource set is M1, M2, and M3 respectively, and the first number is the maximum value among the three), so that RRC signaling can be reduced compared to the following scheme.

Optionally, the size of the first field may be configured by the network so that system flexibility can be increased compared to the above scheme. Optionally, when the value of the first field is larger than the quantity of sub-sets corresponding to the first resource set, the indication of the first field may be ignored, or a certain sub-set may be determined according to a first predetermined rule (for example, configured in advance via RRC or prescribed through a protocol).

Optionally, when the value of the seventh information is a first value, the terminal device may perform measurement and/or reporting based on the first resource set, wherein the first value may be a predetermined reserved value (thus, it is equivalent to a fallback mode, that is, using a resource set directly instead of using a subset).

Optionally, when the first configuration information indicates the second set, the terminal device may perform measurement and/or reporting (i.e. on the basis of the first subset; the latter is similar) further based on the second subset. The second subset is determined according to the seventh information, or according to the second predetermined rule, or according to a network configured correspondence between the second subset and the first subset (e.g. the network indicates the correspondence through RRC signaling or MAC CE signaling), so that the system can be assisted in better selection of beams by measuring interference.

Optionally, when the first configuration information indicates the third set, the terminal device may perform measurement and/or reporting further based on the third subset. The third subset may be determined according to the seventh information, or according to the second predetermined rule, or according to the network configured correspondence between the third subset and the first subset (for example, the network indicates the correspondence through RRC signaling or MAC CE signaling), so that the system can be assisted in better selection of beams by measuring interference.

On the basis of any of the foregoing, optionally, when the measurement and/or reporting of the terminal device (or a certain measurement and/or reporting, which is similar in the following and will not be repeated) corresponds to the first resource set (for example, the first resource set is indicated in the configuration corresponding to the current measurement and/or reporting), the terminal device may perform measurement and/or reporting based on the first subset.

Optionally, when the first configuration information indicates the second set, and the second subset is also indicated by the network, the terminal device may perform measurement and/or reporting further based on the second subset (i.e. on the basis of the first subset, which is similar below), so that the system can be assisted in better selection of beams by measuring interference.

Optionally, when the first configuration information indicates the third set, and the third subset is also indicated by the network, the terminal device may perform measurement and/or reporting further based on the third subset, so that the system may be assisted in better selection of beams by measuring interference.

Optionally, when the first configuration information indicates the second set, but the network does not indicate the second subset, the terminal device may perform measurement and/or reporting further based on the second subset. The second subset may be determined according to a second predetermined rule (e.g., a rule specified by a protocol), or according to a network configured correspondence between a subset of the first resource set and a subset of the second resource set (e.g., the network indicates the correspondence through a RRC parameter), or the second subset may be the second resource set, thereby reducing signaling overhead.

Optionally, when the first configuration information indicates the third set, but the network does not indicate the third subset, the terminal device may perform measurement and/or reporting further based on the third subset. The third subset may be determined according to the second predetermined rule (e.g., a rule specified by the protocol), or according to the network configured correspondence between the subset of the first resource set and the subset of the third resource set (e.g., the network indicates the correspondence through a RRC parameter), or the third subset may be the third resource set, thereby reducing signaling overhead.

Optionally, when the measurement and/or reporting of the terminal device correspond(s) to the first resource set (e.g., the first resource set is indicated in the configuration corresponding to the current measurement and/or reporting), and the terminal device does not receive the seventh information, or does not receive the fourth information, the terminal device may perform measurement and/or reporting based on the first resource set (i.e., based on the first resource set rather than its subsets), thus defining the default behavior when the UE does not receive the first information, and may reduce the additional signaling design.

Optionally, when the measurement and/or reporting of the terminal device correspond(s) to the first resource set and the second resource set, and the terminal device does not receive the first information, the terminal device may perform measurement and/or reporting based on the first resource set and the second resource set.

Optionally, when the measurement and/or reporting of the terminal device correspond(s) to the first resource set and the third resource set, and the terminal device does not receive the first information, the terminal device may perform measurement and/or reporting based on the first resource set and the third resource set.

Optionally, when the measurement and/or reporting of the terminal device correspond(s) to the first resource set, the second resource set, and the third resource set, and the terminal device does not receive the first information, the terminal device may perform measurement and/or reporting based on the first resource set, the second resource set, and the third resource set.

### Embodiment 3 (direct resource activation via DCI)

On the basis of any of the embodiments regarding the first configuration information, the terminal device may receive first information transmitted by the network device, the first information indicating one or more resources (or signal resources) of the first resource set belonging to one of the one or more resource sets in the first set. For convenience of description, the indicated one or more resources are referred to as the first subset (in practice, this subset may not be explicitly defined), wherein the first resource set belongs to one of one or more resource sets in the first set, and the first information is transmitted through DCI, so that the processing delay can be reduced by using DCI compared to the scheme of configuring subsets via RRC or an MAC CE. Note that the first information, the second information and the third information in the first embodiment are transmitted through an MAC CE, while the first information, the second information and the third information in the third embodiment are transmitted through DCI.

Optionally, the terminal device may also receive the second information and/or the third information.

Optionally, the resources in the first subset may be indicated through a bitmap, and each bit corresponds to one resource, so that the signaling overhead can be reduced as compared with the scheme of directly indicating a resource number.

Optionally, the resource in the first subset may be indicated by a number, wherein the number is the index of the resource in the first resource set, for example, 0 may correspond to the first resource in the first resource set, and 1 may correspond to the second signal in the first resource set, so that when the quantity of resources in the subset is small or the quantity of resources in the first resource set is small, the signaling overhead can be reduced compared with the previous scheme.

Optionally, the resources in the first subset may be indicated through a bitmap, and each bit corresponds to T resources, so that the quantity of corresponding bits of the DCI can be reduced. As an example, the value of T is configured by the network. As another example, the value of T is specified by the protocol. Optionally, the T resources are T consecutive resources in the first resource set. Optionally, the T resources are equally spaced in the first resource set.

Optionally, the resources belonging to the first subset may be determined by two parts of information (corresponding to the first indication and the second indication), the first part of information indicates a starting resource in the first resource set, the second part of information indicates an ending resource in the first resource set, and the resource(s) between the starting resource and the ending resource belong to the first subset, wherein the starting resource may or may not belong to the first subset, and the ending resource may or may not belong to the first subset.

Optionally, when the measurement and/or reporting of the terminal device correspond(s) to the first resource set (e.g., the first resource set is indicated in the configuration corresponding to the current measurement and/or reporting), and the terminal device does not receive the first information, the terminal device may perform measurement and/or reporting based on the first resource set (i.e., based on the first resource set instead of its subsets), thus defining the default behavior when the UE does not receive the first information, and can reduce the additional signaling design.

Optionally, when the measurement and/or reporting of the terminal device correspond(s) to the first resource set and the second resource set, and the terminal device does not receive the first information, the terminal device may perform measurement and/or reporting based on the first resource set and the second resource set.

Optionally, when the measurement and/or reporting of the terminal device correspond(s) to the first resource set and the third resource set, and the terminal device does not receive the first information, the terminal device may perform measurement and/or reporting based on the first resource set and the third resource set.

Optionally, when the measurement and/or reporting of the terminal device correspond(s) to the first resource set, the second resource set and the third resource set, and the terminal device does not receive the first information, the terminal device may perform measurement and/or reporting based on the first resource set, the second resource set, and the third resource set.

Optionally, the description of the first information, the second information and the third information in the third embodiment may be combined with the description of the first information, the second information and the third information in the first embodiment.

Optionally, the description of measurement and/or reporting in Embodiment 3 may be combined with the description of measurement and/or reporting in Embodiment 1. Optionally, the description of measurement and/or reporting in Embodiment 2 may be combined with the description of measurement and/or reporting in Embodiment 1.

Optionally, Embodiment 1, Embodiment 2 and Embodiment 3 may all be applied to one or more of the following situations:
Case 1: AI/ML-based (or AI-based) beam management flow;
Case 2: AI/ML-based spatial domain beam prediction, or AI-based spatial domain beam prediction. For example, the best G2 narrow beams (i.e. Top-G2 narrow beams) are predicted from the measurement results of G1 wide beams. For example, the best G2 narrow beams (i.e. Top-G2 narrow beams) among the G3 beams are predicted from the measurement results of the G1 beams, where the G1 beams belong to some of the 3G beams.
Case 3: AI/ML-based temporal beam prediction (beam prediction in time domain), or AI-based temporal beam prediction. For example, the best G2 beams (i.e. Top-G2 beams) at a future time point or at some future time points are predicted based on the current measurement and/or previous measurement of the G1 beams. The value of G2 may be different at different further time points.

Optionally, in the above method, the AI algorithm or the ML algorithm may not be used, and other non-AI or non-ML algorithms, such as linear prediction algorithms, may be used.

Optionally, in Embodiment 1, Embodiment 2 and Embodiment 3, before the terminal device receives the first configuration information, the terminal device may further report a first terminal capability. Reference may be made to the description in the first embodiment to understand the first terminal capability, and the description thereof will not be repeated here.

The preferred embodiments of the present disclosure have been described in detail above with reference to the accompanying drawings, but the present disclosure is not limited to the specific details in the above-described embodiments. Within the scope of the technical concept of the present disclosure, a variety of simple modifications can be made to the technical solution of the present disclosure, and these simple modifications all belong to the scope of protection of the present disclosure. For example, various specific technical features described in the above-described detailed description can be combined in any suitable manner without contradiction, and various possible combinations will not be described additionally in order to avoid unnecessary repetition. For example, various embodiments of the present disclosure may be combined arbitrarily, and as long as they do not violate the idea of the present disclosure, they should be regarded as the disclosure of the present disclosure. For another example, on the premise that there is no conflict, each embodiment described in the present disclosure and/or the technical features in each embodiment can be arbitrarily combined with the prior art, and the technical solution obtained after the combination should also fall within the scope of protection of the present disclosure.

It should also be understood that in various method embodiments of the present disclosure, the size of the sequence numbers of the above-described processes does not mean the sequence of execution, and the sequence of execution of each process shall be determined by its function and internal logic, and shall not constitute any limitation on the implementation of the embodiments of the present disclosure. In addition, in the embodiments of the present disclosure, the terms "downlink", "uplink", and "sidelink" are used to indicate the transmission direction of signals or data, wherein "downlink" is used to indicate that the transmission direction of signals or data is a first direction from a site to a UE of a cell, "uplink" is used to indicate that the transmission direction of signals or data is a second direction from the UE of the cell to the site, and "sidelink" is used to indicate that the transmission direction of signals or data is a third direction from UE 1 to UE 2. For example, "downlink signal" indicates that the transmission direction of the signal is the first direction. In addition, in the embodiments of the present disclosure, the term "and/or" represents only an association relationship describing associated objects, and indicates that there may be three relationships, specifically, A and/or B may represent three cases which are A exists alone, both A and B exist, and B exists alone. In addition, the character "/" herein indicates that the related objects before and after it are in an "or" relationship.

FIG. 8 is a schematic diagram of the structure and composition of a terminal device according to an embodiment of the present disclosure. As shown in FIG. 8, the terminal device 800 includes:
a communication unit 801, configured to receive first configuration information, the first configuration information being transmitted through RRC signaling and indicating one or more resource sets.

The communication unit 801 is further configured to receive first indication information, the first indication information being included in an MAC CE or DCI, the first indication information indicating one or more subsets of a first resource set, each of the one or more subsets of the first resource set including one or more resources in the first resource set, and the first resource set belonging to one of the one or more resource sets.

In some embodiments, the terminal device 800 may further include a connection unit configured to establish a connection with a network device.

In some embodiments, the first indication information may further indicate a first serving cell, and/or the first indication information may be applied to the first serving cell.

In some embodiments, the first indication information may further indicate a first BWP, and/or the first indication information may be applied to the first BWP.

In some embodiments, the first indication information may further indicate a first reporting configuration; the first reporting configuration may indicate a first set or the first resource set; and the first resource set belongs to one of one or more resource sets in the first set.

In some embodiments, the first indication information may further indicate a first aperiodic activation state; the first aperiodic activation state may indicate a first set or the first resource set; and the first resource set belongs to one of one or more resource sets in the first set.

In some embodiments, the one or more subsets may include a first subset, the first indication information being included in the MAC CE or the DCI.

In some embodiments, the one or more resources included in the first subset may be indicated by a bitmap; and/or,
the one or more resources included in the first subset may be indicated through a number(s); and/or,
the one or more resources included in the first subset may be indicated through a resource ID(s).

In some embodiments, when the first indication information further indicates a second serving cell, resources within the first subset are associated with the second serving cell.

In some embodiments, when the first indication information further indicates a second subset and/or a third subset, resources within the second subset and/or the third subset are associated with the second serving cell;
the second subset includes one or more resources in a second resource set; and
the third subset includes one or more resources in a third resource set.

In some embodiments, when the first indication information does not indicate a second serving cell, resources within the first subset are associated with the first serving cell.

In some embodiments, when the first indication information further indicates a second subset and/or a third subset, resources within the second subset and/or the third subset are associated with the first serving cell;
the second subset comprises one or more resources in a second resource set; and
the third subset includes one or more resources in a third resource set.

In some embodiments, when the first indication information further indicates a second BWP, resources within the first subset are in the second BWP.

In some embodiments, when the first indication information further indicates a second subset and/or a third subset, resources within the second subset and/or the third subset are in the second BWP;
the second subset comprises one or more resources in the second resource set; and
the third subset includes one or more resources in the third resource set.

In some embodiments, when the first indication information does not indicate a second BWP, resources within the first subset are in the first BWP.

In some embodiments, when the first indication information further indicates a second subset and/or a third subset, resources within the second subset and/or the third subset are in a first BWP;
the second subset comprises one or more resources in the second resource set; and
the third subset includes one or more resources in the third resource set.

In some embodiments, the first indication information may be included in the MAC CE.

In some embodiments, the one or more subsets included in the first resource set may be indicated through a subset identifier(s); and/or,
the one or more subsets included in the first resource set may be indicated through a bitmap; and/or,
the one or more subsets included in the first resource set may be indicated by a number(s); and/or,
the one or more subsets included in the first resource set may be indicated through an identifier(s) in resource configuration information.

In some embodiments, when the first indication information further indicates a second serving cell, resources in one or more subsets of the first resource set are associated with the second serving cell.

In some embodiments, when the first indication information further indicates one or more subsets of a second resource set and/or one or more subsets of a third resource set, resources in one or more subsets of the second resource set and/or resources in one or more subsets of the third resource set are associated with the second serving cell.

In some embodiments, when the first indication information does not indicate a second serving cell, resources in one or more subsets of the first resource set are associated with the first serving cell.

In some embodiments, when the first indication information further indicates one or more subsets of a second resource set and/or one or more subsets of a third resource set, resources in one or more subsets of the second resource set and/or resources in one or more subsets of the third resource set are associated with the first serving cell.

In some embodiments, when the first indication information further indicates a second BWP, resources in one or more subsets of the first resource set are in the second BWP.

In some embodiments, when the first indication information further indicates one or more subsets of a second resource set and/or one or more subsets of a third resource set, resources in one or more subsets of the second resource set and/or resources in one or more subsets of the third resource set are in the second BWP.

In some embodiments, when the first indication information does not indicate a second BWP, resources in one or more subsets of the first resource set are in the first BWP.

In some embodiments, when the first indication information further indicates one or more subsets of a second resource set and/or one or more subsets of a third resource set, resources in one or more subsets of the second resource set and/or resources in one or more subsets of the third resource set are in the first BWP.

In some embodiments, when the first indication information indicates a subset of the first resource set, a subset of the first resource set is the first subset.

In some embodiments, the communication unit 801 is further configured to receive second indication information, the second indication information being included in DCI, the second indication information indicating a first subset of the first resource set, the first subset belonging to one or more subsets of the first resource set.

In some embodiments, the second indication information may indicate the first subset through one or more of the followings: a subset identifier, a bitmap, a number, an identifier in resource configuration information.

In some embodiments, the second indication information may indicate the first subset through a first field in the DCI.

In some embodiments, a size of the first field may be determined according to a first number, the first number being a maximum number of subsets in the multiple resource sets; or,
the size of the first field may be configured by the network device.

In some embodiments, the communication unit 801 is further configured to refrain from using the first subset indicated by the first field in the DCI, and/or determine the first subset according to a first predetermined rule, when the value of the first field in the DCI is larger than the quantity of subsets in the first resource set.

In some embodiments, the resources in the first subset may be determined according to a first indication and a second indication, wherein the first indication is used to indicate a starting resource in the first resource set, the second indication is used to indicate an ending resource in the first resource set, and a resource between the starting resource in the first resource set and the ending resource in the first resource set belongs to the resources in the first subset; and/or,
the resources in the second subset may be determined according to a third indication and a fourth indication, wherein the third indication is used to indicate a starting resource in a second resource set, the fourth indication is used to indicate an ending resource in the second resource set, and a resource between the starting resource in the second resource set and the ending resource in the second resource set belongs to the resources in the second subset; and/or,
resources in the third subset may be determined according to a fifth indication and a sixth indication, wherein the fifth indication is used to indicate a starting resource in a third resource set, and the sixth indication is used to indicate an ending resource in the third resource set, and a resource between the starting resource in the third resource set and the ending resource in the third resource set belongs to the resources in the third subset.

In some embodiments, the terminal device 800 may further include a measurement unit.

In some embodiments, the measurement unit and/or the communication unit 801 may be further configured to perform measurement and/or reporting based on the first resource set when the second indication information includes a first value.

In some embodiments, the measurement unit and/or the communication unit 801 may be further configured to perform measurement and/or reporting based on the first subset in a case where the first configuration information indicates a first set;
wherein the first resource set belongs to one of one or more resource sets in the first set.

In some embodiments, the measurement unit and/or the communication unit 801 may be further configured to perform measurement and/or reporting based on the first subset of the first resource set or the first resource set when the measurement and/or reporting of the terminal device correspond(s) to the first resource set.

In some embodiments, the first subset may be determined according to second indication information, or the first subset may be determined according to a second predetermined rule.

In some embodiments, the measurement unit and/or the communication unit 801 may be further configured to perform measurement and/or reporting based on the first subset indicated by the network device when the first configuration information indicates a first set and the network device indicates a first subset,
wherein the first resource set belongs to one of one or more resource sets in the first set.

In some embodiments, the measurement unit and/or the communication unit 801 may be further configured to perform measurement and/or reporting based on the first subset determined by the second predetermined rule or based on the first resource set, when the first configuration information indicates the first set and the network device does not indicate the first subset,
wherein the first resource set belongs to one of one or more resource sets in the first set.

In some embodiments, the measurement unit and/or the communication unit 801 may be further configured to perform measurement and/or reporting based on the first resource set when the measurement and/or reporting of the terminal device correspond(s) to the first resource set and the terminal device does not receive one or more of the first indication information and the second indication information.

In some embodiments, reporting may include one or more of aperiodic reporting, periodic reporting, and semi-persistent reporting.

In some embodiments, the reported first result may include one or more of the following:
a measurement result: which includes one or more of the following: measured parameter information, measured signal identifier, measured signal resource identifier;
a prediction result: which includes one or more of the following: a predicted signal, a predicted signal resource, a predicted signal identifier, a predicted signal resource identifier, predicted parameter information corresponding to the predicted signal, and predicted parameter information corresponding to the predicted signal resource; and
third indication information: indicating that the first result includes the measurement result and/or the prediction result,
wherein the parameter information includes values of one or more of the following: L1-RSRP, L1-SINR, RSRP, SINR.

In some embodiments, the first result includes the measurement result and/or the prediction result, which may be determined according to fourth indication information transmitted by the network device to the terminal device, or according to whether the network device transmits fourth indication information to the terminal device.

In some embodiments, the communication unit 801 is further configured to report a first terminal capability, the first terminal capability indicating a capability of the terminal device related to a subset in a resource set.

In some embodiments, the first terminal capability may indicate one or more of the following: configuring a subset of one resource set through RRC; indicating one or more subsets through an MAC CE; indicating one or more subsets through DCI; supporting subset-based measurement; and supporting subset-based reporting.

In some embodiments, the first terminal capability may be transmitted through RRC or an MAC CE.

In some embodiments, the first terminal capability may be reported for a band; or,
the first terminal capability is reported may be each carrier on the band; or,
the first terminal capability is reported may be a band combination; or,
the first terminal capability is reported may be each band in the band combination; or,
the first terminal capability may be reported for each carrier on each band in the band combination; or,
the first terminal capability may be reported for a band range; or,
the first terminal capability may be reported for the UE.

In some embodiments, the first configuration information associates the first serving cell.

In some embodiments, the first configuration information indicates to report one or more of the following parameter information: Layer 1 reference signal received power (L1-RSRP), a Layer 1 signal-to-interference plus noise ratio (L1-SINR), reference signal received power (RSRP), and a signal-to-interference plus noise ratio (SINR).

In some embodiments, the one or more resource sets belong to a first set and/or a second set; and
resources in one or more resource sets in the first set are associated with a second serving cell, and/or resources in one or more resource sets in the second set are associated with a third serving cell.

In some embodiments, the one or more resource sets belong to a second set and/or a third set;
resources and/or signals corresponding to the resources in one or more resource sets in the second set are for interference measurement; and/or,
resources in one or more resource sets in the third set are for interference measurement.

In some embodiments, the one or more resource sets belong to a first set and/or a second set;
each resource in each of the one or more resource sets in the first set corresponds to one of: one signal, one signal resource, one reference signal, one reference signal resource; and/or,
Each resource in each of the one or more resource sets in the second set corresponds to one of: one signal, one signal resource, one reference signal, and one reference signal resource.

In some embodiments, the one or more resource sets belong to a first set and/or a second set;
each of the one or more resource sets in the first set indicates one or more of the following: one or more CSI-RS resources, one or more SSBs; and/or,
each of the one or more resource sets in the second set indicates one or more of the following: one or more CSI-RS resources, one or more SSBs.

In some embodiments, the one or more resource sets belong to a third set;
each of the one or more resource sets in the third set indicates one or more of: one or more time domain resources, one or more frequency domain resources, and one or more time-frequency resources.

In some embodiments, the first configuration information indicates that the corresponding reporting type includes periodic reporting, aperiodic reporting, or semi-persistent reporting.

FIG. 9 is a schematic diagram of the structure and composition of a network device according to an embodiment of the present disclosure. As shown in FIG. 9, the network device 900 includes:
a communication unit 901, configured to transmit first configuration information, the first configuration information being transmitted through RRC signaling, the first configuration information indicating one or more resource sets.

The communication unit 901 is further configured to transmit first indication information. The first indication information is included in an MAC CE or DCI, and indicates one or more subsets of a first resource set, each of the one or more subsets of the first resource set including one or more resources in the first resource set; and the first resource set belongs to one of the one or more resource sets.

In some embodiments, the network device 900 may further include a connection unit configured to establish a connection with a terminal device.

In some embodiments, the first indication information may further indicate a first serving cell, and/or the first indication information may be applied to the first serving cell.

In some embodiments, the first indication information may further indicate a first BWP, and/or the first indication information may be applied to the first BWP.

In some embodiments, the first indication information may further indicate a first reporting configuration; the first reporting configuration indicates a first set or the first resource set; the first resource set belongs to one of one or more resource sets in the first set.

In some embodiments, the first indication information may further indicate a first aperiodic activation state; the first aperiodic activation state indicates a first set or the first resource set; the first resource set belongs to one of one or more resource sets in the first set.

In some embodiments, the one or more subsets may include a first subset, and the first indication information is included in the MAC CE or DCI.

In some embodiments, the one or more resources included in the first subset may be indicated by a bitmap; and/or,
the one or more resources included in the first subset may be indicated through a number(s); and/or,
the one or more resources included in the first subset may be indicated through a resource ID(s).

In some embodiments, when the first indication information further indicates a second serving cell, resources within the first subset are associated with the second serving cell.

In some embodiments, when the first indication information further indicates a second subset and/or a third subset, resources within the second subset and/or the third subset are associated with the second serving cell;
the second subset includes one or more resources in a second resource set; and
the third subset includes one or more resources in a third resource set.

In some embodiments, when the first indication information does not indicate a second serving cell, resources within the first subset are associated with the first serving cell.

In some embodiments, when the first indication information further indicates a second subset and/or a third subset, resources within the second subset and/or the third subset are associated with the first serving cell;
the second subset comprises one or more resources in a second resource set; and
the third subset includes one or more resources in a third resource set.

In some embodiments, when the first indication information further indicates a second BWP, resources within the first subset are in the second BWP.

In some embodiments, when the first indication information further indicates a second subset and/or a third subset, resources within the second subset and/or the third subset are in the second BWP;
the second subset includes one or more resources in a second resource set; and
the third subset includes one or more resources in a third resource set.

In some embodiments, when the first indication information does not indicate a second BWP, resources within the first subset are in the first BWP.

In some embodiments, when the first indication information further indicates a second subset and/or a third subset, resources within the second subset and/or the third subset are in a first BWP;
the second subset comprises one or more resources in a second resource set; and
the third subset includes one or more resources in a third resource set.

In some embodiments, the first indication information is included in the MAC CE.

In some embodiments, the one or more subsets included in the first resource set may be indicated through a subset identifier(s); and/or,
the one or more subsets included in the first resource set may be indicated through a bitmap; and/or,
the one or more subsets included in the first resource set may be indicated by a number(s); and/or,
the one or more subsets included in the first resource set may be indicated by an identifier(s) in resource configuration information.

In some embodiments, when the first indication information further indicates a second serving cell, resources in one or more subsets of the first resource set are associated with the second serving cell.

In some embodiments, when the first indication information further indicates one or more subsets of a second resource set and/or one or more subsets of a third resource set, resources in one or more subsets of the second resource set and/or resources in one or more subsets of the third resource set are associated with the second serving cell.

In some embodiments, when the first indication information does not indicate a second serving cell, resources in one or more subsets of the first resource set are associated with the first serving cell.

In some embodiments, when the first indication information further indicates one or more subsets of a second resource set and/or one or more subsets of a third resource set, resources in one or more subsets of the second resource set and/or resources in one or more subsets of the third resource set are associated with the first serving cell.

In some embodiments, when the first indication information further indicates a second BWP, resources in one or more subsets of the first resource set are in the second BWP.

In some embodiments, when the first indication information further indicates one or more subsets of a second resource set and/or one or more subsets of a third resource set, resources in one or more subsets of the second resource set and/or resources in one or more subsets of the third resource set are in the second BWP.

In some embodiments, when the first indication information does not indicate a second BWP, resources in one or more subsets of the first resource set are in the first BWP.

In some embodiments, when the first indication information further indicates one or more subsets of a second resource set and/or one or more subsets of a third resource set, resources in one or more subsets of the second resource set and/or resources in one or more subsets of the third resource set are in the first BWP.

In some embodiments, when the first indication information indicates a subset of the first resource set, the subset of the first resource set is a first subset.

In some embodiments, the communication unit 901 is further configured to transmit second indication information, the second indication information being included in DCI and indicating a first subset of the first resource set, the first subset belonging to one or more subsets of the first resource set.

In some embodiments, the second indication information indicates the first subset through one or more of the followings: a subset identifier, a bitmap, a number, an identifier in resource configuration information.

In some embodiments, the second indication information may indicate the first subset through a first field in the DCI.

In some embodiments, a size of the first field may be determined according to a first number, the first number being a maximum quantity of subsets in the multiple resource sets; or,
the size of the first field may be configured by the network device.

In some embodiments, when the value of the first field in the DCI is greater than the quantity of sub-sets in the first resource set, the terminal device may refrain from using the first sub-set indicated by the first field in the DCI, and/or the terminal device may determine the first sub-set according to a first predetermined rule.

In some embodiments, the resources in the first subset may be determined according to a first indication and a second indication; the first indication is used to indicate a starting resource in the first resource set, the second indication is used to indicate an ending resource in the first resource set, and a resource between the starting resource in the first resource set and the ending resource in the first resource set belongs to the resources in the first subset; and/or,
the resources in the second subset may be determined according to a third indication and a fourth indication; the third indication is used to indicate a starting resource in a second resource set, the fourth indication is used to indicate an ending resource in the second resource set, and a resource between the starting resource in the second resource set and the ending resource in the second resource set belongs to the resources in the second subset; and/or,
the resources in the third subset may be determined according to a fifth indication and a sixth indication; the fifth indication is used to indicate a starting resource in a third resource set, the sixth indication is used to indicate an ending resource in the third resource set, and a resource between the starting resource in the third resource set and the ending resource in the third resource set belongs to the resources in the third subset.

In some embodiments, when the second indication information includes a first value, the terminal device may perform measurement and/or reporting based on the first resource set.

In some embodiments, when the first configuration information indicates a first set, the terminal device may perform measurement and/or reporting based on a first subset,
the first resource set belongs to one of one or more resource sets in the first set.

In some embodiments, when the measurement and/or reporting of the terminal device correspond(s) to the first resource set, the terminal device may perform the measurement and/or reporting based on the first resource set or the first subset of the first resource set.

In some embodiments, the first subset may be determined according to second indication information, or the first subset may be determined according to a second predetermined rule.

In some embodiments, when the first configuration information indicates a first set and the network device indicates a first subset, the terminal device may perform measurement and/or reporting based on the first subset indicated by the network device;
the first resource set belongs to one of one or more resource sets in the first set.

In some embodiments, when the first configuration information indicates a first set and the network device does not indicate a first subset, the terminal device may perform measurement and/or reporting based on the first subset determined by the second predetermined rule, or based on the first resource set;
the first resource set belongs to one of one or more resource sets in the first set.

In some embodiments, when the measurement and/or reporting of the terminal device correspond(s) to the first resource set, and the terminal device does not receive one or more of the first indication information and the second indication information, the terminal device may perform measurement and/or reporting based on the first resource set.

In some embodiments, the reporting by the terminal device may include one or more of the following: aperiodic reporting by the terminal device, periodic reporting by the terminal device, and semi-persistent reporting by the terminal device.

In some embodiments, the first result received by the network device may include one or more of:
a measurement result: which includes one or more of the following: measured parameter information, measured signal identifier, measured signal resource identifier;
a predicting result: which includes one or more of the following: a predicted signal, a predicted signal resource; a predicted signal identifier, a predicted signal resource identifier, predicted parameter information corresponding to the predicted signal, and predicted parameter information corresponding to the predicted signal resource; and
third indication information: indicating that the first result includes the measurement result and/or the prediction result;
wherein the parameter information includes values of one or more of the following: L1-RSRP, L1-SINR, RSRP, SINR.

In some embodiments, the first result includes the measurement result and/or the prediction result, which may be determined according to fourth indication information transmitted by the network device to the terminal device, or according to whether the network device transmits fourth indication information to the terminal device.

In some embodiments, the communication unit 901 is further configured to receive a first terminal capability, the first terminal capability indicating a capability of the terminal device related to a subset in a resource set.

In some embodiments, the first terminal capability may indicate one or more of the following: configuring a subset(s) in one resource set through RRC, indicating one or more subsets through an MAC CE, indicating one or more subsets through DCI, supporting subset-based measurement, and supporting subset-based reporting.

In some embodiments, the first terminal capability may be transmitted through RRC or an MAC CE.

In some embodiments, the first terminal capability may be reported for a band; or,
the first terminal capability may be reported for each carrier on the band; or,
the first terminal capability may be reported for a band combination; or,
the first terminal capability may be reported for each band in the band combination; or,
the first terminal capability may be reported for each carrier on each band in the band combination; or,
the first terminal capability may be reported for a band range; or,
the first terminal capability may be reported for the UE.

In some embodiments, the first configuration information associates the first serving cell.

In some embodiments, the first configuration information may indicate to report one or more of the following parameter information: a Layer 1 reference signal received power L1-RSRP, a Layer 1 signal-to-interference-plus-noise ratio L1-SINR, a reference signal received power RSRP, and a signal-to-interference-plus-noise ratio SINR.

In some embodiments, the one or more resource sets belong to a first set and/or a second set;
resources in one or more resource sets in the first set are associated with a second serving cell, and/or resources in one or more resource sets in the second set are associated with a third serving cell.

In some embodiments, the one or more resource sets belong to a second set and/or third set;
resources and/or signals corresponding to the resources in one or more resource sets in the second set are for interference measurement; and/or,
resources in one or more resource sets in the third set are for interference measurement.

In some embodiments, the one or more resource sets belong to a first set and/or a second set;
each resource in each of the one or more resource sets in the first set corresponds to one of: one signal, one signal resource, one reference signal, one reference signal resource; and/or,
each resource in each of the one or more resource sets in the second set corresponds to one of: one signal, one signal resource, one reference signal, and one reference signal resource.

In some embodiments, the one or more resource sets belong to a first set and/or a second set;
each resource set of one or more resource sets in the first set indicates one or more of: one or more CSI-RS resources, and one or more SSBs; and/or,
each resource set of one or more resource sets in the second set indicates one or more of the following: one or more CSI-RS resources, and one or more SSBs.

In some embodiments, the one or more resource sets belong to a third set;
each of the one or more resource sets in the third set indicates one or more of: one or more time domain resources, one or more frequency domain resources, and one or more time-frequency resources.

In some embodiments, the first configuration information indicates that the corresponding reporting type includes periodic reporting, aperiodic reporting, or semi-persistent reporting.

Those skilled in the art should understand that the relevant description of each unit in the above-described terminal device and/or network device according to the embodiment of the present disclosure may be understood with reference to the relevant description of the communication methods according to the embodiments of the present disclosure.

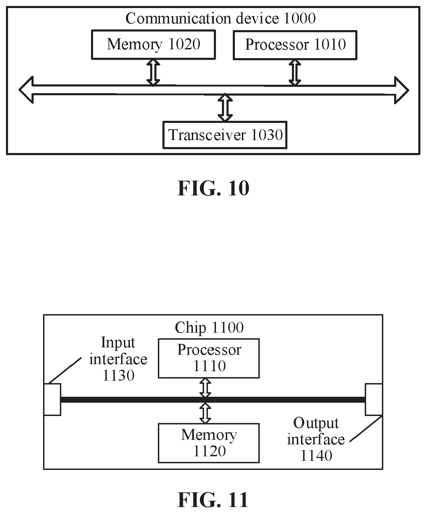

FIG. 10 is a schematic structural diagram of a communication device according to an embodiment of the present disclosure, and the communication device 1000 may include a terminal device or a network device. The communication device 1000 shown in FIG. 10 may include a memory 1020 for storing a computer program and a processor 1010 for invoking and executing the computer program stored in the memory 1020 such that the communication device 1000 performs the methods in any of the embodiments described above. Optionally, the processor 1010 is configured to call and run the computer program stored in the memory 1020 so that the terminal device executes the method in any of the above embodiments. Optionally, the processor 1010 is configured to call and run the computer program stored in the memory 1020 to cause the network device to perform the method in any of the embodiments described above.

Optionally, memory 1020 may be a device separate from processor 1010 or may be integrated in processor 1010.

In some embodiments, as shown in FIG. 10, the communication device 1000 may further include a transceiver 1030 that the processor 1010 may control to communicate with other devices, in particular, may transmit information or data to or receive information or data from other devices.

The transceiver 1030 may include a transmitter and a receiver. The transceiver 1030 may further include antennas, and the number of antennas may be one or more.

In some embodiments, the communication device 1000 may be the network device of the embodiments of the present disclosure, and may implement corresponding processes implemented by the network device in each method of the embodiments of the present disclosure, and will not be described herein for conciseness.

In some embodiments, the communication device 1000 may be the terminal device of the embodiments of the present disclosure, and may implement corresponding procedures implemented by the terminal device in each method of the embodiments of the present disclosure, and will not be described herein for the sake of conciseness.

Embodiments of the present disclosure also provide a computer storage medium storing one or more programs that can be executed by one or more processors to implement the communication method in any embodiment of the present disclosure.

In some embodiments, the computer-readable storage medium may be applied to the terminal device or the network device in the embodiments of the present disclosure, and the computer program may cause the computer to execute corresponding processes implemented by the terminal device or the network device in each method of the embodiments, and will not be described herein for the sake of brevity.

FIG. 11 is a schematic structural diagram of a chip according to an embodiment of the present disclosure. The chip 1100 shown in FIG. 11 includes a processor 1110 for calling and running a computer program from a memory to implement the method according to any embodiment of the present disclosure.

In some embodiments, as shown in FIG. 11, the chip 1100 may further include a memory 1120. The processor 1110 may call and run a computer program from the memory 1120 to implement the methods in the embodiments of the present disclosure.

Here, the memory 1120 may be a separate device independent of the processor 1110 or may be integrated in the processor 1110.

In some embodiments, the chip 1100 may further include an input interface 1130. The processor 1110 may control the input interface 1130 to communicate with other devices or chips, specifically, may acquire information or data from other devices or chips.

In some embodiments, the chip 1100 may further include an output interface 1140. The processor 1110 may control the output interface 1140 to communicate with other devices or chips, specifically, may output information or data to other devices or chips.

In some embodiments, the chip may be applied to the network device in the embodiments of the present disclosure, and the chip may implement corresponding processes implemented by the network device in each method of the embodiments of the present disclosure, and will not be described herein for the sake of simplicity.

In some embodiments, the chip may be applied to the terminal device in the embodiments of the present disclosure, and the chip may implement corresponding processes implemented by the terminal device in each method of the embodiments of the present disclosure, and will not be repeated here for the sake of simplicity.

It should be understood that the chip mentioned in the embodiments of the present disclosure may also be referred to as a system-on-chip (SoC), a system chip, a chip system, or a system-on-a-chip, etc.

Embodiments of the present disclosure also provide a computer program product which includes a computer storage medium storing a computer program including instructions executable by one or more processors that, when executed by the one or more processors, implement the communication method in any of the embodiments of the present disclosure.

In some embodiments, the computer program product may be applied to the terminal device or the network device in the embodiments of the present disclosure, and the computer program instructions cause the computer to execute corresponding processes implemented by the terminal device or the network device in each method of the embodiments of the present disclosure, and will not be described herein for brevity.

Optionally, the computer program product in the embodiment of the present disclosure may also be referred to as a software product in other embodiments.

An embodiment of the present disclosure further provides a computer program that causes a computer to execute the communication method according to any one of the embodiments of the present disclosure.

In some embodiments, the computer program may be applied to the terminal device or the network device in the embodiments of the present disclosure, and when the computer program is run on the computer, the computer may execute corresponding processes implemented by the terminal device or the network device in each method of the embodiments of the present disclosure, and will not be described herein for brevity.

The processor, communication device or chip according to the embodiments of the present disclosure may be an integrated circuit chip having signal processing capabilities. In the implementation process, the steps of the above-described method embodiments may be completed by integrated logic circuits of hardware in the processor or instructions in the form of software. The processor, communication device or chip described above may include an integration of any one or more of a general purpose processor, an Application Specific Integrated Circuit (ASIC), a Digital Signal Processor (DSP), a Digital Signal Processing Device (DSPD), a Programmable Logic Device (PLD), a Field Programmable Gate Array (FPGA), a Central Processing Unit (CPU), a Graphics Processing Unit (GPU), Embedded neural network processors (NPUs), controllers, microcontrollers, microprocessors, programmable logic devices, discrete gate or transistor logic devices, discrete hardware components. The methods, steps, and logical block diagrams described in the embodiments of the present disclosure may be implemented or executed. The general purpose processor may be a microprocessor or the processor may be any conventional processor or the like. The steps of the methods described in connection with the embodiments of the present disclosure may be directly embodied by a hardware decoding processor, or may be executed by combining hardware and software modules in the decoding processor. The software module may be located in a storage medium mature in the art, such as random access memory, flash memory, read-only memory, programmable read-only memory, or electrically erasable and writable programmable memory, registers, etc. The storage medium is located in the memory, and the processor may read the information in the memory, and combine its hardware to complete the steps of the above methods.

It is understood that the memory or computer storage medium in the embodiments of the present disclosure may be a volatile memory or a non-volatile memory, or may include both volatile and non-volatile memory. The non-volatile memory may be a Read-Only Memory (ROM), a Programmable ROM (PROM), an Erasable PROM (EPROM), an Electrically EPROM (EEPROM), or a flash memory. The volatile memory may be a Random Access Memory (RAM), which serves as an external cache. By way of example, but not limitation, many forms of RAM are available, such as Static RAM (SRAM), Dynamic RAM (DRAM), Synchronous DRAM (SDRAM), Double Data Rate SDRAM (DDR SDRAM), Enhanced SDRAM (ESDRAM), Synchlink DRAM (SLDRAM), and Direct Rambus RAM (DR RAM). It should be noted that the memory of the systems and methods described herein is intended to include, but is not limited to, these and any other suitable type of memory.

It should be understood that the above-described memory or computer storage medium is illustrative but not limiting, for example, the memory in embodiments of the present disclosure may also be a static random access memory (SRAM), a dynamic random access memory (DRAM), a synchronous dynamic random access memory (SDRAM), a double data rate synchronous dynamic random access memory (DDRAM), an enhanced SDRAM (ESDRAM), a synch link dynamic random access memory (SLDRAM), a Direct Rambus RAM (DR RAM), and the like. That is, the memory in the embodiments of the present disclosure is intended to include, but is not limited to, these and any other suitable type of memory.

Those of ordinary skill in the art will appreciate that the elements and algorithmic steps of the examples described in connection with the embodiments described herein may be implemented by electronic hardware, or by a combination of computer software and electronic hardware. Whether these functions are performed in hardware or software depends on the specific application and design constraints of the technical solution. Those skilled in the art may use different methods for implementing the described functions for each particular application, but such implementations should not be considered beyond the scope of the present disclosure.

Those skilled in the art will clearly understand that for convenience and conciseness of the description, the specific working procedures of the above-described systems, devices, and units may refer to the corresponding procedures in the aforementioned method embodiments, and will not be repeated herein.

In several embodiments provided herein, it should be understood that the described systems, devices and methods may be implemented in other ways. For example, the device embodiments described above are merely schematic, for example, the division of units is only a logical function division, and there may be other division methods in actual implementation, for example, multiple units or components may be combined or integrated into another system, or some features may be ignored or not implemented. In addition, the shown or discussed coupling or direct coupling or communication connection between each other may be an indirect coupling or communication connection through some interface, device or unit, which may be electrical, mechanical or otherwise.

The units described as separate units may or may not be physically separated, and the units displayed as units may or may not be physical units, that is, they may be located in one place or may be distributed over a plurality of network units. Some or all of the units may be selected according to actual needs to achieve the purpose of the solution of the present embodiment.

In addition, each functional unit in each embodiment of the present disclosure may be integrated in one processing unit, each unit may be physically present alone, or two or more units may be integrated in one unit.

In any embodiment of the present disclosure, a time interval, a time period, within a time range, within a time period, within a time window, etc. may include all of the endpoint time, or may include a portion of the endpoint time (e.g., including the left endpoint time but not including the right endpoint time, or including the right endpoint time but not including the left endpoint time), or may not include the endpoint time.

The functions may be stored in a computer-readable storage medium if implemented in the form of software functional units and sold or used as independent products. Based on this understanding, the technical solution of the present disclosure essentially or contributes to the prior art or a part of the technical solution may be embodied in the form of a software product stored in a storage medium and includes several instructions for causing a computer device (which may be a personal computer, a server, or a network device, etc.) to perform all or part of the steps of the method described in various embodiments of the present disclosure. The storage medium includes a USB disk, a removable hard disk, a Read-Only Memory (ROM), a Random Access Memory (RAM), a magnetic disk, or an optical disk that can store a program code.

The above is merely a specific embodiment of the present disclosure, but the scope of protection of the present disclosure is not limited thereto. Any person skilled in the art can easily think of changes or substitutions within the technical scope disclosed in the present disclosure, and should be covered within the scope of protection of the present disclosure. Therefore, the scope of protection of the present disclosure should be subject to the scope of protection of the claims.

## Claims

1. A communication method, comprising:
receiving, by a terminal device, first configuration information, wherein the first configuration information is transmitted through radio resource control (RRC) signaling, and the first configuration information indicating one or more resource sets; and
receiving, by the terminal device, first indication information, wherein the first indication information is comprised in a medium access control control element (MAC CE) or downlink control information (DCI), and the first indication information indicates one or more subsets of a first resource set, each of the one or more subsets of the first resource set comprising one or more resources in the first resource set, and the first resource set belongs to one of the one or more resource sets.

2. The method of claim 1, wherein the first indication information further indicates a first serving cell, and/or the first indication information is applied to the first serving cell.

3. The method of claim 1 or 2, wherein the first indication information further indicates a first bandwidth part (BWP), and/or the first indication information is applied to the first BWP.

4. The method of any one of claims 1 to 3, wherein the first indication information further indicates a first reporting configuration; the first reporting configuration indicates a first set or the first resource set; and the first resource set belongs to one of one or more resource sets in the first set.

5. The method of any one of claims 1 to 4, wherein the first indication information further indicates a first aperiodic activation state; the first aperiodic activation state indicates a first set or the first resource set; and the first resource set belongs to one of one or more resource sets in the first set.

6. The method of any one of claims 1 to 3, wherein the one or more subsets comprises a first subset, and the first indication information is comprised in the MAC CE or the DCI.

7. The method of claim 6, wherein the one or more resources comprised in the first subset are indicated through a bitmap; and/or,
the one or more resources comprised in the first subset are indicated by a number; and/or,
the one or more resources comprised in the first subset are indicated by a resource identifier (ID).

8. The method of claim 6 or 7, wherein when the first indication information further indicates a second serving cell, resources within the first subset are associated with the second serving cell.

9. The method of claim 8, wherein when the first indication information further indicates a second subset and/or a third subset, resources within the second subset and/or the third subset are associated with the second serving cell;
the second subset comprises one or more resources in a second resource set; and
the third subset comprises one or more resources in a third resource set.

10. The method of claim 6 or 7, wherein when the first indication information does not indicate a second serving cell, resources within the first subset are associated with a first serving cell.

11. The method of claim 10, wherein when the first indication information further indicates a second subset and/or a third subset, resources within the second subset and/or the third subset are associated with the first serving cell;
the second subset comprises one or more resources in a second resource set; and
the third subset comprises one or more resources in a third resource set.

12. The method of any one of claims 6 to 11, wherein when the first indication information further indicates a second BWP, resources within the first subset are in the second BWP.

13. The method of claim 12, wherein when the first indication information further indicates a second subset and/or a third subset, resources within the second subset and/or the third subset are in the second BWP;
the second subset comprises one or more resources in a second resource set; and
the third subset comprises one or more resources in a third resource set.

14. The method of any one of claims 6 to 11, wherein when the first indication information does not indicate a second BWP, resources within the first subset are in a first BWP.

15. The method of claim 14, wherein when the first indication information further indicates a second subset and/or a third subset, resources within the second subset and/or the third subset are in the first BWP;
the second subset comprises one or more resources in a second resource set; and
the third subset comprises one or more resources in a third resource set.

16. The method of any one of claims 1 to 3, wherein the first indication information is comprised in the MAC CE.

17. The method of claim 16, wherein the one or more subsets comprised in the first resource set is/are indicated by a subset identifier(s); and/or,
the one or more subsets comprised in the first resource set is/are indicated through a bitmap; and/or,
the one or more subsets included in the first resource set is/are indicated through a number(s); and/or,
the one or more subsets comprised in the first resource set is/are indicated by an identifier(s) in resource configuration information.

18. The method of claim 16 or 17, wherein when the first indication information further indicates a second serving cell, resources in the one or more subsets of the first resource set are associated with the second serving cell.

19. The method of claim 18, wherein when the first indication information further indicates one or more subsets of a second resource set and/or one or more subsets of a third resource set, resources in the one or more subsets of the second resource set and/or resources in the one or more subsets of the third resource set are associated with the second serving cell.

20. The method of claim 16 or 17, wherein when the first indication information does not indicate a second serving cell, resources in the one or more subsets of the first resource set are associated with a first serving cell.

21. The method of claim 20, wherein when the first indication information further indicates one or more subsets of a second resource set and/or one or more subsets of a third resource set, resources in the one or more subsets of the second resource set and/or resources in the one or more subsets of the third resource set are associated with the first serving cell.

22. The method of any one of claims 16 to 21, wherein when the first indication information further indicates a second BWP, resources in the one or more subsets of the first resource set are in the second BWP.

23. The method of claim 22, wherein when the first indication information further indicates one or more subsets of a second resource set and/or one or more subsets of a third resource set, resources in the one or more subsets of the second resource set and/or resources in the one or more subsets of the third resource set are in the second BWP.

24. The method of any one of claims 16 to 21, wherein when the first indication information does not indicate a second BWP, resources in the one or more subsets of the first resource set are in the first BWP.

25. The method of claim 24, wherein when the first indication information further indicates one or more subsets of a second resource set and/or one or more subsets of a third resource set, resources in the one or more subsets of the second resource set and/or resources in the one or more subsets of the third resource set are in the first BWP.

26. The method of any one of claims 16 to 25, wherein when the first indication information indicates a subset of the first resource set, the subset of the first resource set is a first subset.

27. The method of any one of claims 16 to 25, further comprising:
receiving, by the terminal device, second indication information, wherein the second indication information is comprised in DCI, and the second indication information indicates a first subset of the first resource set, the first subset belonging to the one or more subsets of the first resource set.

28. The method of claim 27, wherein the second indication information indicates the first subset through one or more of followings: a subset identifier, a bitmap, a number, and an identifier in resource configuration information.

29. The method of claim 27, wherein the second indication information indicates the first subset through a first field in the DCI.

30. The method of claim 29, wherein a size of the first field is determined according to a first number, the first number being a maximum number of subsets of the multiple resource sets; or,
the size of the first field is configured by the network device.

31. The method of claim 29 or 30, further comprising:
when a value of the first field in the DCI is larger than the number of sub-sets in the first resource set, refraining, the terminal device, from using the first sub-set indicated by the first field in the DCI, and/or, determining, by the terminal device, the first sub-set according to a first predetermined rule.

32. The method of any one of claims 6 to 15 and 26 to 31, wherein resources in the first subset are determined according to a first indication and a second indication, the first indication being used to indicate a starting resource in the first resource set, and the second indication being used to indicate an ending resource in the first resource set, and a resource between the starting resource in the first resource set and the ending resource in the first resource set belonging to the resources in the first subset; and/or,
resources in a second subset are determined according to a third indication and a fourth indication, the third indication being used to indicate a starting resource in a second resource set, the fourth indication being used to indicate an ending resource in the second resource set, and a resource between the starting resource in the second resource set and the ending resource in the second resource set belonging to the resources in the second subset; and/or,
resources in a third subset are determined according to a fifth indication and a sixth indication, the fifth indication being used to indicate a starting resource in a third resource set, and the sixth indication being used to indicate an ending resource in the third resource set, and a resource between the starting resource in the third resource set and the ending resource in the third resource set belonging to the resources in the third subset.

33. The method of any one of claims 27 to 31, further comprising:
when the second indication information comprises a first value, performing, by the terminal device, measurement and/or reporting based on the first resource set.

34. The method of any one of claims 1 to 33, further comprising:
when the first configuration information indicates a first set, performing, by the terminal device, measurement and/or reporting based on a first subset,
wherein the first resource set belongs to one of one or more resource sets in the first set.

35. The method of any one of claims 1 to 33, further comprising:
when measurement and/or reporting of the terminal device corresponds to the first resource set, performing, by the terminal device, the measurement and/or reporting based on the first resource set or a first subset of the first resource set.

36. The method of claim 34 or 35, wherein the first subset is determined according to second indication information, or the first subset is determined according to a second predetermined rule.

37. The method of any one of claims 1 to 33, further comprising:
when the first configuration information indicates a first set and the network device indicates a first subset, performing, by the terminal device, measurement and/or reporting based on the first subset indicated by the network device,
wherein the first resource set belongs to one of one or more resource sets in the first set.

38. The method of any one of claims 1 to 33, further comprising:
when the first configuration information indicates a first set and a first subset is refrained from being indicated by the network device, performing, by the terminal device, measurement and/or reporting based on the first subset determined by a second predetermined rule or based on the first resource set,
wherein the first resource set belongs to one of one or more resource sets in the first set.

39. The method of any one of claims 1 to 33, further comprising:
when measurement and/or reporting of the terminal device corresponds to the first resource set, and the terminal device fails to receive one or more of the first indication information and second indication information, performing, by the terminal device, measurement and/or reporting based on the first resource set.

40. The method according to any one of claims 33 to 39, wherein the reporting by the terminal device comprises one or more of followings: aperiodic reporting by the terminal device, periodic reporting by the terminal device, and semi-persistent reporting by the terminal device.

41. The method of any one of claims 33 to 40, wherein a first result reported by the terminal device comprises one or more of followings:
a measurement result, comprising one or more of followings: measured parameter information, a measured signal identifier, and a measured signal resource identifier;
a prediction result, comprising one or more of followings: a predicted signal, a predicted signal resource, a predicted signal identifier, a predicted signal resource identifier, predicted parameter information corresponding to the predicted signal, and predicted parameter information corresponding to the predicted signal resource; and
third indication information, used to indicate that the first result comprises the measurement result and/or the prediction result,
wherein the parameter information comprises values of one or more of followings: Layer 1 reference signal received power (L1-RSRP), Layer 1 signal-to-interference plus noise ratio (L1-SINR), reference signal received power (RSRP), and signal-to-interference plus noise ratio (SINR).

42. The method of claim 41, wherein the first result comprising the measurement result and/or the prediction result is determined according to fourth indication information transmitted by the network device to the terminal device, or according to whether the network device transmits fourth indication information to the terminal device.

43. The method of any one of claims 1 to 42, further comprising:
reporting, by the terminal device, a first terminal capability, wherein the first terminal capability indicates a capability of the terminal device related to the subset(s) in the resource set(s).

44. The method of claim 43, wherein the first terminal capability indicates one or more of followings: configuring a subset of a resource set through RRC; indicating one or more subsets through an MAC CE; indicating one or more subsets through DCI; supporting subset-based measurement; and supporting subset-based reporting.

45. The method of claim 43 or 44, wherein the first terminal capability is transmitted via the RRC or the MAC CE.

46. The method of any one of claims 43 to 45, wherein
the first terminal capability is reported for a band; or,
the first terminal capability is reported for each carrier on a band; or,
the first terminal capability is reported for a band combination; or,
the first terminal capability is reported for each band in a band combination; or,
the first terminal capability is reported for each carrier on each band in a band combination; or,
the first terminal capability is reported for a band range; or,
the first terminal capability is reported for a UE.

47. The method of any one of claims 1 to 46, wherein the first configuration information is associated with a first serving cell.

48. The method of any one of claims 1 to 47, wherein the first configuration information indicates to report one or more of the following parameter information: L1-RSRP, L1-SINR, RSRP, and SINR.

49. The method of any one of claims 1 to 48, wherein the one or more resource sets belong to a first set and/or a second set,
wherein resources in one or more resource sets in the first set are associated with a second serving cell, and/or resources in one or more resource sets in the second set are associated with a third serving cell.

50. The method of any one of claims 1 to 49, wherein the one or more resource sets belong to a second set and/or a third set,
wherein resources and/or signals corresponding to the resources in one or more resource sets in the second set are for interference measurement; and/or,
resources in one or more resource sets in the third set are for interference measurement.

51. The method of any one of claims 1 to 50, wherein the one or more resource sets belong to a first set and/or a second set,
wherein each resource in each of the one or more resource sets in the first set corresponds to one of: a signal, a signal resource, a reference signal, and a reference signal resource; and/or,
each resource in each of the one or more resource sets in the second set corresponds to one of: a signal, a signal resource, a reference signal, and a reference signal resource.

52. The method of any one of claims 1 to 51, wherein the one or more resource sets belong to a first set and/or a second set,
wherein each resource set of one or more resource sets in the first set indicates one or more of followings: one or more channel state information reference signal (CSI-RS) resources, and one or more synchronization signal blocks (SSBs); and/or,
each resource set of the one or more resource sets in the second set indicates one or more of followings: one or more CSI-RS resources, and one or more SSBs.

53. The method of any one of claims 1 to 52, wherein the one or more resource sets belong to a third set,
wherein each of one or more resource sets in the third set indicates one or more of followings: one or more time domain resources, one or more frequency domain resources, and one or more time-frequency resources.

54. The method according to any one of claims 1 to 53, wherein the first configuration information indicates that a corresponding reporting type comprises periodic reporting, aperiodic reporting, or semi-persistent reporting.

55. A communication method, comprising:
transmitting, by a network device, first configuration information, wherein the first configuration information is transmitted through radio resource control (RRC) signaling, and the first configuration information indicates one or more resource sets; and
transmitting, by the network device, first indication information, wherein the first indication information is comprised in a medium access control control element (MAC CE) or downlink control information (DCI), and the first indication information indicates one or more subsets of a first resource set, each of the one or more subsets of the first resource set comprising one or more resources in the first resource set, and the first resource set belongs to one of the one or more resource sets.

56. The method of claim 55, wherein the first indication information further indicates a first serving cell, and/or the first indication information applies to the first serving cell.

57. The method of claim 55 or 56, wherein the first indication information further indicates a first bandwidth part (BWP), and/or the first indication information applies to the first BWP.

58. The method of any one of claims 55 to 57, wherein the first indication information further indicating a first reporting configuration; the first reporting configuration indicates a first set or the first resource set; and the first resource set belongs to one of one or more resource sets in the first set.

59. The method of any one of claims 55 to 58, wherein the first indication information further indicates a first aperiodic activation state; the first aperiodic activation state indicates a first set or the first resource set; and the first resource set belongs to one of one or more resource sets in the first set.

60. The method of any one of claims 55-57, wherein the one or more subsets comprises a first subset, and the first indication information is comprised in the MAC CE or the DCI.

61. The method of claim 60, wherein the one or more resources comprised in the first subset are indicated through a bitmap; and/or,
the one or more resources comprised in the first subset are indicated by a number; and/or, the one or more resources comprised in the first subset are indicated by a resource identifier (ID).

62. The method of claim 60 or 61, wherein when the first indication information further indicates a second serving cell, resources within the first subset are associated with the second serving cell.

63. The method of claim 62, wherein when the first indication information further indicates a second subset and/or a third subset, resources within the second subset and/or the third subset are associated with the second serving cell;
the second subset comprises one or more resources in a second resource set; and
the third subset comprises one or more resources in a third resource set.

64. The method of claim 60 or 61, wherein when the first indication information does not indicate a second serving cell, resources within the first subset are associated with a first serving cell.

65. The method of claim 64, wherein when the first indication information further indicates a second subset and/or a third subset, resources within the second subset and/or the third subset are associated with the first serving cell;
the second subset comprises one or more resources in a second resource set; and
the third subset comprises one or more resources in a third resource set.

66. The method of any one of claims 60-65, wherein when the first indication information further indicates a second BWP, resources within the first subset are in the second BWP.

67. The method of claim 66, wherein when the first indication information further indicates a second subset and/or a third subset, resources within the second subset and/or the third subset are in the second BWP;
the second subset comprises one or more resources in a second resource set; and
the third subset comprises one or more resources in a third resource set.

68. The method of any one of claims 60-65, wherein when the first indication information does not indicate a second BWP, resources within the first subset are in a first BWP.

69. The method of claim 68, wherein when the first indication information further indicates a second subset and/or a third subset, resources within the second subset and/or the third subset are in the first BWP;
the second subset comprises one or more resources in a second resource set; and
the third subset comprises one or more resources in a third resource set.

70. The method of any one of claims 55 to 57, wherein the first indication information is comprised in the MAC CE.

71. The method of claim 70, wherein the one or more subsets comprised in the first resource set is/are indicated by a subset identifier(s); and/or,
the one or more subsets comprised in the first resource set is/are indicated through a bitmap; and/or,
the one or more subsets included in the first resource set is/are indicated through a number(s); and/or,
the one or more subsets comprised in the first resource set is/are indicated by an identifier(s) in resource configuration information.

72. The method of claim 70 or 71, wherein when the first indication information further indicates a second serving cell, resources in the one or more subsets of the first resource set are associated with the second serving cell.

73. The method of claim 72, wherein when the first indication information further indicates one or more subsets of a second resource set and/or one or more subsets of a third resource set, resources in the one or more subsets of the second resource set and/or resources in the one or more subsets of the third resource set are associated with the second serving cell.

74. The method of claim 70 or 71, wherein when the first indication information does not indicate a second serving cell, resources in the one or more subsets of the first resource set are associated with a first serving cell.

75. The method of claim 74, wherein when the first indication information further indicates one or more subsets of a second resource set and/or one or more subsets of a third resource set, resources in the one or more subsets of the second resource set and/or resources in the one or more subsets of the third resource set are associated with the first serving cell.

76. The method of any one of claims 70 to 75, wherein when the first indication information further indicates a second BWP, resources in the one or more subsets of the first resource set are in the second BWP.

77. The method of claim 76, wherein when the first indication information further indicates one or more subsets of a second resource set and/or one or more subsets of a third resource set, resources in the one or more subsets of the second resource set and/or resources in the one or more subsets of the third resource set are in the second BWP.

78. The method of any one of claims 70-75, wherein when the first indication information does not indicate a second BWP, resources in the one or more subsets of the first resource set are in a first BWP.

79. The method of claim 78, wherein when the first indication information further indicates one or more subsets of a second resource set and/or one or more subsets of a third resource set, resources in the one or more subsets of the second resource set and/or resources in the one or more subsets of the third resource set are in the first BWP.

80. The method of any one of claims 70 to 79, wherein when the first indication information indicates a subset of the first resource set, the subset of the first resource set is a first subset.

81. The method of any one of claims 70 to 79, further comprising:
transmitting, by the network device, second indication information, wherein the second indication information is comprised in DCI, and the second indication information indicates a first subset of the first resource set, the first subset belonging to the one or more subsets of the first resource set.

82. The method of claim 81, wherein the second indication information indicates the first subset through one or more of followings: a subset identifier, a bitmap, a number, and an identifier in resource configuration information.

83. The method of claim 81, wherein the second indication information indicates the first subset through a first field in the DCI.

84. The method of claim 83, wherein a size of the first field is determined according to a first number, the first number being a maximum number of subsets of the multiple resource sets; or,
the size of the first field is configured by the network device.

85. The method of claim 83 or 84, wherein when a value of the first field in the DCI is larger than the number of subsets in the first resource set, the terminal device refrains from using the first subset indicated by the first field in the DCI, and/or the terminal device determines the first subset according to a first predetermined rule.

86. The method of any one of claims 60 to 69 and 80 to 85, wherein resources in the first subset are determined according to a first indication and a second indication, the first indication being used to indicate a starting resource in the first resource set, and the second indication being used to indicate an ending resource in the first resource set, and a resource between the starting resource in the first resource set and the ending resource in the first resource set belonging to the resources in the first subset; and/or,
resources in a second subset are determined according to a third indication and a fourth indication, the third indication being used to indicate a starting resource in a second resource set, the fourth indication being used to indicate an ending resource in the second resource set, and a resource between the starting resource in the second resource set and the ending resource in the second resource set belonging to the resources in the second subset; and/or,
resources in a third subset are determined according to a fifth indication and a sixth indication, the fifth indication being used to indicate a starting resource in a third resource set, and the sixth indication being used to indicate an ending resource in the third resource set, and a resource between the starting resource in the third resource set and the ending resource in the third resource set belonging to the resources in the third subset.

87. The method according to any one of claims 81 to 85, wherein when the second indication information comprises a first value, measurement and/or reporting are/is performed by the terminal device based on the first resource set.

88. The method according to any one of claims 55 to 87, wherein when the first configuration information indicates a first set, measurement and/or reporting are/is performed by the terminal device based on a first subset,
wherein the first resource set belongs to one of one or more resource sets in the first set.

89. The method according to any one of claims 55 to 87, wherein when measurement and/or reporting of the terminal device corresponds to the first resource set, the measurement and/or reporting are/is performed by the terminal device based on the first resource set or a first subset of the first resource set.

90. The method of claim 88 or 89, wherein the first subset is determined according to second indication information, or the first subset is determined according to a second predetermined rule.

91. The method according to any one of claims 55 to 87, wherein when the first configuration information indicates a first set and the network device indicates a first subset, measurement and/or reporting are/is performed by the terminal device based on the first subset indicated by the network device,
wherein the first resource set belongs to one of one or more resource sets in the first set.

92. The method according to any one of claims 55 to 87, wherein when the first configuration information indicates a first set and the network device refrains from indicating a first subset, measurement and/or reporting are/is performed by the terminal device based on the first subset determined by a second predetermined rule or based on the first resource set,
wherein the first resource set belongs to one of one or more resource sets in the first set.

93. The method according to any one of claims 55 to 87, wherein when measurement and/or reporting of the terminal device corresponds to the first resource set, and the terminal device fails to receive one or more of the first indication information and second indication information, measurement and/or reporting are/is performed by the terminal device based on the first resource set.

94. The method according to any one of claims 87 to 93, wherein the reporting by the terminal device comprises one or more of followings: aperiodic reporting by the terminal device, periodic reporting by the terminal device, and semi-persistent reporting by the terminal device.

95. The method of any one of claims 87-94, wherein a first result received by the network device comprises one or more of followings:
a measurement result, comprising one or more of followings: measured parameter information, a measured signal identifier, and a measured signal resource identifier;
a prediction result, comprising one or more of followings: a predicted signal, a predicted signal resource, a predicted signal identifier, a predicted signal resource identifier, predicted parameter information corresponding to the predicted signal, and predicted parameter information corresponding to the predicted signal resource; and
third indication information, used to indicate that the first result comprises the measurement result and/or the prediction result,
wherein the parameter information comprises values of one or more of followings: Layer 1 reference signal received power (L1-RSRP), Layer 1 signal-to-interference plus noise ratio (L1-SINR), reference signal received power (RSRP), and signal-to-interference plus noise ratio (SINR).

96. The method of claim 95, wherein the first result comprising the measurement result and/or the prediction result is determined according to fourth indication information transmitted by the network device to the terminal device, or according to whether the network device transmits fourth indication information to the terminal device.

97. The method of any one of claims 55-96, further comprising:
receiving, by the network device, a first terminal capability, wherein the first terminal capability indicates a capability of the terminal device related to the subset(s) in the resource set(s).

98. The method of claim 97, wherein the first terminal capability indicates one or more of followings: configuring a subset of a resource set through RRC; indicating one or more subsets through an MAC CE; indicating one or more subsets through DCI; supporting subset-based measurements; and supporting subset-based reporting.

99. The method of claim 97 or 98, wherein the first terminal capability is transmitted through the RRC or the MAC CE.

100. The method of any one of claims 97 to 99, wherein
the first terminal capability is reported for a band; or,
the first terminal capability is reported for each carrier on a band; or,
the first terminal capability is reported for a band combination; or,
the first terminal capability is reported for each band in a band combination; or,
the first terminal capability is reported for each carrier on each band in a band combination; or,
the first terminal capability is reported for a band range; or,
the first terminal capability is reported for a UE.

101. The method of any one of claims 55 to 100, wherein the first configuration information associates a first serving cell.

102. The method according to any one of claims 55 to 101, wherein the first configuration information indicates to report one or more of the following parameter information: L1-RSRP, L1-SINR, RSRP, and SINR.

103. The method of any one of claims 55 to 102, wherein the one or more resource sets belong to a first set and/or a second set,
wherein resources in one or more resource sets in the first set are associated with a second serving cell, and/or resources in one or more resource sets in the second set are associated with a third serving cell.

104. The method of any one of claims 55 to 103, wherein the one or more resource sets belong to a second set and/or a third set,
wherein resources and/or signals corresponding to the resources in one or more resource sets in the second set are for interference measurement; and/or,
resources in one or more resource sets in the third set are for interference measurement.

105. The method of any one of claims 55 to 104, wherein the one or more resource sets belong to a first set and/or a second set,
wherein each resource in each of the one or more resource sets in the first set corresponds to one of: a signal, a signal resource, a reference signal, and a reference signal resource; and/or,
each resource in each of the one or more resource sets in the second set corresponds to one of: a signal, a signal resource, a reference signal, and a reference signal resource.

106. The method of any one of claims 55 to 105, wherein the one or more resource sets belong to a first set and/or a second set,
wherein each resource set of one or more resource sets in the first set indicates one or more of followings: one or more channel state information reference signal (CSI-RS) resources, and one or more synchronization signal blocks (SSBs); and/or,
each resource set of the one or more resource sets in the second set indicates one or more of followings: one or more CSI-RS resources, and one or more SSBs.

107. The method of any one of claims 55 to 106, wherein the one or more resource sets belong to a third set,
wherein each of the one or more resource sets in the third set indicates one or more of followings: one or more time domain resources, one or more frequency domain resources, and one or more time-frequency resources.

108. The method according to any one of claims 55 to 107, wherein the first configuration information indicates that a corresponding reporting type comprises periodic reporting, aperiodic reporting, or semi-persistent reporting.

109. A terminal device, comprising: a communication unit,
wherein the communication unit is configured to receive first configuration information, wherein the first configuration information is transmitted through radio resource control (RRC) signaling, the first configuration information indicates one or more resource sets; and
the communication unit is further configured to receive first indication information, wherein the first indication information is comprised in a medium access control control element (MAC CE) or downlink control information (DCI), and the first indication information indicates one or more subsets of a first resource set, each of the one or more subsets of the first resource set comprising one or more resources in the first resource set; and the first resource set belongs to one of the one or more resource sets.

110. A network device, comprising: a communication unit,
wherein the communication unit is configured to transmit first configuration information, wherein the first configuration information is transmitted through radio resource control (RRC) signaling, and the first configuration information indicates one or more resource sets; and
the communication unit is further configured to transmit first indication information, wherein the first indication information is comprised in a medium access control control element (MAC CE) or downlink control information (DCI), and the first indication information indicates one or more subsets of a first resource set, each of the one or more subsets of the first resource set comprising one or more resources in the first resource set; and the first resource set belongs to one of the one or more resource sets.

111. A terminal device, comprising: a memory configured to store a computer program and a processor configured to invoke and execute the computer program stored in the memory to cause the terminal device to perform the method of any one of claims 1 to 54.

112. A network device, comprising: a memory configured to store a computer program and a processor configured to invoke and execute the computer program stored in the memory to cause the network device to perform the method of any one of claims 55 to 108.

113. A computer storage medium, having stored one or more programs executable by one or more processors to implement the method of any one of claims 1 to 54 or any one of claims 55 to 108.

114. A chip, comprising: a processor configured to invoke and execute a computer program from a memory to implement the method of any one of claims 1 to 54 or any one of 55 to 108.

115. A computer program product, comprising a computer storage medium that has stored a computer program comprising instructions executable by one or more processors that, when executed by the one or more processors, implement the method of any one of claims 1 to 54 or any one of claims 55 to 108.

116. A computer program, enabling a computer to perform the method of any one of claims 1 to 54 or any one of claims 55 to 108.
